# EUROPEAN PATENT SPECIFICATION

(11) **EP 2 891 835 B1**
(45) Date of publication and mention of the grant of the patent: **26.04.2017**
(21) Application number: 14196776.0
(22) Date of filing: 08.12.2014
(51) Int. Cl.: F16H 59/10, F16H 61/24, G05G 9/047, H01H 5/02

(54) **Operating device and vehicular shift device using the same**
Betriebsvorrichtung und Fahrzeugschaltvorrichtung damit
Dispositif de commande et dispositif de changement de vitesse de véhicule l'utilisant

(30) Priority: 07.01.2014 JP 2014001164; 30.09.2014 JP 2014200473
(43) Date of publication of application: 08.07.2015
(73) Proprietor: Alps Electric Co., Ltd., Tokyo 145-8501 (JP)
(72) Inventor: Uenomachi, Takashi, Tokyo 145-8501 (JP); Wakita, Yoshitsugu, Tokyo 145-8501 (JP)
(74) Representative: Klunker . Schmitt-Nilson . Hirsch

(56) References cited:
- EP-A1- 1 615 250
- US-A1- 2008 148 894
- US-A1- 2013 271 245

## Description

### BACKGROUND OF THE INVENTION

### 1. Field of the Invention

The present invention relates to an operating device used to perform operations by tilting, and more particularly relates to an operating device employing a magnetic member, and to a vehicular shift device using the operating device, as known from EP 1 615 250, disclosing all the features of the preamble of claim 1.

### 2. Description of the Related Art

Operating members which are operated by tilting are in widespread use in remote controllers for various types of electronic devices such as televisions, videos, and so forth, in input devices for gaming devices, in vehicular operating devices, and so forth. In particular, operating devices where an operating member is gripped and tilted are widely used in input devices for gaming devices and in vehicular operating devices and so forth. There has been demand for a vehicular operating device and so forth which imparts the user with a sense of moderation when the operating member is tilted to perform a switchover operation, to improve the feel of operation.

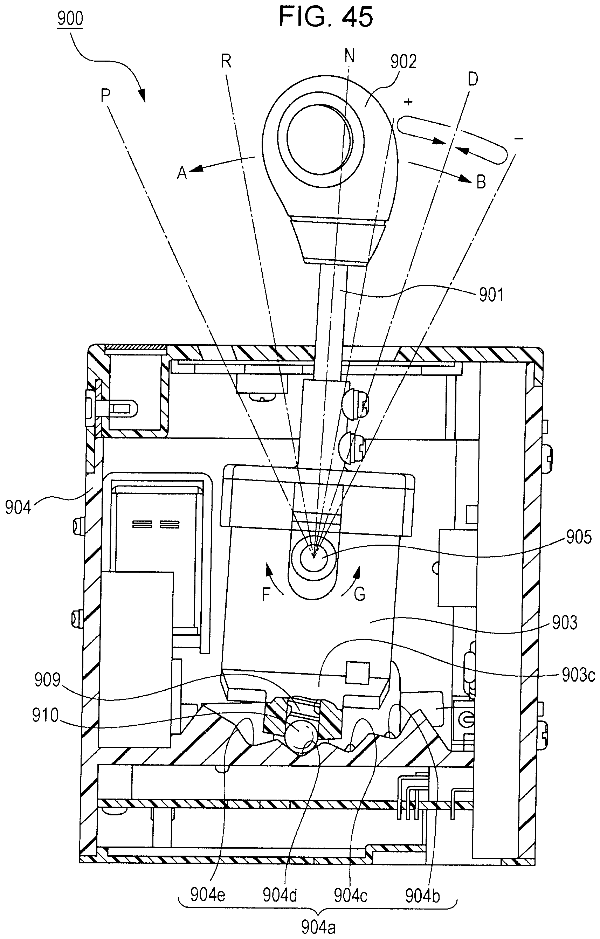

One example of a multi-direction input operating device having a sense of moderation is an automatic transmission shift operating device 900, proposed in Japanese Unexamined Patent Application Publication No. 2002-144905 (conventional example), which is illustrated in Fig. 45. Fig. 45 is an enlarged longitudinal sectional view illustrating the automatic transmission shift operating device 900 according to the conventional example with a shift lever 901 in neutral range (also referred to as "N range").

The automatic transmission shift operating device 900 illustrated in Fig. 45 is configured including the shift lever 901 which pivots with a knob 902 fixed thereto, a holder 903 which is fixed to the shift lever 901 and also pivots, a first shaft 905 enabling pivoting of the shift lever 901 and a second shaft (not illustrated) orthogonal to the first shaft 905, and a case 904 which axially supports the first shaft 905 and the second shaft.

The automatic transmission shift operating device 900 is configured such that the shift lever 901 can be pivoted so as to be situated at each position of a parking range (also referred to as "P range"), a reverse range (also referred to as "R range"), the N range, and a drive range (also referred to as "D range"), with the first shaft 905 as the axis of pivoting, as illustrated in Fig. 45. In doing so, the shift lever 901 is supported at the respective positions (P range, R range, N range, and D range), or is automatically returned, using a moderating spring 909 and moderating member 910 provided within a lower portion 903c of the holder 903, and moderating grooves 904a formed on the inner bottom of the case 904. Specifically, the moderating grooves 904a have formed therein a first moderating groove 904b for supporting the shift lever 901 at the P range, a second moderating groove 904c for supporting at the R range, a third moderating groove 904d for supporting at the N range, and a fourth moderating groove 904e for supporting at the D range, arrayed in the longitudinal direction, as illustrated in Fig. 45. The moderating member 910 pressed by the moderating spring 909 slides through the moderating grooves 904a.

The automatic transmission shift operating device 900 thus configured is capable of providing a sense of moderation to the shift lever 901 as the moderating member 910 moves through the moderating grooves 904a (904b, 904c, 904d, and 904e) provided corresponding to the respective positions (P range, R range, N range, and D range).

However, the conventional example has had problems due to a sliding mechanism being used where the moderating member 910 slides through the moderating grooves 904a to impart this sense of moderation, as repetitive pivoting operations of the shift lever 901 can result in lower duration of the sliding mechanism, such as wear of the moderating grooves 904a and moderating spring 909, deterioration in the elasticity of the moderating spring 909, looseness between the moderating spring 909 and the moderating member 910, and so forth.

### SUMMARY OF THE INVENTION

The present invention provides an operating device and a vehicular shift device using the operating device, having a sense of moderation and excellent durability.

An operating device according to a first aspect of the present invention includes an operating member that assumes a plurality of positions by tilting operations from a reference position by an operator. The operating device includes: the operating member capable of tilting action by operations performed by the operator; a supporting member that tiltably supports the operating member; a plurality of stopper portions corresponding to the plurality of positions; a plurality of movable-side magnetic members that perform the tilting action along with the operating member; and a plurality of opposing-side magnetic members which are disposed facing each of the plurality of movable-side magnetic members. In a case where the operating member is at the reference position, the movable-side magnetic members and the facing opposing-side magnetic members are all attracted. In a case where the operating member has been tilted from the reference position and is at any one of the plurality of positions, the plurality of movable-side magnetic members are subjected to the tilting action, and each of the stopper portions stop the tilting action of the respective opposing-side magnetic members.

Accordingly, at the time of switching from the reference position to a next position, and from the next position to a further next position in the operating device according to the present invention, tilting action of the opposing-side magnetic members is stopped by stopper portions provided to each. Thus, the movable-side magnetic members and the opposing-side magnetic members are separated at each position, and the operator is provided with a sense of moderation due to the change from the strong attraction state to the weak attraction state thereby. Accordingly, the durability of the operating device is better than the conventional example, since there is no sliding mechanism in the part generating the sense of moderation.

The supporting member may include a tilting shaft enabling the tilting action of the operating member. The operating member may include a cylindrical operating shaft, and a plate-shaped base body which extends along a plane through which the axial center of the operating shaft passes. The base body may turn on the tilting shaft as the axial center. The plurality of movable-side magnetic members may be disposed on the base body in order in a tilting direction. The plurality of stopper portions may be disposed in order in the tilting direction. Each of the opposing-side magnetic members may include an abutting portion that comes into contact with the stopper portions when the operating member is tilted. The distances between the stopper portions and the abutting portions may gradually change at the reference position.

Accordingly, when the operating member is operated so as to be tilted in the tilting direction, the tilting action of the opposing-side magnetic members disposed opposing the movable-side magnetic members can be stopped in order of closer distance between the abutting portions and stopper portions. Thus, the movable-side magnetic members and opposing-side magnetic members can be easily separated at each position, and an operating device imparting a sense of moderation can be easily fabricated.

The supporting member may include a pair of supporting plates which support both ends of the tilting shaft. The plurality of stopper portions may be provided on an end of the supporting plates at one side.

Accordingly, multiple stopper portions can be formed simply by working the ends of a pair of supporting plates. Thus, an operating device imparting a sense of moderation can be easily fabricated.

The plurality of movable-side magnetic members may be formed integrally. The base body may be formed of a soft magnetic substance, and serve as the movable-side magnetic members.

Accordingly, multiple movable-side magnetic members do not have to be prepared and disposed on the base body. Thus, an operating device imparting a sense of moderation can be fabricated even more easily.

The movable-side magnetic members and opposing-side magnetic members may be disposed at positions where attraction acting therebetween is not lost when the operating member is tilted and the movable-side magnetic members and opposing-side magnetic members are separated.

Accordingly, the attraction between the movable-side magnetic members and opposing-side magnetic members at each position acts to attract again when the force of tilting operations by the user is removed. Thus, the operating member can be automatically returned to the reference position without using pressing members for automatic return.

The supporting member may include a tilting shaft enabling the tilting action of the operating member. The operating member may include a cylindrical operating shaft, and a base body which extends along a plane through which the axial center of the operating shaft passes. The base body may turn on the tilting shaft as the axial center. The plurality of movable-side magnetic members may be disposed on the base body across the tilting shaft. The plurality of stopper portions may be disposed across the tilting shaft. Each of the opposing-side magnetic members may include an abutting portion that comes into contact with the stopper portions when the operating member is tilted. The distances between the plurality of stopper portions and the abutting portions may not be the same at the reference position.

Accordingly, when the operating member is operated so as to be tilted in the tilting direction, the tilting action of the multiple opposing-side magnetic members disposed opposing the movable-side magnetic members can be stopped in order of closer distance between the abutting portions and stopper portions. Thus, the movable-side magnetic members and opposing-side magnetic members can be easily separated at each position, and an operating device imparting a sense of moderation can be easily fabricated.

The base body may be formed of a soft magnetic substance. The movable-side magnetic members and the opposing-side magnetic members may be disposed grasping the base body. The movable-side magnetic members when the base body is tilted in one direction may be used as the opposing-side magnetic members when the base body is tilted in the other direction, and the opposing-side magnetic members when the base body is tilted in one direction may be used as the movable-side magnetic members when the base body is tilted in the other direction.

Accordingly, the number of movable-side magnetic members and opposing-side magnetic members may be halved. Thus, an operating device imparting a sense of moderation can be easily fabricated.

The opposing-side magnetic members and base body may be disposed at positions where attraction acting therebetween is not lost when the operating member is tilted and the opposing-side magnetic members and base body are separated.

Accordingly, the attraction between the opposing-side magnetic members and base body at each position acts to attract again when the force of tilting operations by the user is removed. Thus, the operating member can be automatically returned to the reference position without using pressing members for automatic return.

At least one of the movable-side magnetic members and opposing-side magnetic members may be permanent magnets. The permanent magnets may each have a yoke covering portions thereof other than an opposing face.

Accordingly, strong separating force and attracting force between the movable-side magnetic members and opposing-side magnetic members can be generated by a simple configuration. Thus, the operator can be imparted with a strong sense of moderation.

The base body may be formed of a non-magnetic substance. Both of the movable-side magnetic members and opposing-side magnetic members may be permanent magnets. The movable-side magnetic members and opposing-side magnetic members may be disposed at position attracting each other in a non-operated state and grasping the base body therebetween. The movable-side magnetic members when the base body is tilted in one direction may be used as the opposing-side magnetic members when the base body is tilted in the other direction, and the opposing-side magnetic members when the base body is tilted in one direction may be used as the movable-side magnetic members when the base body is tilted in the other direction.

Accordingly, the attraction between the movable-side magnetic members and the opposing-side magnetic members can be increased, since the permanent magnets are disposed directly opposing each other. Thus, powerful attraction can be generated using small permanent magnets, the size of the operating device can be reduced, and an inexpensive operating device can be provided.

The movable-side magnetic members and opposing-side magnetic members may be disposed at positions where attraction acting therebetween is not lost when the operating member is tilted and the movable-side magnetic members and opposing-side magnetic members are separated.

Accordingly, the attraction between the movable-side magnetic members and opposing-side magnetic members at each position acts to attract again when the force of tilting operations by the user is removed. Thus, the operating member can be automatically returned to the reference position without using pressing members for automatic return.

The permanent magnets may each have a yoke covering portions thereof other than an opposing face.

Accordingly, strong separating force and attracting force between the movable-side magnetic members and opposing-side magnetic members can be generated by a simple configuration. Thus, the operator can be imparted with a strong sense of moderation.

The supporting member may include a tilting shaft enabling the tilting action of the operating member. The operating member may include a cylindrical operating shaft, and a base body which extends along a plane through which the axial center of the operating shaft passes. The base body may turn on the tilting shaft as the axial center. The base body may include a first pressing portion and a second pressing portion which abut the movable-side magnetic members. The movable-side magnetic members may include a first movable-side magnetic member pressed by the first pressing portion and a second movable-side magnetic member pressed by the second pressing portion. The first movable-side magnetic member and the second movable-side magnetic member may be disposed across the tilting shaft. The opposing-side magnetic members may include a first opposing-side magnetic member opposing the first movable-side magnetic member and a second opposing-side magnetic member opposing the second movable-side magnetic member. The first movable-side magnetic member and the second movable-side magnetic member may be soft magnetic substances. The first opposing-side magnetic member and second opposing-side magnetic member may be permanent magnets. When the operating member is operated by tilting in one direction, the first pressing portion at the tilting operation side of the base body may press the first movable-side magnetic member, the stopper portion may stop the tilting action of the first opposing-side magnetic member, and attraction between the first movable-side magnetic member and the first opposing-side magnetic member may be released. When the tilting operation is continued in the same direction, the second pressing portion at the opposite side from the tilting operation side may press the second movable-side magnetic member, the stopper portion may stop the tilting action of the second opposing-side magnetic member, and attraction between the second movable-side magnetic member and the second opposing-side magnetic member may be released.

Accordingly, attraction between the first opposing-side magnetic member stopped by the stopper portion and the first movable-side magnetic member is released, and then attraction between the second opposing-side magnetic member stopped by the stopper portion and the second movable-side magnetic member is released. Thus, the movable-side magnetic members and opposing-side magnetic members can be easily separated corresponding to each position, and an operating device imparting sense of moderation can be easily fabricated.

The movable-side magnetic members may further include a second movable-side magnetic member facing the first movable-side magnetic member across the first opposing-side magnetic member, and a first movable-side magnetic member facing the second movable-side magnetic member across the second opposing-side magnetic member. When the operating member is operated by tilting in the other direction, the first pressing portion at the tilting operation side of the base body may press the first movable-side magnetic member, the stopper portion may stop the tilting action of the second opposing-side magnetic member, and attraction between the first movable-side magnetic member and the second opposing-side magnetic member may be released. When the tilting operation is continued in the same direction, the second pressing portion at the opposite side from the tilting operation side may press the second movable-side magnetic member, the stopper portion may stop the tilting action of the first opposing-side magnetic member, and attraction between the second movable-side magnetic member and the first opposing-side magnetic member may be released.

Accordingly, tilting operations in the other direction can be handled without increasing the number of opposing-side magnetic members. Thus, an operating device imparting sense of moderation in one direction and the other direction can be easily fabricated.

The movable-side magnetic members and opposing-side magnetic members may be disposed at positions where attraction acting therebetween is not lost when the operating member is tilted and the movable-side magnetic members and opposing-side magnetic members are separated.

Accordingly, the attraction between the movable-side magnetic members and opposing-side magnetic members at each position acts to attract again when the force of tilting operations by the user is removed. Thus, the operating member can be automatically returned to the reference position without using pressing members for automatic return.

A vehicular shift device according to a second aspect of the present invention includes: any one of the operating devices described above; a control unit configured to receive signals from the operating device and transmit the signals to vehicle-side equipment; a shift knob engaged with the operating member of the operating device, to be gripped by the operator; and position detecting means that detect the plurality of positions where the operating member is situated.

Accordingly, any one of the operating devices described above and position detecting means are applied to a vehicular shift device, so operations to the positions of the operating device can be suitably applied to a shift layout (shift pattern) of the vehicular shift device. Thus, a vehicular shift device can be provided enabling shift operations having a sense of moderation, and moreover, the durability of the vehicular shift device is good since there is no sliding mechanism in the part generating the sense of moderation.

In the operating device according to the present invention, at the time of switching from the reference position to a next position, and from the next position to a further next position in the operating device according to the present invention, tilting action of the opposing-side magnetic members is stopped by stopper portions provided to each. Thus, the movable-side magnetic members and the opposing-side magnetic members are separated at each position, and the operator is provided with a sense of moderation due to the change from the strong attraction state to the weak attraction state thereby. Accordingly, the durability of the operating device is better than the conventional example, since there is no sliding mechanism in the part generating the sense of moderation.

Also, in the operating device according to the present invention, operations to the positions of the operating device can be suitably applied to a shift layout (shift pattern) of a vehicular shift device. Thus, a vehicular shift device can be provided enabling shift operations having a sense of moderation, and moreover, the durability of the vehicular shift device is better as compared to the conventional example since there is no sliding mechanism in the part generating the sense of moderation.

### BRIEF DESCRIPTION OF THE DRAWINGS

Fig. 1 is a perspective view describing a vehicular shift device using an operating device according to a first embodiment of the present invention;
Figs. 2A and 2B are diagrams for describing the vehicular shift device using the operating device according to the first embodiment of the present invention, in which Fig. 2A is a frontal view from side Y2 in Fig. 1, and Fig. 2B is a side view from side X1 in Fig. 1;
Fig. 3 is a top view from side Z1 in Fig. 1, for describing the vehicular shift device using the operating device according to the first embodiment of the present invention;
Fig. 4 is a disassembled perspective view for describing the vehicular shift device using the operating device according to the first embodiment of the present invention;
Figs. 5A and 5B are diagrams specifically describing operation of the vehicular shift device using the operating device according to the first embodiment through a fourth embodiment of the present invention, in which Fig. 5A is a plan view illustrating the shift layout of the vehicle, and Fig. 5B is a plan view illustrating positions of a shift knob;
Fig. 6 is a perspective view for describing the operating device according to the first embodiment of the present invention;
Figs. 7A and 7B are diagrams for describing the operating device according to the first embodiment of the present invention, in which Fig. 7A is a frontal view from side Y2 in Fig. 6, and Fig. 7B is a frontal view in which linking plates of a frame in Fig. 7A have been omitted from illustration;
Figs. 8A and 8B are diagrams for describing the operating device according to the first embodiment of the present invention, in which Fig. 8A is a frontal view from side X1 in Fig. 6, and Fig. 8B is a side view in which support plates of the frame in Fig. 8A has been omitted from illustration;
Fig. 9 is a disassembled perspective view of movable-side magnetic members and opposing-side magnetic members, for describing the operating device according to the first embodiment of the present invention;

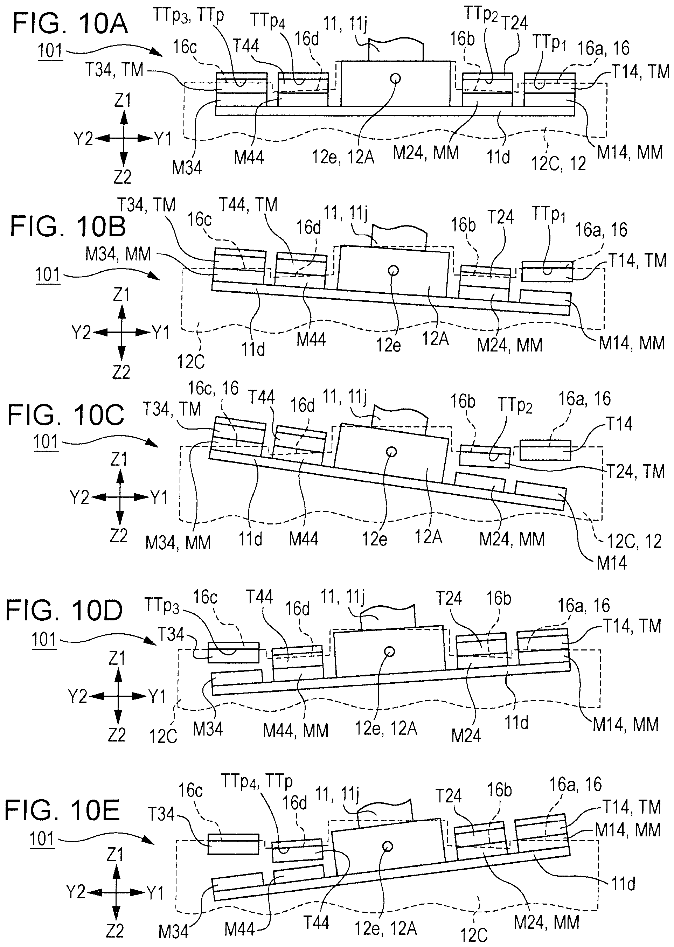

Figs. 10A through 10E are schematic diagrams for describing operations of the operating device according to the first embodiment of the present invention, in which Fig. 10A is a diagram illustrating a state at a reference position, Fig. 10B is a diagram illustrating a state tilted in the Y1 direction, Fig. 10C is a diagram illustrating a state tilted further in the Y1 direction, beyond the state illustrated in Fig. 10B, Fig. 10D is a diagram illustrating a state tilted in the Y2 direction, and Fig. 10E is a diagram illustrating a state tilted further in the Y2 direction, beyond the state illustrated in Fig. 10D;
Fig. 11 is a perspective view describing a vehicular shift device using an operating device according to a second embodiment of the present invention;
Figs. 12A and 12B are diagrams for describing the vehicular shift device using the operating device according to the second embodiment of the present invention, in which Fig. 12A is a frontal view from side Y2 in Fig. 11, and Fig. 12B is a frontal view from side X1 in Fig. 11;
Fig. 13 is a top view from side Z1 in Fig. 11, for describing the vehicular shift device using the operating device according to the second embodiment of the present invention;
Fig. 14 is a disassembled perspective view for describing the vehicular shift device using the operating device according to the second embodiment of the present invention;
Fig. 15 is a perspective view for describing the operating device according to the second embodiment of the present invention;
Figs. 16A and 16B are diagrams for describing the operating device according to the second embodiment of the present invention, in which Fig. 16A is a frontal view from side Y2 in Fig. 15, and Fig. 16B is a frontal view in which a frame in Fig. 16A has been omitted from illustration;
Figs. 17A and 17B are diagrams for describing the operating device according to the second embodiment of the present invention, in which Fig. 17A is a side view from side X1 in Fig. 15, and Fig. 17B is a side view in which the frame in Fig. 17A has been omitted from illustration;
Fig. 18 is a top view from side Z1 in Fig. 15, for describing the operating device according to the second embodiment of the present invention;
Fig. 19 is a cross-sectional diagram taken along XIX-XIX in Fig. 18, for describing the operating device according to the second embodiment of the present invention;
Fig. 20 is a perspective view of movable-side magnetic members and opposing-side magnetic members, for describing the operating device according to the second embodiment of the present invention;
Fig. 21 is a perspective view of a frame, for describing the operating device according to the second embodiment of the present invention;

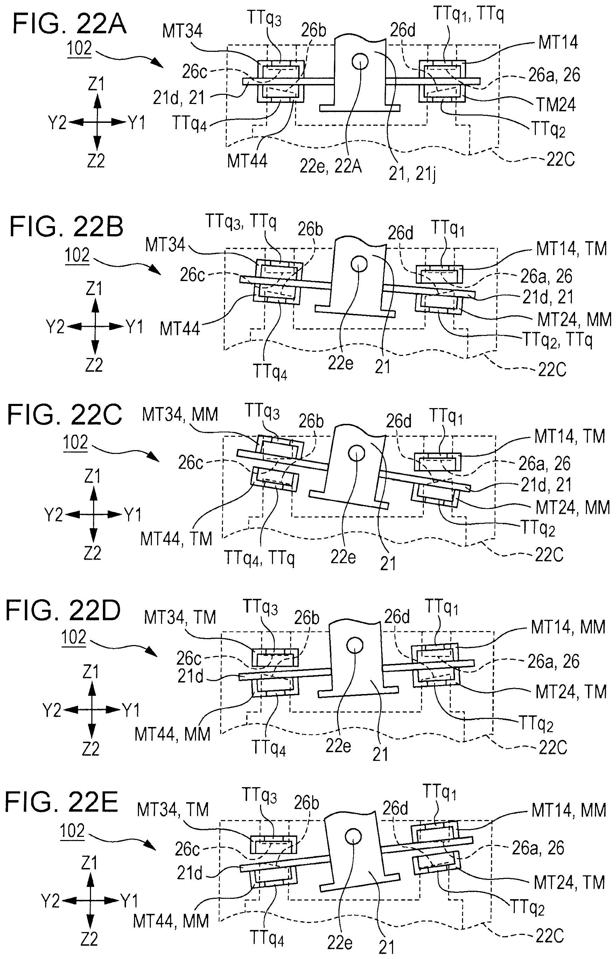

Figs. 22A through 22E are schematic diagrams for describing operations of the operating device according to the second embodiment of the present invention, in which Fig. 22A is a diagram illustrating a state at a reference position, Fig. 22B is a diagram illustrating a state tilted in the Y1 direction, Fig. 22C is a diagram illustrating a state tilted further in the Y1 direction, beyond the state illustrated in Fig. 22B, Fig. 22D is a diagram illustrating a state tilted in the Y2 direction, and Fig. 22E is a diagram illustrating a state tilted further in the Y2 direction, beyond the state illustrated in Fig. 22D;
Fig. 23 is a disassembled perspective view for describing a vehicular shift device using an operating device according to a third embodiment of the present invention;
Fig. 24 is a perspective view for describing the operating device according to the third embodiment of the present invention;
Figs. 25A and 25B are diagrams for describing the operating device according to the third embodiment of the present invention, in which Fig. 25A is a frontal view from side Y2 in Fig. 24, and Fig. 25B is a frontal view in which a frame in Fig. 25A has been omitted from illustration;
Figs. 26A and 26B are diagrams for describing the operating device according to the third embodiment of the present invention, in which Fig. 26A is a side view from side X1 in Fig. 23, and Fig. 26B is a side view in which the frame in Fig. 26A has been omitted from illustration;
Fig. 27 is a perspective view of movable-side magnetic members and opposing-side magnetic members, for describing the operating device according to the third embodiment of the present invention;
Fig. 28 is a perspective view omitting illustration of the movable-side magnetic members and opposing-side magnetic members in Fig. 27, for describing the operating device according to the third embodiment of the present invention;
Fig. 29 is a perspective view of the frame, for describing the operating device according to the third embodiment of the present invention;
Fig. 30 is a disassembled perspective view for describing a vehicular shift device using an operating device according to a fourth embodiment of the present invention;
Fig. 31 is a perspective view for describing the operating device according to the fourth embodiment of the present invention;
Figs. 32A and 32B are diagrams for describing the operating device according to the fourth embodiment of the present invention, in which Fig. 32A is a frontal view from side Y2 in Fig. 31, and Fig. 32B is a side view from side X1 in Fig. 31;
Fig. 33 is a perspective view omitting illustration of a fixing member illustrated in Fig. 31, for describing the operating device according to the fourth embodiment of the present invention;
Fig. 34 is a perspective view omitting illustration of a tilting member of a support member illustrated in Fig. 33, for describing the operating device according to the fourth embodiment of the present invention;
Figs. 35A and 35B are diagrams for describing the operating device according to the fourth embodiment of the present invention, in which Fig. 35A is a frontal view from side Y2 in Fig. 34, and Fig. 35B is a side view from side X1 in Fig. 34;
Figs. 36A and 36B are diagrams for describing the operating device according to the fourth embodiment of the present invention, in which Fig. 36A is a perspective view of the operating member, and Fig. 36B is a side view of the operating member from side X1 in Fig. 36A;
Fig. 37 is a perspective view of the tilting member, for describing the operating device according to the fourth embodiment of the present invention;
Figs. 38A and 38B are diagrams for describing the operating device according to the fourth embodiment of the present invention, in which Fig. 38A is an upper perspective view of a fixing member, and Fig. 38B is a lower perspective view of the fixing member;
Figs. 39A and 39B are diagrams for describing the operating device according to the fourth embodiment of the present invention, in which Fig. 39A is a perspective view of opposing-side magnetic members, and Fig. 39B is a perspective view of the movable-side magnetic members;
Figs. 40A and 40B are diagrams for describing the operating device according to the fourth embodiment of the present invention, in which Fig. 40A is a side view from which a first movable-side magnetic member illustrated in Fig. 35B has been omitted, and Fig. 40B is a side view from which a second movable-side magnetic member illustrated in Fig. 35B has been omitted;

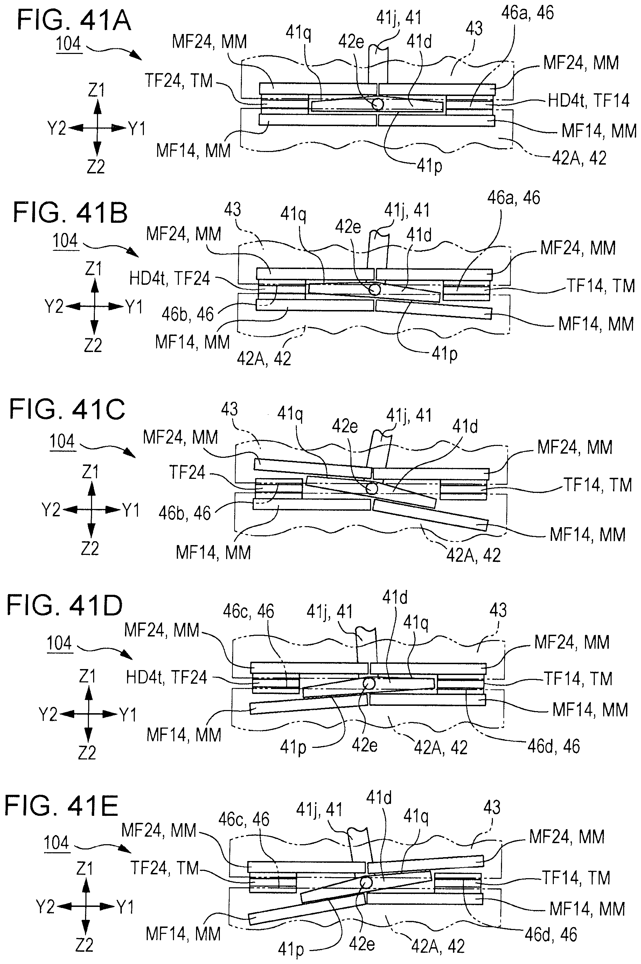

Figs. 41A through 41E are schematic diagrams for describing operations of the operating device according to the fourth embodiment of the present invention, in which Fig. 41A is a diagram illustrating a state at a reference position, Fig. 41B is a diagram illustrating a state tilted in the Y1 direction, Fig. 41C is a diagram illustrating a state tilted further in the Y1 direction, beyond the state illustrated in Fig. 41B, Fig. 41D is a diagram illustrating a state tilted in the Y2 direction, and Fig. 41E is a diagram illustrating a state tilted further in the Y2 direction, beyond the state illustrated in Fig. 41D;
Figs. 42A through 42C are diagrams for describing modifications of the operating device according to the first embodiment of the present invention, in which Fig. 42A is a side schematic diagram illustrating a first modification, Fig. 42B is a side schematic diagram illustrating a second modification, and Fig. 42C is a side schematic diagram illustrating a third modification;
Figs. 43A through 43C are diagrams for describing modifications of the operating device according to the first embodiment of the present invention, in which Fig. 43A is a side schematic diagram illustrating a fourth modification, Fig. 43B is a side schematic diagram illustrating a fifth modification, and Fig. 43C is a side schematic diagram illustrating a sixth modification;
Figs. 44A and 44B are diagrams for describing modifications of the operating device according to the second embodiment of the present invention, in which Fig. 44A is a side schematic diagram illustrating a seventh modification, and Fig. 44B is a side schematic diagram illustrating an eighth modification; and
Fig. 45 is an enlarged longitudinal sectional view illustrating an automatic transmission shift operating device according to a conventional example, with a shift lever in neutral range (N range).

### DESCRIPTION OF THE PREFERRED EMBODIMENTS

The following is a description of embodiments of the present invention with reference to the drawings.

### First Embodiment

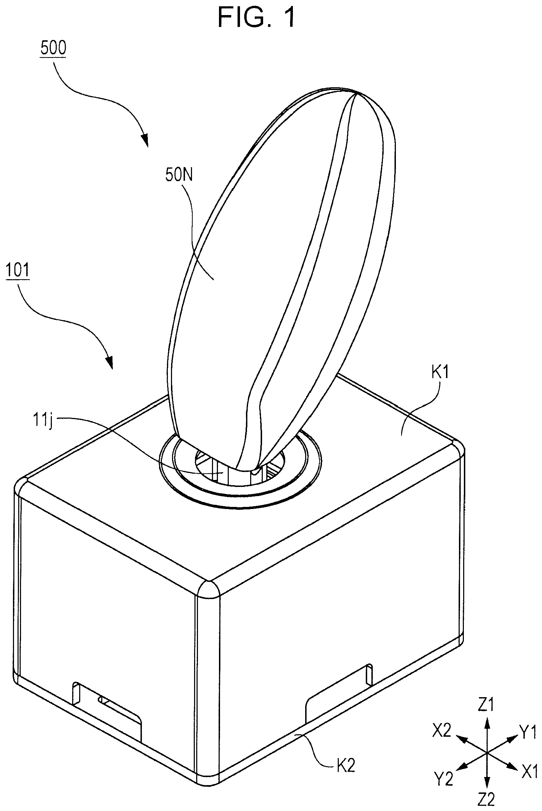

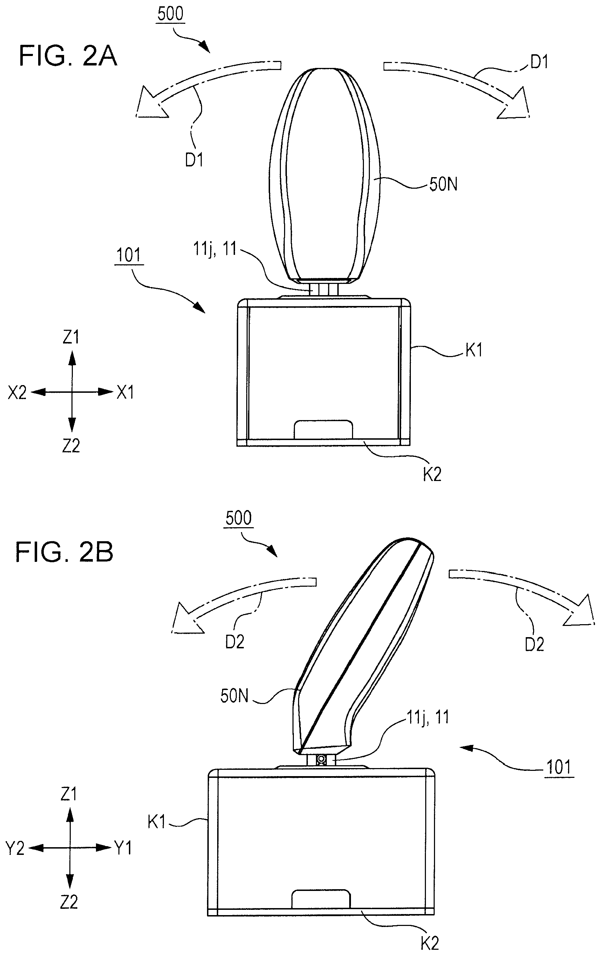

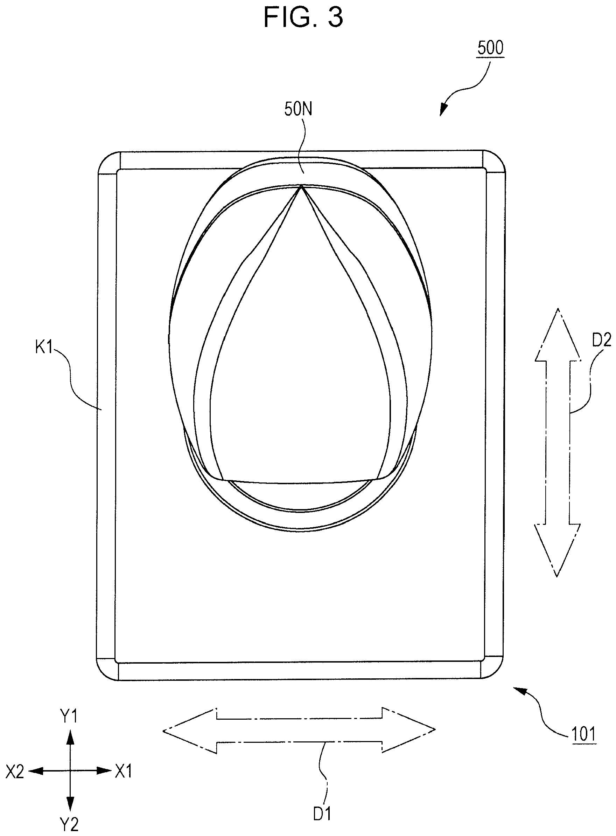

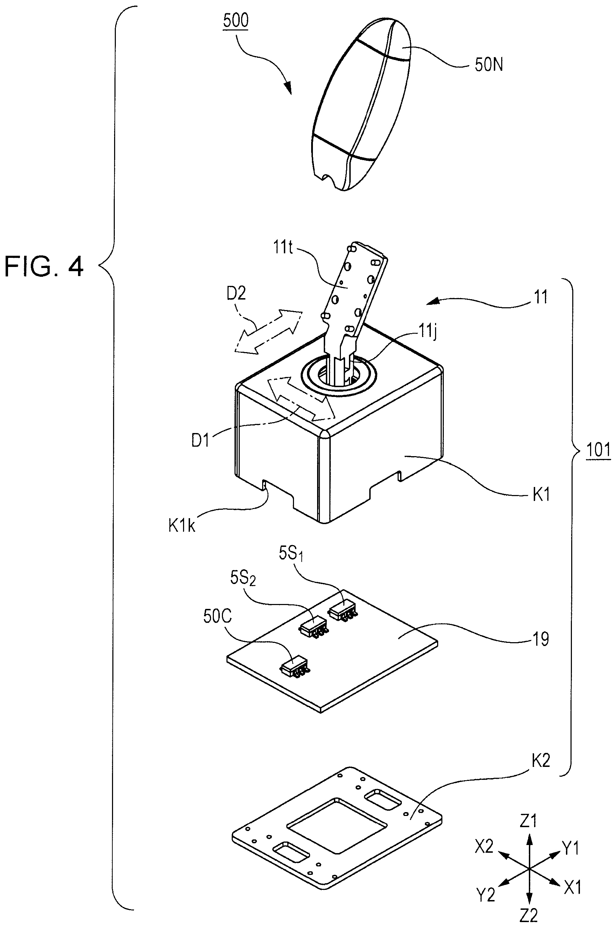

An operating device 101, and a vehicular shift device 500 using the operating device 101, will be described in a first embodiment of the present invention. First, the vehicular shift device 500 using the operating device 101 will be described. Fig. 1 is a perspective view describing the vehicular shift device 500 using the operating device 101 according to the first embodiment of the present invention. Figs. 2A and 2B are diagrams for describing the vehicular shift device 500 using the operating device 101 according to the first embodiment of the present invention, in which Fig. 2A is a frontal view from side Y2 in Fig. 1, and Fig. 2B is a side view from side X1 in Fig. 1. Fig. 3 is a top view from side Z1 in Fig. 1, for describing the vehicular shift device 500 using the operating device 101 according to the first embodiment of the present invention. Fig. 4 is a disassembled perspective view for describing the vehicular shift device 500 using the operating device 101 according to the first embodiment of the present invention.

The vehicular shift device 500 using the operating device 101 according to the first embodiment of the present invention has an external appearance such as illustrated in Figs. 1 through 3, and is configured including a shift knob 50N to be gripped by an operator, the operating device 101 which can be operated in multiple directions due to the shift knob 50N being tilted by the operator, a control unit 50C which receives signals from the operating device 101 and transmits signals to vehicle-side equipment, and position detecting means 5S (omitted from illustration in Fig. 4) that detects multiple positions at which an operating member 11 of the operating device 101 is situated, as illustrated in Fig. 4. The vehicular shift device 500 is used for shift operations for a vehicle, installed in the vehicle and being capable of being tilted by operation in a first direction D1 (X direction in Fig. 3) and a second direction D2 (Y direction in Fig. 3) which is orthogonal to the first direction D1.

The shift knob 50N of the vehicular shift device 500 is formed having a slender shape so as to be easily gripped by the operator, as illustrated in Fig. 4, and is engaged with an operating portion 11t of the operating member 11 of the operating device 101 illustrated in Fig. 4, so as to cover the operating portion 11t as illustrated in Figs. 1 through 3.

The control unit 50C of the vehicular shift device 500 is configured using an integrated circuit (IC), and is mounted on a wiring board 19 (see Fig. 4) accommodated in a box-shaped case K1 of the operating device 101. The control unit 50C is connected to vehicle-side equipment via an unshown connector, and upon a tilting operation being made of the shift knob 50N, receives position information signals corresponding to the operation and transmits these signals to the vehicle-side equipment. The vehicle side receives the position information signals and performs operations corresponding to the shift pattern, and also displays the position of the shift knob 50N in the shift pattern on a display unit provided to the instrument panel or the like. The position detecting means 5S of the vehicular shift device 500 are mounted to the operating device 101, so detailed description thereof will be made later along with the operating device 101.

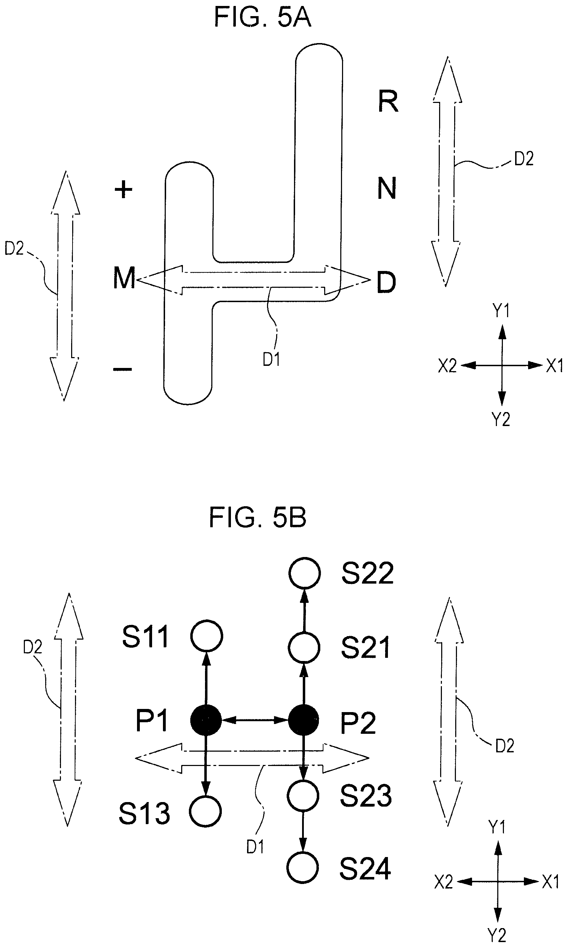

Shifting operations of the vehicular shift device 500 using the operating device 101 according to the first embodiment of the present invention will be described with reference to Figs. 5A and 5B. Figs. 5A and 5B are diagrams specifically describing operation of the vehicular shift device using the operating device according to the first embodiment through a fourth embodiment of the present invention, in which Fig. 5A is a plan view illustrating the shift layout (shift pattern) of the vehicle, and Fig. 5B is a plan view illustrating positions of a shift knob. The shift pattern illustrated in Fig. 5A is displayed on a display unit provided to the aforementioned instrument panel or the like. The positions illustrated in Fig. 5B are a schematic representation of positions to which the operating member 11, to which the shift knob 50N is attached, has moved.

The vehicular shift device 500 according to the first embodiment of the present invention is applied to a vehicle where control of the transmission is electronic, not a vehicle where the shift knob 50N is directly connected to the transmission and mechanical control is effected. Accordingly, shifting of gears in this vehicle is performed just by information signals regarding shift positions transmitted from the operating device 101. The shift positions are displayed in the shift pattern displayed on the display unit provided to the aforementioned instrument panel or the like.

For example, a case will be assumed where the shift knob 50N is situated at a second position P2 of the operating member 11 as illustrated in Fig. 5B, and the shift position is situated at the neutral mode "N" position illustrated in Fig. 5A, If the shift knob 50N is then operated by tilting in the Y1 direction to shift to a position S21 which is one step forward as illustrated in Fig. 5B, an information signal is transmitted to the vehicle side to the effect that the shift position has moved to reverse "R" illustrated in Fig. 5A, and the shifting operation of the vehicle is performed. After the operation has been completed, the operator releases the shift knob 50N, so the shift knob 50N automatically returns to the second position P2.

Thereafter, if the shift knob 50N situated at the second position P2 is operated by tilting in the Y2 direction to shift in order to a position S23 which is one step backward and a position S24 which is two steps backward, illustrated in Fig. 5B, the shift position, which had been in the reverse mode "R", moves in order to neutral mode "N" and then drive mode "D" illustrated in Fig. 5A. Upon this operation having been performed, information signals are transmitted to the vehicle side to the effect that the shift position has moved to the drive mode "D" illustrated in Fig. 5A, and the shifting operation of the vehicle is performed. After the operation has been completed, the operator releases the shift knob 50N, so the shift knob 50N automatically returns to the second position P2.

Thus, the vehicular shift device 500 has an auto operation position, which is a reference position for auto operations including reverse mode "R", neutral mode "N", and drive mode "D", assigned to the second position P2 of the operating member 11 of the operating device 101. In order to switch from the reverse mode "R" to the drive mode "D" here, the operating member 11 of the operating device 101 is operable to be tilted in the Y2 direction to the position S23 which is one step backward and the position S24 which is two steps backward, as described above. In the same way, in order to switch from the drive mode "D" to the reverse mode "R", the operating member 11 of the operating device 101 is operable to be tilted in the Y1 direction to the position S21 which is one step forward and a position S22 which is two steps forward, as illustrated in Fig. 5B. The direction of moving, or tilting, the operating member 11 of the operating device 101 in the Y direction, is assigned the second direction D2 of shift operations.

On the other hand, in a case where the shift position is at the drive mode "D" illustrated in Fig. 5A for example, and the shift knob 50N situated at the second position P2 is operated to tilt in the X2 direction such that the operating member 11 is at a first position P1 illustrated in Fig. 5B, the shift position which was at the drive mode "D" moves to the manual mode "M" illustrated in Fig. 5A. At this time, the operator releasing the shift knob 50N does not return the operating member 11 (shift knob 50N) to the original position; rather, the operating member 11 stays at the first position P1 maintaining its tilted state.

Thereafter, if the shift knob 50N situated at the first position P1 is operated by tilting in the Y1 direction to a forward position S11 illustrated in Fig. 5B, an information signal is transmitted to the vehicle side to the effect that the shift position has moved to the shift-up mode "+" illustrated in Fig. 5A, and a shift-up operation is performed at the vehicle. In the same way, if the shift knob 50N situated at the first position P1 is operated by tilting in the Y2 direction to a backward position S13 illustrated in Fig. 5B, an information signal is transmitted to the vehicle side to the effect that the shift position has moved to the shift-down mode "-" illustrated in Fig. 5A, and a shift-down operation is performed at the vehicle.

Thus, the vehicular shift device 500 has a manual operation position, which is a reference position for manual operations including the shift-up mode "+" and shift-down mode "-", assigned to the first position P1 of the operating member 11 of the operating device 101. Note that the direction of movement in the X direction, where the operating member 11 of the operating device 101 moves by tilting between the first position P1 and the second position P2 is designated as a first direction D1 of shift operations for the vehicle. Figs. 2A, 2B, and 3 also illustrate the first direction D1 and second direction D2 for tilting operations, to facilitate description.

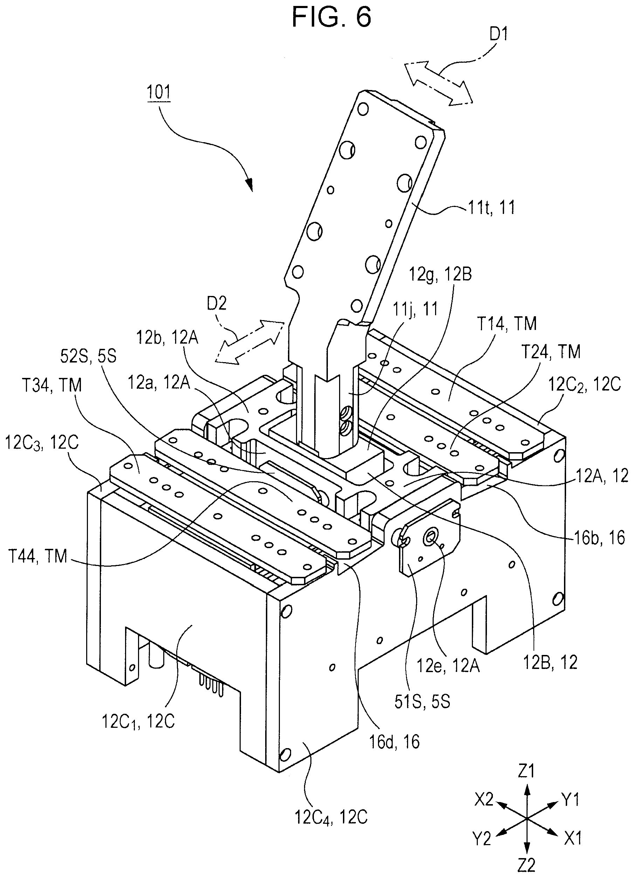

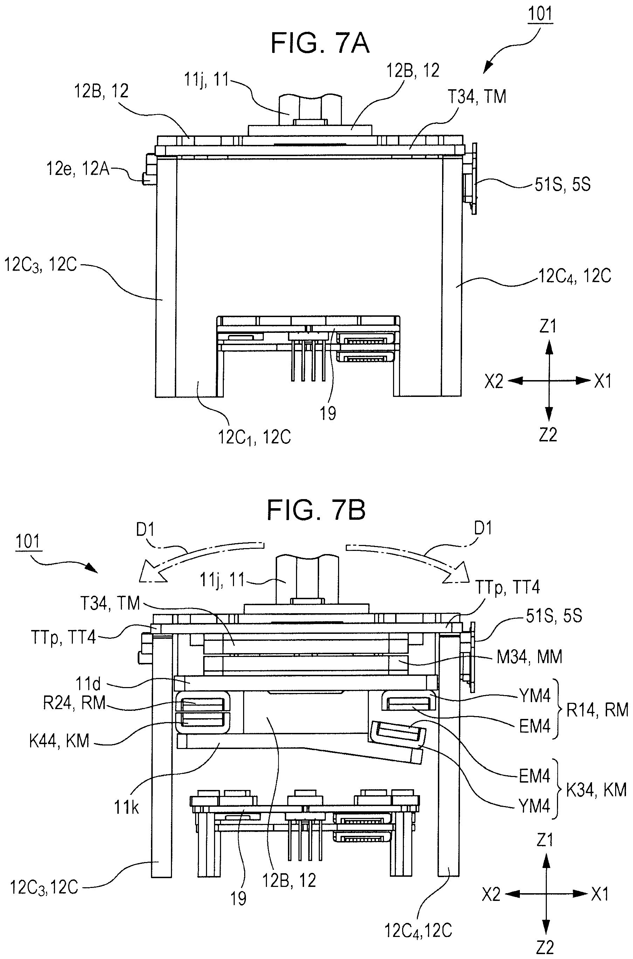

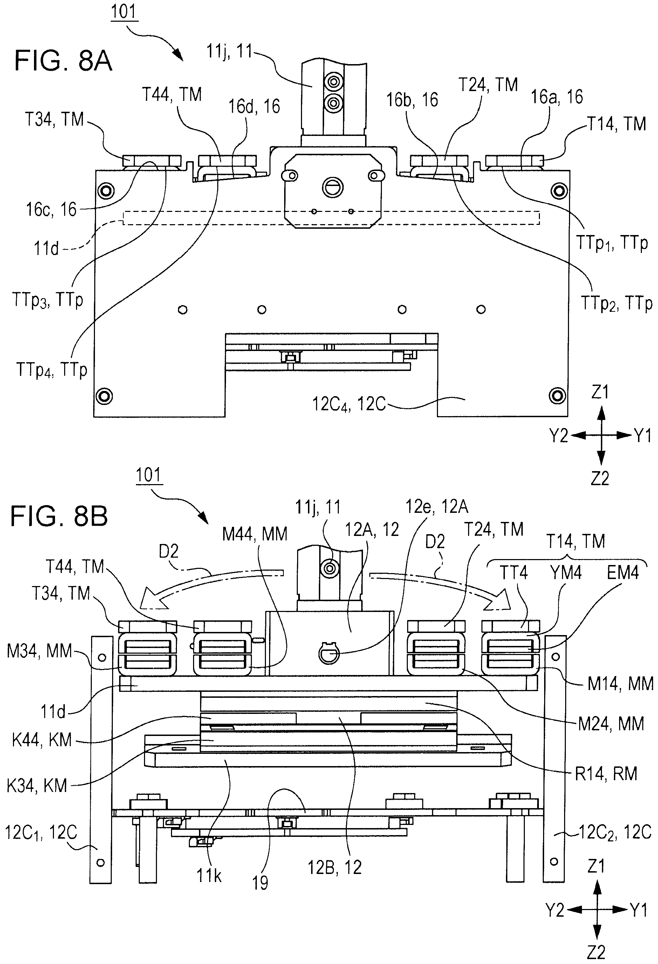

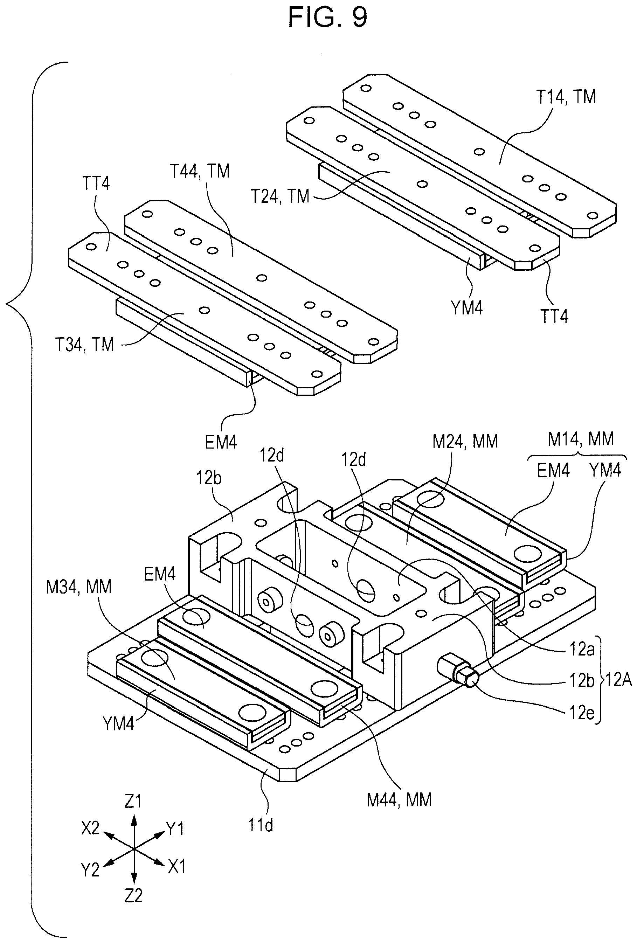

Next, the operating device 101 will be described. Fig. 6 is a perspective view for describing the operating device 101 according to the first embodiment of the present invention. The case K1 and cover K2 illustrated in Fig. 4 are omitted from illustration in Fig. 6. Figs. 7A and 7B are diagrams for describing the operating device 101 according to the first embodiment of the present invention, in which Fig. 7A is a frontal view from side Y2 in Fig. 6, and Fig. 7B is a frontal view in which linking plates (12C₁ and 12C₂) of a frame 12C in Fig. 7A has been omitted from illustration. Figs. 8A and 8B are diagrams for describing the operating device 101 according to the first embodiment of the present invention, in which Fig. 8A is a frontal view from side X1 in Fig. 6, and Fig. 8B is a side view in which support plates (12C₃ and 12C₄) of the frame 12C in Fig. 8A has been omitted from illustration. Note that Figs. 7A through 8B illustrate the operating member 11 in the state of being situated at the second position P2. Fig. 9 is a disassembled perspective view of movable-side magnetic members MM and opposing-side magnetic members MT.

The operating device 101 according to the first embodiment of the present invention has an external appearance such as illustrated in Figs. 4 and 6, and includes, as illustrated in Figs. 7A through 8B, the operating member 11 operable to be tilted under operations by the operator, a supporting member 12 which tiltably supports the operating member 11, multiple movable-side magnetic members MM exhibiting tilting action in the second direction D2 along with the operating member 11, multiple opposing-side magnetic members TM disposed facing the respective multiple movable-side magnetic members MM, and a stopper portion 16 to stop tilting action of the opposing-side magnetic members TM. The operating device 101 also includes, as illustrated in Fig. 7B, multiple tilting-side magnetic members KM exhibiting tilting action in the first direction D1 (the X1 direction and X2 direction in Figs. 6 and 7B) along with the operating member 11, multiple fixed-side magnetic members RM disposed facing the respective tilting-side magnetic members KM, the box-shaped case K1 disposed so as to cover the supporting member 12 and opposing-side magnetic members TM as illustrated in Fig. 4, the cover K2 covering an opening K1k of the case K1, and the wiring board 19 on which the control unit 50C is mounted, accommodated in the case K1. The operating device 101 is thus capable of operations in multiple directions, which are tilting actions in the first direction D1 where the operating member 11 moves between the first position P1 and second position P2 (see Fig. 5B), and the second direction D2 (the Y1 direction and Y2 direction in Figs. 6 and 8B) orthogonal to the first direction D1, upon tilting operations being performed by the operator.

The operating member 11 of the operating device 101 is fabricated by molding synthetic resin, and is configured including a cylindrical operating shaft 11j engaged to the supporting member 12 and extending in the perpendicular direction (the Z direction in Fig. 6), as illustrated in Fig. 6, the operating portion 11t extending diagonally from one end side of the operating shaft 11j, and a plate-shaped base body 11d and plate-shaped base portion 11k which are provided to the other end side of the operating shaft 11j, extending along planes through which the axial center of the operating shaft 11j passes, as illustrated in Figs. 7B and 8B. The operating portion 11t of the operating member 11 is covered by the shift knob 50N of the vehicular shift device 500, as described earlier.

The base body 11d of the operating member 11 is plate-shaped as illustrated in Figs. 7B and 8B, and is disposed between the operating shaft 11j and the base portion 11k. The base body 11d is configured to perform tilting actions in conjunction with tilting actions of the operating member 11 in the second direction D2 (Y direction in Fig. 8B). The base portion 11k is also configured to perform tilting actions in conjunction with tilting actions in the second direction D2.

The base portion 11k of the operating member 11 is plate-shaped, with the middle portion bent somewhat, such as illustrated in Fig. 7B. The base portion 11k is configured to perform tilting actions in conjunction with tilting actions of the operating member 11 in the first direction D1 (X direction in Fig. 7B).

The supporting member 12 of the operating device 101 is fabricated by molding synthetic resin, and is configured including a first conjunction member 12A which turns according to tilting operations of the operating member 11, a second conjunction member 12B which turns according to tilting operations of the operating member 11, the axial line directions of the operating member 11 and the second conjunction member 12B being orthogonal, and a frame 12C which supports the second conjunction member 12B, as illustrated in Fig. 6.

The first conjunction member 12A of the supporting member 12 is configured including a pair of slender side walls 12a which are disposed facing each other, linking portions 12b linking each of both ends of these side walls 12a, and tilting shafts (first tilting shafts) 12e provided to the linking portions 12b so as to extend from both ends of the first conjunction member 12A, as illustrated in Figs. 6 and 9. The tilting shafts 12e are inserted through the pair of support plates (12C₃ and 12C₄) of the frame 12C when the operating device 101 is being assembled (only the support plate 12C₄ side is illustrated in Fig. 6), so as to be turnably supported by the frame 12C. Accordingly, the first conjunction member 12A can turn on the tilting shafts 12e as the axial center, and the base body 11d of the operating member 11 can also turn.

Also, the second conjunction member 12B of the supporting member 12 is configured including a block-shaped base portion 12g, a linking portion (omitted from illustration) extending upwards from the base portion 12g, and second tilting shafts (omitted from illustration) provided passing through the base portion 12g, as illustrated in Fig. 6. The second conjunction member 12B is inserted into a space defined by the side walls 12a and linking portions 12b of the first conjunction member 12A when assembling the operating device 101, with the second tilting shafts inserted through holes 12d (see Fig. 9) formed in the pair of side walls 12a, so as to turnably support the second conjunction member 12B by the first conjunction member 12A. The unshown linking portion is inserted to an engages the operating shaft 11j of the operating member 11. Accordingly, the supporting member 12 supports the operating member 11 so as to be capable of tilting actions, using the first conjunction member 12A, the second conjunction member 12B, and the frame 12C. Specifically, the operating member 11 can turn in the first direction D1 with the second tilting shafts of the second conjunction member 12B as a turning axis, and the operating member 11 can turn in the second direction D2 with the tilting shafts (first tilting shafts) 12e of the first conjunction member 12A as a turning axis (axial center).

The fixed-side magnetic members RM of the operating device 101 are magnetic members made up of a permanent magnet EM4 and a yoke YM4 disposed so as to surround three faces of the permanent magnet EM4, as illustrated in Fig. 7B. The fixed-side magnetic members RM are configured as a combination of a first magnet R14 which comes into contact or proximity with a tilting-side magnetic member KM when the operating member 11 moves to the first position P1, and a second magnet R24 which comes into contact or proximity with a tilting-side magnetic member KM when the operating member 11 moves to the second position P2 (state in Fig. 7B). The first magnet R14 and the second magnet R24 of the fixed-side magnetic members RM are supported by the base body 11d of the operating member 11 as illustrated in Figs. 7B and 8B, and are fixed to the base body 11d by screws or the like. Accordingly, the fixed-side magnetic members RM are maintained in an unmoving state even when the operating member 11 is tilted in the first direction D1 (X direction in Figs. 7A and 7B). Note that the fixed-side magnetic members RM are disposed having an orientation such that portions other than the faces of the permanent magnets EM4 which face the tilting-side magnetic members KM are covered by the yokes YM4.

In the same way as with the fixed-side magnetic members RM, the tilting-side magnetic members KM of the operating device 101 are magnetic members made up of a permanent magnet EM4 and a yoke YM4 disposed so as to surround three faces of the permanent magnet EM4, as illustrated in Fig. 7B. The fixed-side magnetic members RM are configured as a combination of a third magnet K34 which comes into contact or proximity with a fixed-side magnetic member RM when the operating member 11 moves to the first position P1, and a fourth magnet K44 which comes into contact or proximity with a fixed-side magnetic member RM when the operating member 11 moves to the second position P2 (state in Fig. 7B). The third magnet K34 and the fourth magnet K44 of the tilting-side magnetic members KM are fixed to the base portion 11k of the operating member 11, so as to exhibit tilting action in conjunction with the tilting action of the operating member 11 in the first direction D1. The tilting-side magnetic members KM also are disposed having an orientation such that portions other than the faces of the permanent magnets EM4 which face the fixed-side magnetic members RM are covered by the yokes YM4.

In the same way as with the fixed-side magnetic members RM and tilting-side magnetic members KM, the movable-side magnetic members MM of the operating device 101 are magnetic members made up of a permanent magnet EM4 and a yoke YM4 disposed so as to surround three faces of the permanent magnet EM4, as illustrated in Figs. 8B and 9. The movable-side magnetic members MM are configured as a first movable magnet M14, a second movable magnet M24, a third movable magnet M34, and a fourth movable magnet M44. These are disposed across the tilting shafts (first tilting shafts) 12e, such that the first movable magnet M14 and second movable magnet M24 are disposed fixed to the base body 11d in an arrayed manner on the side of tilting action in the Y1 direction, and the third movable magnet M34 and fourth movable magnet M44 are disposed fixed to the base body 11d in an arrayed manner on the side of tilting action in the Y2 direction.

The opposing-side magnetic members TM of the operating device 101 are magnetic members made up of a permanent magnet EM4 and a yoke YM4 disposed so as to surround three faces of the permanent magnet EM4, as illustrated in Figs. 8B and 9. The opposing-side magnetic members TM are configured as a first opposing magnet T14, a second opposing magnet T24, a third opposing magnet T34, and a fourth opposing magnet T44.

Each of the opposing-side magnetic members TM has a rectangular fixing plate TT4 to which a yoke YM4 is fixed. Both end portions of the fixing plates TT4 in the longitudinal direction (X direction sides in Fig. 9) face one side (the Z1 side in Fig. 7B) of the pair of support plates (12C₃ and 12C₄) of the frame 12C when the operating device 101 is assembled, as illustrated in Figs. 7A and 7B. The end portion serves as an abutting portion TTp that abuts the later-described stopper portion 16 when the operating member 11 is tilted.

The opposing-side magnetic members TM are disposed across the tilting shafts (first tilting shafts) 12e, such that the first opposing magnet T14 and second opposing magnet T24 are arrayed in order at the side of tilting action in the Y1 direction, and the third opposing magnet T34 and fourth opposing magnet T44 are arrayed in order at the side of tilting action in the Y2 direction. Further, the first opposing magnet T14 is disposed so as to face the first movable magnet M14, the second opposing magnet T24 is disposed so as to face the second movable magnet M24, the third opposing magnet T34 is disposed so as to face the third movable magnet M34, and the fourth opposing magnet T44 is disposed so as to face the fourth movable magnet M44, such that that the opposing-side magnetic members TM are attracted to all of the movable-side magnetic members MM when the operating member 11 is at the first position P1 or the second position P2, which are the reference positions, as illustrated in Fig. 8B.

Next, the stopper portion 16 of the operating device 101 is disposed as four portions (16a, 16b, 16c, and 16d) at one side end (on the Z1 side in Fig. 8A) of the support plate 12C₄ of the frame 12C, as illustrated in Fig. 8C. The stopper portions 16 are disposed across the tilting shafts (first tilting shafts) 12e, such that a stopper portion 16a and a stopper portion 16b are arrayed in order at the side of tilting action of the operating member 11 in the Y1 direction (tilting direction), and a stopper portion 16c and a stopper portion 16d are arrayed in order at the side of tilting action of the operating member 11 in the Y2 direction (tilting direction). Further, four stopper portions 16 are provided on the other side end of the support plate 12C₃, at portions corresponding to the four stopper portion 16 (16a, 16b, 16c, and 16d), although this is omitted from illustration. Thus, multiple stopper portion 16 can be easily formed simply by pressing the ends of a pair of support plates (12C₃ and 12C₄).

Also, at the side of tilting action in the Y1 direction, the distance as to the base body 11d gradually becomes shorter in the order of the stopper portion 16a and the stopper portion 16b at the reference position, as illustrated in Fig. 8A. In the same way, at the side of tilting action in the Y2 direction, the distance as to the base body 11d gradually becomes shorter in the order of the stopper portion 16c and the stopper portion 16d at the reference position. In other words, at the side of tilting action in the Y1 direction, the distance at the first opposing magnet T14 between an abutting portion TTp₁ and the stopper portion 16a is shorter than the distance at the second opposing magnet T24 between an abutting portion TTp₂ and the stopper portion 16b, and at the side of tilting action in the Y2 direction, the distance at the third opposing magnet T34 between an abutting portion TTp₃ and the stopper portion 16c is shorter than the distance at the fourth opposing magnet T44 between an abutting portion TTp₄ and the stopper portion 16d.

These stopper portions 16 are provided corresponding to each of multiple positions where the operating member 11 is positioned under tilting operations from the reference position by the operator, which will be described in detail in a later description of actions. That is to say, the stopper portion 16a corresponds to the forward position S11 and the position S21 which is one step forward, the stopper portion 16b corresponds to the position S22 which is two steps forward, the stopper portion 16c corresponds to the backward position S13 and the position S23 which is one step backward, and the stopper portion 16d corresponds to the position S24 which is two steps backward, illustrated in Fig. 5B.

The case K1 of the operating device 101 is fabricated by bending a steel sheet which is a soft magnetic substance, and is formed in a shape of a box, having the opening K1k where one face is opened, as illustrated in Fig. 4. This case K1 accommodates the supporting member 12, the multiple movable-side magnetic members MM, the multiple opposing-side magnetic members TM, the multiple tilting-side magnetic members KM, the multiple fixed-side magnetic members RM, the wiring board 19, and the position detecting means 5S.

The cover K2 of the operating device 101 is fabricated by stamping a steel sheet which is a soft magnetic substance, and is formed in a shape covering the opening K1k of the case K1, as illustrated in Fig. 4. Forming the case K1 and the cover K2 from a steel sheet which is a soft magnetic substance means that when the operating device 101 is assembled, the magnetism generated from the multiple movable-side magnetic members MM, the multiple opposing-side magnetic members TM, the multiple tilting-side magnetic members KM, and the multiple fixed-side magnetic members RM, can be prevented from leaking out from the case K1 and the cover K2. This can prevent adverse effects of the magnetism on external equipment.

A printed wiring board is used for the wiring board 19 of the operating device 101, upon which the control unit 50C is mounted as described earlier. Although omitted from illustration, a flexible printed board is connected to the wiring board 19 for electrical connection with the position detecting means 5S, and connectors for connection to external equipment also are mounted on the wiring board 19.

The position detecting means 5S of the vehicular shift device 500 will now be described. A rotary potentiometer, configured including a board on which a resistor pattern is formed, and a wiper which slides over the resistor pattern, is used for the position detecting means 5S. First position detecting means 51S and second position detecting means 52S are provided to the operating device 101. Specifically, the first position detecting means 51S are engaged with the tilting shafts (first tilting shafts) 12e of the first conjunction member 12A, and the second position detecting means 52S are engaged with the second tilting shafts (omitted from illustration) of the second conjunction member 12B, as illustrated in Fig. 6.

The first position detecting means 51S are also connected to a first signal processing unit 5S₁ which processes signals from the first position detecting means 51S, by a flexible printed board omitted from illustration. The first position detecting means 51S detect the rotational angle of the tilting shafts (first tilting shafts) 12e, and the first signal processing unit 5S₁ mounted on the wiring board 19 (see Fig. 4) detects movement of the operating member 11 from this rotational angle in the second direction D2. In the same way, the second position detecting means 52S are also connected to a second signal processing unit 5S₂ which processes signals from the second position detecting means 52S, by a flexible printed board omitted from illustration. The second position detecting means 52S detect the rotational angle of the second tilting shafts, and the second signal processing unit 5S₂ mounted on the wiring board 19 (see Fig. 4) detects movement of the operating member 11 from this rotational angle in the first direction D1.

The actions of the operating device 101 configured as described above will now be described. First, motion in the first direction D1, where the operating member 11 moves between the first position P1 and the second position P2, will be described with reference to Fig. 7B.

First, in a case where the operating member 11 is operated by being tilted by the operator in the X2 direction from the second position P2, which is a reference position illustrated in Fig. 7B, to the first position P1 which is a reference position, the fixed-side magnetic members RM and the tilting-side magnetic members KM are disposed facing each other, so the first magnet R14 and the third magnet K34 attract each other. The operating member 11 remains at the first position P1 and the tilted state of the operating member 11 is maintained as it is. At the same time, the second magnet R24 and the fourth magnet K44 are separated, so the operator is provided with a sense of moderation due to the change from the strong attraction state to the weak attraction state.

Next, in a case where the operating member 11 is operated by being tilted by the operator in the X1 direction from the first position P1, which is a reference position, to the second position P2 which is a reference position (the state illustrated in Fig. 7B), the fixed-side magnetic members RM and the tilting-side magnetic members KM are similarly disposed facing each other, so the second magnet R24 and the fourth magnet K44 attract each other. The operating member 11 remains at the second position P2 and the tilted state of the operating member 11 is maintained as it is. At the same time, the first magnet R14 and the third magnet K34 are separated, so the operator is provided with a sense of moderation due to the change from the strong attraction state to the weak attraction state.

Thus, a strong attracting force can be generated by the permanent magnet EM4 which is a simple part, and the operating member 11 can be easily fixed at the first position P1 and at the second position P2. Further, the permanent magnet EM4 is covered by the yoke YM4, so stronger attraction can be generated with a simple configuration.

Next, the movement in the second direction D2, which is different from the first direction D1, will be described with reference to Figs. 5A through 10E. Figs. 10A through 10E are schematic diagrams for describing operations of the operating device 101 according to the first embodiment of the present invention, in which Fig. 10A is a diagram illustrating a state at a reference position, Fig. 10B is a diagram illustrating a state tilted in the Y1 direction, Fig. 10C is a diagram illustrating a state tilted further in the Y1 direction, beyond the state illustrated in Fig. 10B, Fig. 10D is a diagram illustrating a state tilted in the Y2 direction, and Fig. 10E is a diagram illustrating a state tilted further in the Y2 direction, beyond the state illustrated in Fig. 10D. Note that the pair of support plates (12C₃ and 12C₄) of the frame 12C illustrated in Fig. 8B are indicated by dashed lines and denoted as the frame 12C, to facilitate description.

Movement in the second direction D2 is performed tilting operation of the operating member 11 by the user, from the reference position at the first position P1 or second position P2 (see Fig. 5B). A case of moving with the second position P2 as the reference position will be described in detail here. Note that the movement in the second direction D2 with the first position P1 as the reference position is similar to the movement described below.

First, in a case where the operating member 11 is at the reference position at the second position P2, the base body 11d of the operating member 11 is maintained parallel as to the Y direction, and parallel is also maintained for the multiple movable-side magnetic members MM fixed onto this base body 11d, as illustrated in Fig. 10A. In the same way, parallel is also maintained for the multiple opposing-side magnetic members TM attached by attraction to each of the multiple movable-side magnetic members MM. Thus, in a state where the operating member 11 is at the reference position (second position P2), all of the movable-side magnetic members MM and opposing-side magnetic members TM are attached by attraction, so there is no looseness of the operating member 11.

Also, in a case where the operating member 11 is at the reference position (second position P2), four abutting portions TTp (TTp₁ TTp₂, TTp₃, TTp₄) of the fixing plate TT4 of the opposing-side magnetic members TM are separated from the four stopper portion 16 (16a, 16b, 16c, and 16d) provided to the support plates (12C₃ and 12C₄) of the frame 12C.

Next, upon the operator performing a tilting operation of the operating member 11 in the Y1 direction, the operating member 11 is turned on the tilting shafts (first tilting shafts) 12e as the axis of turning, so as to be tilted from the reference position (second position P2) and be situated at the position S21 which is one step forward (see Fig. 5B). According to this turning, the base body 11d comes to exhibit tilting action in the Y1 direction, and is tilted to the position illustrated in Fig. 10B. At the time of the operating member 11 being situated at this position S21 which is one step forward, the abutting portion TTp₁ of the fixing plate TT4 of the first opposing magnet T14 comes into contact with the stopper portion 16a, so that the stopper portion 16a stops the tilting action of the first opposing magnet T14. On the other hand, the first movable magnet M14 which had been attracted to the first opposing magnet T14 is separated from the first opposing magnet T14 since the tilting action continues. Accordingly, the user can feel a sense of moderation (a click) when moving from the second position P2 to the position S21 which is one step forward, due to the change from the strong attraction state to the weak attraction state.

Upon the operator continuing the tilting operation of the operating member 11 in the Y1 direction, the operating member 11 is further turned, so as to be situated tilted from the position S21 which is one step forward to the position S22 which is two steps forward (see Fig. 5B). According to this turning, the base body 11d further exhibits tilting action in the Y1 direction, and is tilted to the position illustrated in Fig. 10C. At the time of the operating member 11 being situated at this position S22 which is two steps forward, the abutting portion TTp₂ of the fixing plate TT4 of the second opposing magnet T24 comes into contact with the stopper portion 16b, so that the stopper portion 16b stops the tilting action of the second opposing magnet T24. On the other hand, the second movable magnet M24 which had been attracted to the second opposing magnet T24 is separated from the second movable magnet T24 since the tilting action continues. Accordingly, the user can similarly feel a sense of moderation (a click) when moving from the position S21 which is one step forward to the position S22 which is two steps forward, due to the change from the strong attraction state to the weak attraction state.

Thus, according to the first embodiment of the present invention, the stopper portion 16b and the stopper portion 16a are arrayed in order in the tilting direction (the Y1 direction illustrated in Figs. 10A through 10E), with the distance between the stopper portion 16a and the abutting portion TTp₁, and the distance between the stopper portion 16b and the abutting portion TTp₂, being gradually changed at the reference position illustrated in Fig. 10A. Accordingly, at the time of the operating member 11 being operated to tilt in the tilting direction, the tilting action of the opposing-side magnetic members TM (first opposing magnet T14 and second opposing magnet T24) disposed facing the movable-side magnetic members MM (first movable magnet M14 and second movable magnet M24)can be stopped in the order of the first opposing magnet T14 and the second opposing magnet T24, in the order of closer distance between the abutting portions TTp (TTp₁ and TTP₂) and stopper portion 16 (16a and 16b). Accordingly, the movable-side magnetic members MM and opposing-side magnetic members TM can be easily separated in accordance to each position (position S21 which is one step forward and a position S22 which is two steps forward).

Also, according to the first embodiment of the present invention, the movable-side magnetic members MM and opposing-side magnetic members TM are each disposed at positions where the attraction between the movable-side magnetic members MM and the opposing-side magnetic members TM acting therebetween is not lost at the time of the movable-side magnetic members MM (first movable magnet M14 and second movable magnet M24) disposed at the side tilting in the Y1 direction separating from the opposing-side magnetic members TM (first opposing magnet T14 and second opposing magnet T24), when tilting the operating member 11 as illustrated in Figs. 10B and 10C. Accordingly, the attraction between the movable-side magnetic members MM and opposing-side magnetic members TM which had been separated by operator operations at each position (position S21 which is one step forward and a position S22 which is two steps forward) acts to attract again. Thus, the operating member 11 can be automatically returned to the reference position without using pressing members for automatic return.

Note that an arrangement may be made where the movable-side magnetic members MM and opposing-side magnetic members TM are disposed at positions where attraction acting between the movable-side magnetic members MM and opposing-side magnetic members TM is not eliminated in a case of the first movable magnet M14 and first opposing magnet T14 separating, or the second movable magnet M24 and second opposing magnet T24 separating. Thus, when the force of the user performing the tilting operation is removed, the second movable magnet M24 and second opposing magnet T24 are attached by attraction, and the first movable magnet M14 and first opposing magnet T14 are attached by attraction, in that order, so the operating member 11 can be automatically returned to the reference position without using pressing members for automatic return.

Also, according to the first embodiment of the present invention, the movable-side magnetic members MM and opposing-side magnetic members TM are all permanent magnets EM4, and each permanent magnet EM4 is covered by a yoke YM4, so strong force for detaching or attracting between the movable-side magnetic members MM and opposing-side magnetic members TM can easily be generated. Accordingly, the operator can be provided with a strong sense of operation and sense of moderation.

Tilting operations in the Y2 direction by the operator are also performed similar to the above-described movement in the Y1 direction. That is to say, at the time of the operating member 11 being tilted from the reference position (second position P2) to be situated at the position S23 which is one step backward (see Fig. 5D), the abutting portion TTp₃ of the fixing plate TT4 of the third opposing magnet T34 comes into contact with the stopper portion 16c, so that the stopper portion 16c stops the tilting action of the third opposing magnet T34. On the other hand, the tilting action of the third movable magnet M34 continues. Accordingly, the third opposing magnet T34 and the third movable magnet M34 are separated, so the user can feel a sense of moderation (a click) when moving from the second position P2 to the position S23 which is one step backward, due to the change from the strong attraction state to the weak attraction state.

Upon the operator continuing the tilting operation of the operating member 11 in the Y2 direction from the position S23 which is one step backward, and the operating member 11 being situated at the position S24 which is two steps backward (see Fig. 5E), the abutting portion TTp₄ of the fixing plate TT4 of the fourth opposing magnet T44 comes into contact with the stopper portion 16d, so that the stopper portion 16d stops the tilting action of the fourth opposing magnet T44. On the other hand, the tilting action of the fourth movable magnet M44 continues. Accordingly, the fourth opposing magnet T44 and fourth movable magnet M44 are separated and distanced, and the user can similarly feel a sense of moderation (a click) also when moving from the position S23 which is one step backward to the position S24 which is two steps backward, due to the change from the strong attraction state to the weak attraction state. Note that while the abutting portions TTp of the fixing plates TT4 are brought into contact with the stopper portions 16 according to the first embodiment of the present invention, a configuration may be made where the yokes YM4 are extended so that the ends of the yokes YM4 serve as contact portions which come into contact with the stopper portion 16, and the fixing plates TT4 are not used.

Also, the movable-side magnetic members MM (third movable magnet M34 and fourth movable magnet M44) and opposing-side magnetic members TM (third opposing magnet T34 and fourth opposing magnet T44) disposed at the side of tilting operations in the Y2 direction are also each disposed at positions where the attraction acting therebetween is not lost. Accordingly, the attraction between the separated movable-side magnetic members MM and opposing-side magnetic members TM at each position (position S23 which is one step backward and a position S24 which is two steps backward) acts to attract again when the force of tilting operations by the user is removed. Thus, the operating member 11 can be automatically returned to the reference position without using pressing members for automatic return.

As described above, the operating device 101 according to the first embodiment of the present invention can perform tilting action in the second direction D2. There are provided stopper portions 16 (16a, 16b, 16c, 16d) corresponding to the multiple positions to which the operating member 11 is moved by being tilted from the reference position. Accordingly, at the time of switching from the reference position (second position P2), for example, to the next position (position S21 which is one step forward or position S23 which is one step backward), and from this next position (position S21 which is one step forward or position S23 which is one step backward) to a further next position (position S22 which is two steps forward or position S24 which is two steps backward), the tilting action of the opposing-side magnetic members TM (first opposing magnet T14 or third opposing magnet T34, second opposing magnet T24 or fourth opposing magnet T44) is stopped by the stopper portions 16 (16a or 16c, 16b or 16d) provided to each position. In a case of the operating member 11 being at the first position P1 (reference position), and switching from the reference position (first position P1) to, for example, the next position (forward position S11 or backward position S13), the tilting action of the opposing-side magnetic members TM (first opposing magnet T14 or third opposing magnet T34) is stopped by the stopper portions 16 (16a or 16c) provided to each position.

Accordingly, the movable-side magnetic members MM and opposing-side magnetic members TM are separated and distanced at each position (position S21 which is one step forward or forward position S11, position S22 which is two steps forward, position S23 which is one step backward or backward position S13, position S24 which is two steps backward), and the operator is provided with a sense of moderation due to the change from the strong attraction state to the weak attraction state thereby. Accordingly, the durability of the operating device 101 is better than the conventional example, since there is no sliding mechanism in the part generating the sense of moderation.

The operating device 101 according to the first embodiment of the present invention is suitably applied to the vehicular shift device 500 having the shift layout (shift pattern) illustrated in Fig. 5A. Accordingly, the positions of the operating device 101 (position S21 which is one step forward or forward position S11, position S22 which is two steps forward, second position P2 or first position P1, position S23 which is one step backward or backward position S13, and position S24 which is two steps backward) can be suitably applied to the shift layout (shift pattern) of the vehicular shift device 500, enabling shifting operations with a sense of moderation. Further, a vehicular shift device 500 with excellent durability can be provided, since there is no sliding mechanism in the part generating the sense of moderation. Moreover, the movable-side magnetic members MM and opposing-side magnetic members TM are all attracted and attached when the operating member 11 of the operating device 101 is at the reference position, so there is no slack at the shift knob 50N engaged with the operating member 11 when at the reference position even when driving, which is even more suitable for the vehicular shift device 500.

The advantages of the operating device 101 and vehicular shift device 500 according to the first embodiment of the present invention as described above can be summarized as follows. There are provided stopper portions 16 (16a, 16b, 16c, 16d) corresponding to the multiple positions to which the operating member 11 is moved by being tilted from the reference position. Accordingly, at the time of switching from the reference position (second position P2), for example, to the next position (position S21 which is one step forward or position S23 which is one step backward), and from this next position (position S21 which is one step forward or position S23 which is one step backward) to a further next position (position S22 which is two steps forward or position S24 which is two steps backward), the tilting action of the opposing-side magnetic members TM (first opposing magnet T14 or third opposing magnet T34, second opposing magnet T24 or fourth opposing magnet T44) is stopped by the stopper portions 16 (16a or 16c, 16b or 16d) provided to each position. Accordingly, the movable-side magnetic members MM and opposing-side magnetic members TM are separated and distanced at each position (position S21 which is one step forward, position S22 which is two steps forward, position S23 which is one step backward, and position S24 which is two steps backward), and the operator is provided with a sense of moderation due to the change from the strong attraction state to the weak attraction state thereby. Accordingly, the durability of the operating device 101 is better than the conventional example, since there is no sliding mechanism in the part generating the sense of moderation.

Also, the respective distances between the abutting portions TTp (TTp₁, TTp₂, TTp₃, TTp₄) provided to the opposing-side magnetic members TM (first opposing magnet T14, second opposing magnet T24, third opposing magnet T34, fourth opposing magnet T44) and the multiple stopper portions 16 (16a, 16b, 16c, 16d) are gradually changed, so at the time of the operating member 11 being operated to tilt in the tilting direction, the tilting action of the opposing-side magnetic members TM (first opposing magnet T14, second opposing magnet T24, third opposing magnet T34, and fourth opposing magnet T44) disposed facing the movable-side magnetic members MM (first movable magnet M14, second movable magnet M24, third movable magnet M34, and fourth movable magnet M44) can be stopped in the order of the first opposing magnet T14 and the second opposing magnet T24, or in the order of the third opposing magnet T34 and fourth opposing magnet T44, in the order of closer distance between the abutting portions TTp and stopper portion 16. Accordingly, the movable-side magnetic members MM and opposing-side magnetic members TM can be easily separated in accordance to each position (position S21 which is one step forward or forward position S11, position S22 which is two steps forward, position S23 which is one step backward or backward position S13, position S24 which is two steps backward), and the operating device 101 which imparts a sense of moderation can be easily manufactured.

Also, multiple stopper portions 16 are provided on the one end of the pair of support plates (12C₃ and 12C₄) supporting both ends of the tilting shafts (first tilting shafts) 12e, so the multiple stopper portions 16 can be easily formed simply by working the ends of the pair of support plates (12C₃ and 12C₄). Accordingly, the operating device 101 which imparts a sense of moderation can be manufactured even more easily.

Also, the movable-side magnetic members MM and opposing-side magnetic members TM are each disposed at positions where the attraction acting therebetween is not lost when the movable-side magnetic members MM and opposing-side magnetic members TM are separated. Accordingly, the attraction between the movable-side magnetic members MM and opposing-side magnetic members TM acts to attract again when the force of tilting operations by the user is removed. Thus, the operating member 11 can be automatically returned to the reference position without using pressing members for automatic return.

Also, the movable-side magnetic members MM and opposing-side magnetic members TM are all permanent magnets EM4, and each permanent magnet EM4 is covered by a yoke YM4, so strong force for detaching or attracting between the movable-side magnetic members MM and opposing-side magnetic members TM can easily be generated. Accordingly, the operator can be provided with a strong sense of operation and sense of moderation.

In the vehicular shift device 500 according to the first embodiment of the present invention, the positions of the operating device 101 (position S21 which is one step forward or forward position S11, position S22 which is two steps forward, second position P2 or first position P1, position S23 which is one step backward or backward position S13, and position S24 which is two steps backward) can be suitably applied to the shift layout (shift pattern) of the vehicular shift device 500. This enables shifting operations with a sense of moderation, and further a vehicular shift device 500 with excellent durability can be provided, since there is no sliding mechanism in the part generating the sense of moderation. Moreover, the movable-side magnetic members MM and opposing-side magnetic members TM are all attracted and attached when the operating member 11 of the operating device 101 is at the reference position, so there is no slack at the shift knob 50N engaged with the operating member 11 when at the reference position even when driving, which is even more suitable for the vehicular shift device 500.

### Second Embodiment

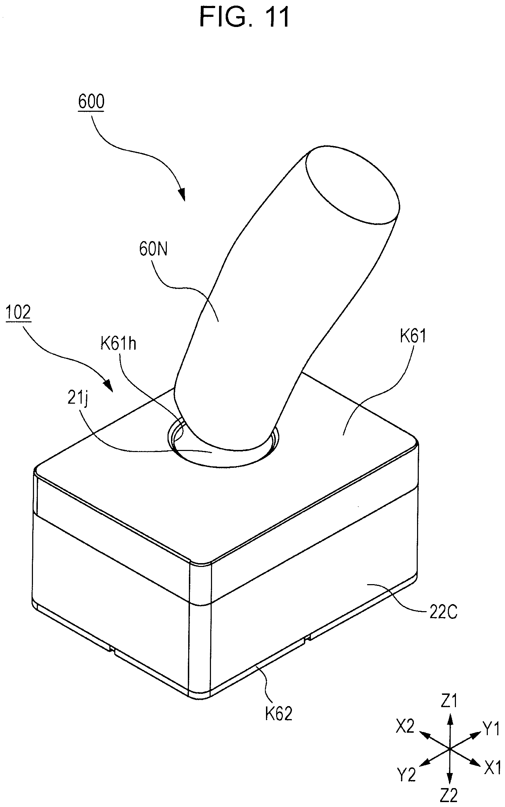

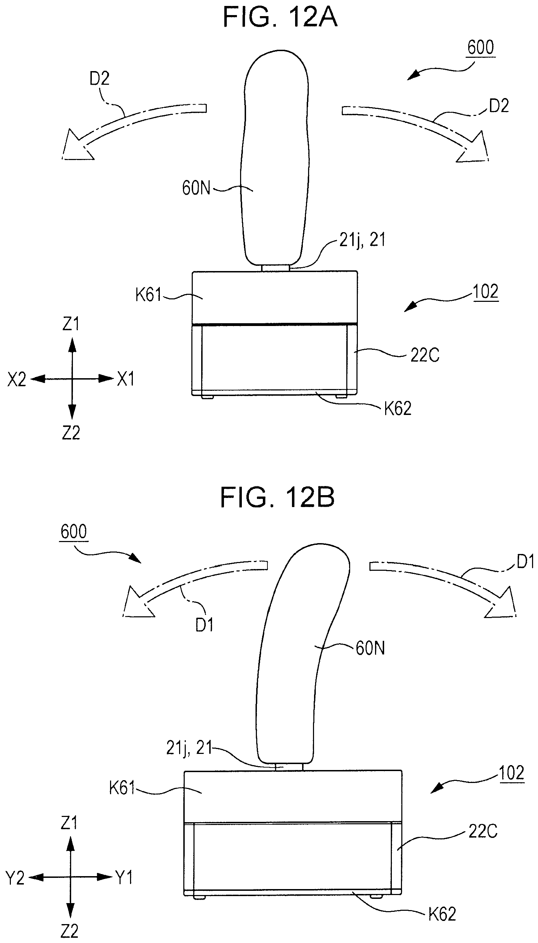

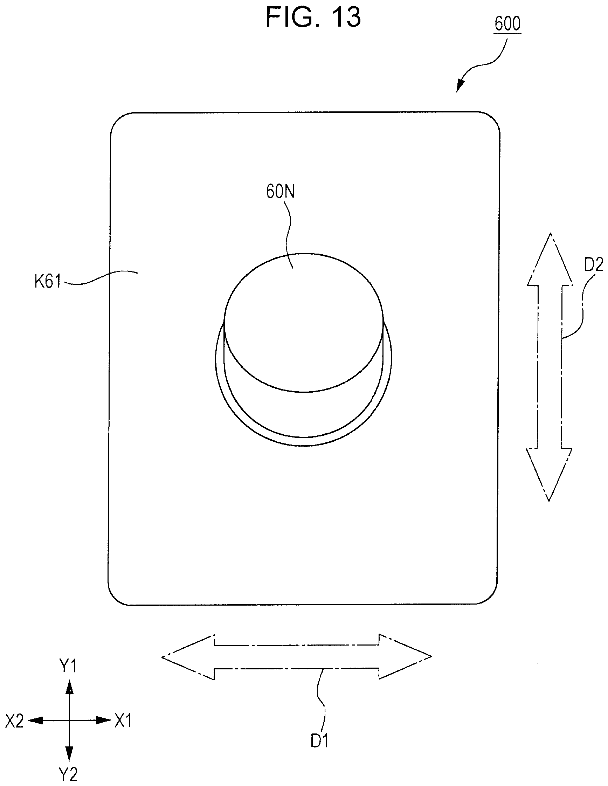

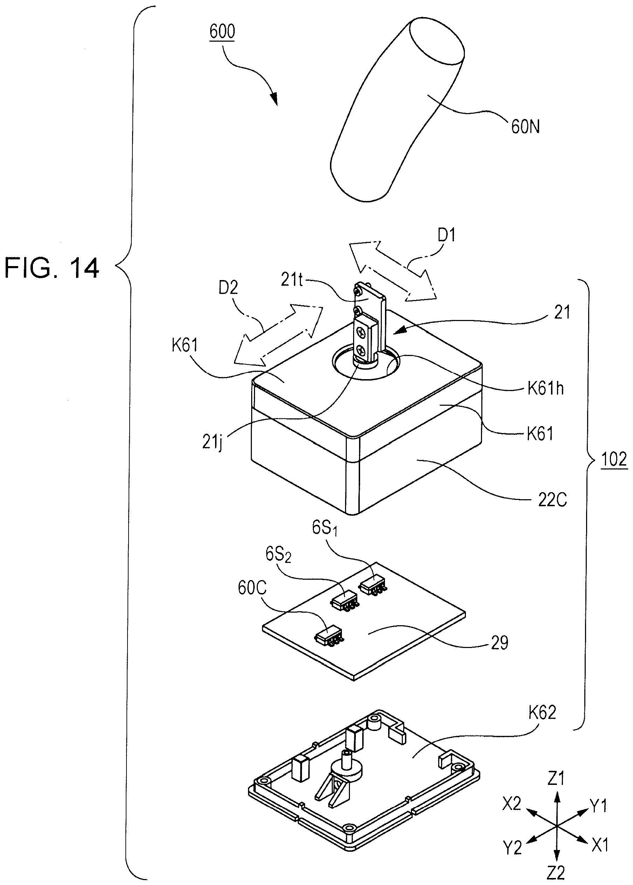

An operating device 102 and a vehicular shift device 600 using the operating device 102 will be described in a second embodiment of the present invention. First, the vehicular shift device 600 using the operating device 102 will be described. Fig. 11 is a perspective view describing the vehicular shift device 600 using the operating device 102 according to the second embodiment of the present invention. Figs. 12A and 12B are diagrams for describing the vehicular shift device 600 using the operating device 102 according to the second embodiment of the present invention, in which Fig. 12A is a frontal view from side Y2 in Fig. 11, and Fig. 12B is a frontal view from side X1 in Fig. 11. Fig. 13 is a top view from side Z1 in Fig. 11, for describing the vehicular shift device 600 using the operating device 102 according to the second embodiment of the present invention. Fig. 14 is a disassembled perspective view for describing the vehicular shift device 600 using the operating device 102 according to the second embodiment of the present invention. Fig. 14 illustrates an operating member 21 and supporting member 22 of the operating device 102. The external appearance of the vehicular shift device 600 according to the second embodiment differs from the vehicular shift device 500 according to the first embodiment.
Configurations which are the same as those in the first embodiment will be denoted with the same reference numerals, and detailed description will be omitted.

The vehicular shift device 600 using the operating device 102 according to the second embodiment of the present invention has an external appearance such as illustrated in Figs. 11 through 13, and is configured including a shift knob 60N to be gripped by an operator, the operating device 102 which can be operated in multiple directions due to the shift knob 60N being tilted by the operator, a control unit 60C which receives signals from the operating device 102 and transmits signals to vehicle-side equipment, and position detecting means (omitted from illustration) that detect multiple positions at which an operating member 21 of the operating device 102 is situated, as illustrated in Fig. 14. The vehicular shift device 600 also includes a box-shaped case K61 disposed so as to cover the upper face of the operating device 102, a cover K62 which covers the lower face of the operating device 102, and a wiring board 29 accommodated in the operating device 102, upon which the control unit 60C is mounted. The vehicular shift device 600 is used for shift operations for a vehicle, installed in the vehicle and being capable of being tilted by operation in a first direction D1 (X direction in Fig. 13) and a second direction D2 (Y direction in Fig. 13) which is orthogonal to the first direction D1.

The shift knob 60N of the vehicular shift device 600 is formed having a slender shape so as to be easily gripped by the operator, as illustrated in Fig. 14, and is engaged with an operating portion 21t of the operating member 21 of the operating device 102 illustrated in Fig. 14, so as to cover the operating portion 21t as illustrated in Figs. 11 through 13.

The control unit 60C of the vehicular shift device 600 is configured using an IC, and is mounted on the wiring board 29 accommodated in the operating device 102, as illustrated in Fig. 14. The control unit 60C is connected to vehicle-side equipment via an unshown connector, and upon a tilting operation being made of the shift knob 60N, receives position information signals corresponding to the operation and transmits these signals to the vehicle-side equipment. The vehicle side receives the position information signals and performs operations corresponding to the shift pattern, and also displays the position of the shift knob 60N in the shift pattern on a display unit provided to the instrument panel or the like.

The case K61 of the vehicular shift device 600 is fabricated by forming a synthetic resin, and is formed in a shape of a box, having the opening K61h where one face is opened, as illustrated in Fig. 14, so as to cover the upper face of the operating device 102. The operating portion 21t of the operating member 21 of the operating device 102 passes through the opening K61h so as to be exposed from the case K61, as illustrated in Fig. 14.

The cover K62 of the vehicular shift device 600 is fabricated by forming synthetic resin, and is formed in a plate shape covering the lower face of the operating device 102, as illustrated in Fig. 14. Multiple ribs are formed on the cover K62, with the wiring board 29 being supported and fixed by these ribs.

A printed wiring board is used for the wiring board 29 of the vehicular shift device 600, upon which the control unit 60C is mounted as described earlier. Although omitted from illustration, a flexible printed board is connected to the wiring board 29 for electrical connection with the position detecting means, and connectors for connection to external equipment also are mounted on the wiring board 29.

The position detecting means of the vehicular shift device 600 are mounted to the operating device 102, and accordingly will be described later along with description of the operating device 102.

The vehicular shift device 600 according to the second embodiment of the present invention is applied to a vehicle where control of the transmission is electronic, not a vehicle where the shift knob 60N is directly connected to the transmission and mechanical control is effected, which is the same as with the vehicular shift device 500 according to the first embodiment of the present invention. Accordingly, shifting of gears in this vehicle is performed just by information signals regarding shift positions transmitted from the operating device 102. The shift positions are displayed in the shift pattern displayed on the display unit provided to the aforementioned instrument panel or the like.

The vehicular shift device 600 also has the shift layout (shift pattern) illustrated in Fig. 5A, the same as with the vehicular shift device 500 according to the first embodiment, and shifting operations are performed in the same way as with the vehicular shift device 500 according to the first embodiment. Accordingly description of shifting operations of the vehicular shift device 600 will be omitted.

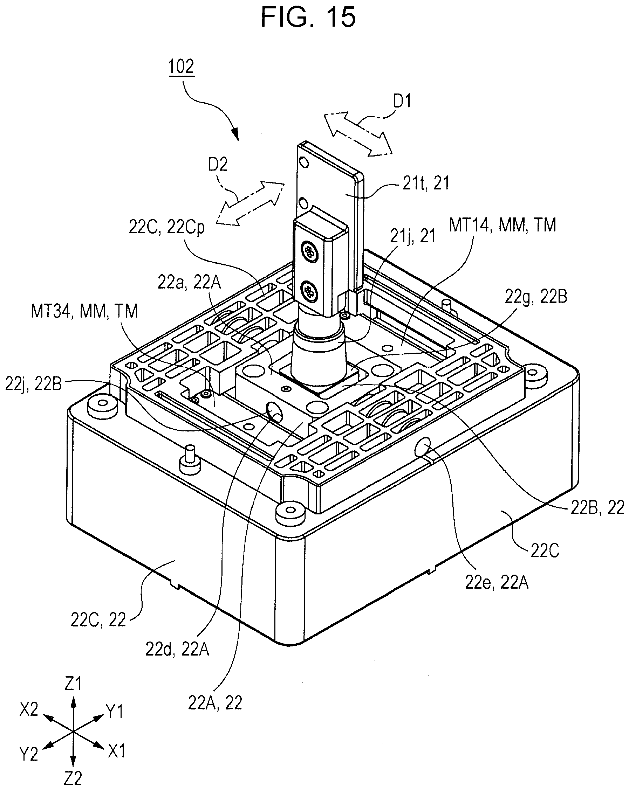

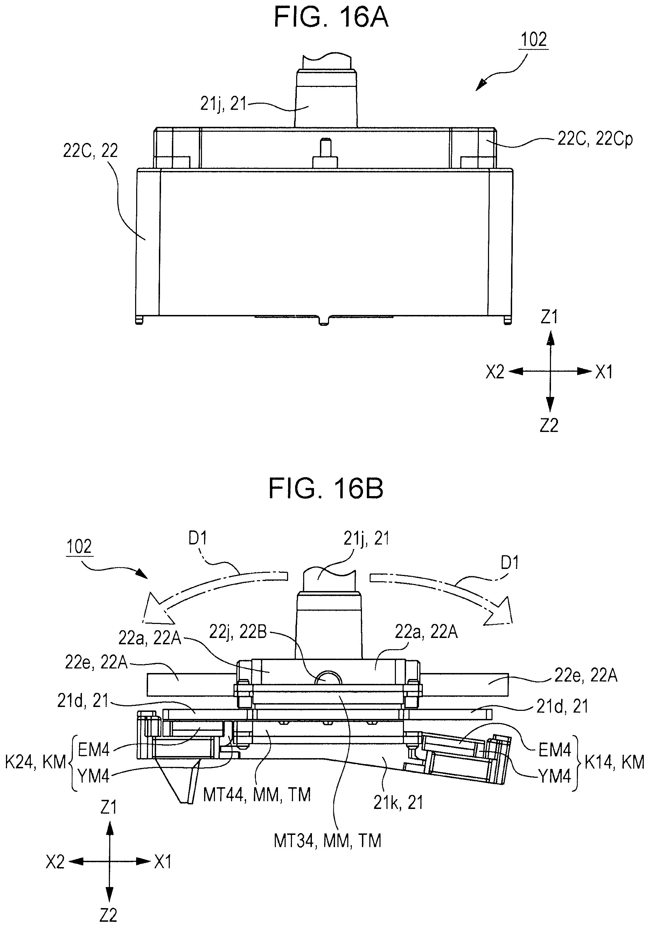

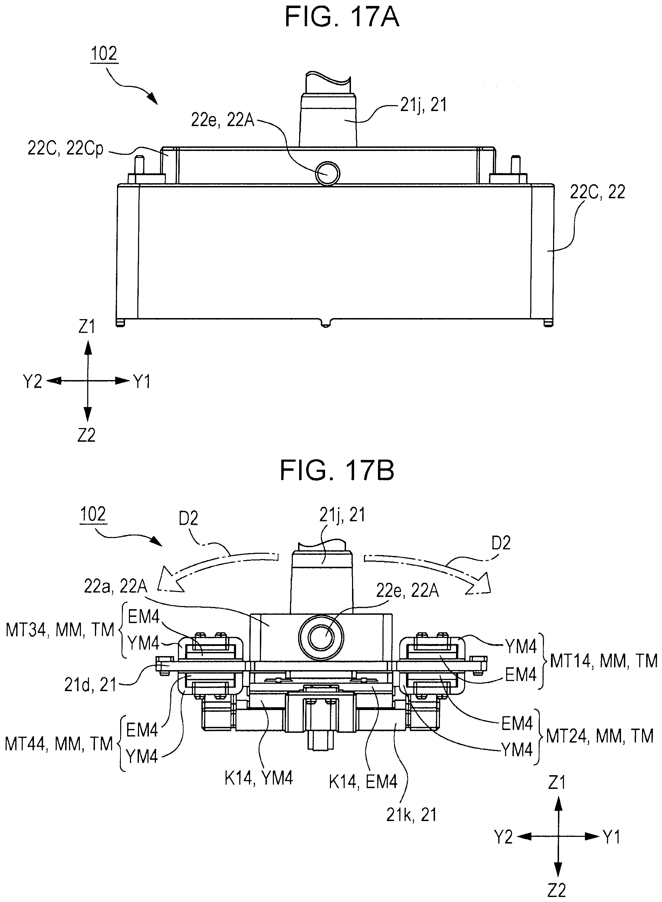

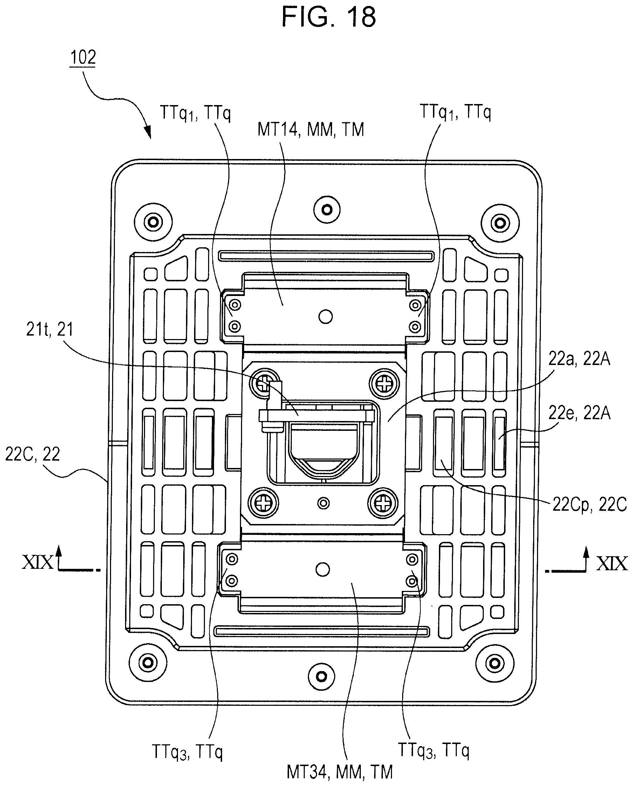

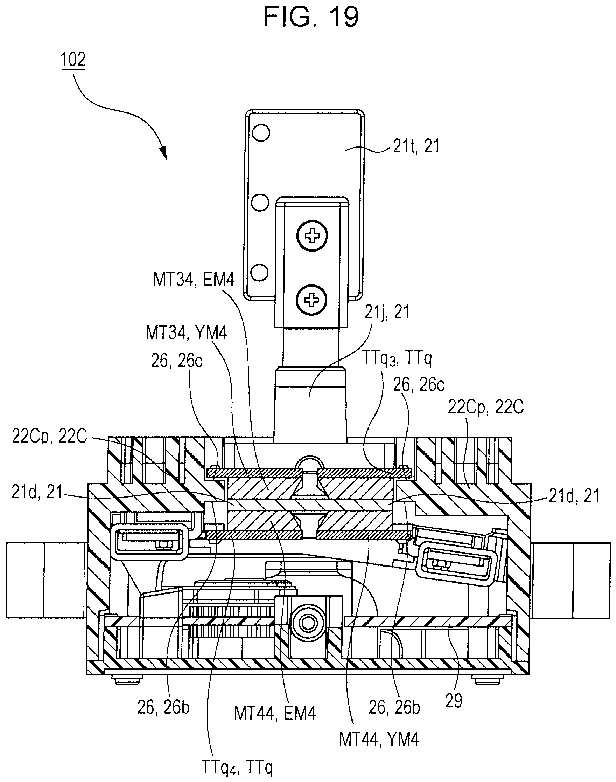

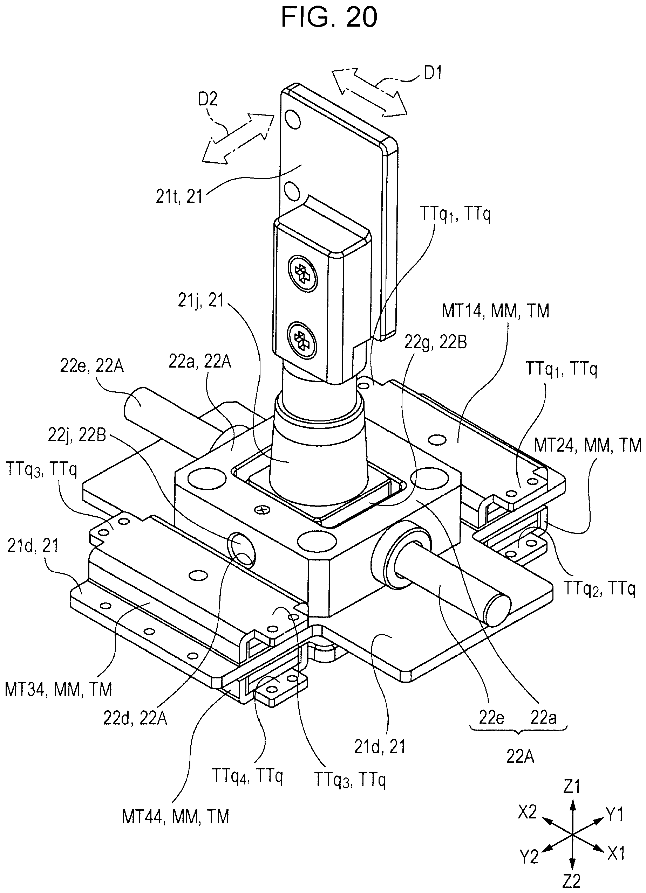

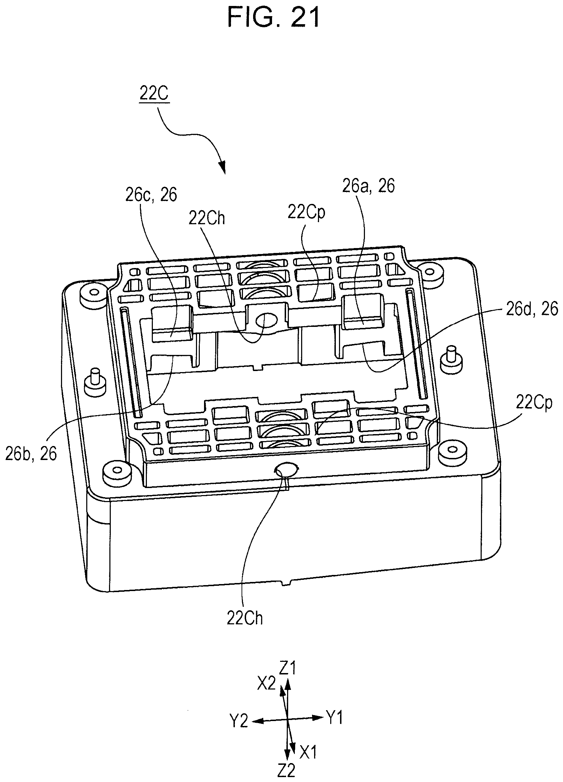

Next, the operating device 102 will be described. Fig. 15 is a perspective view for describing the operating device 102 according to the second embodiment of the present invention. The position detecting means have been omitted from Fig. 15 to facilitate description. Figs. 16A and 16B are diagrams for describing the operating device 102 according to the second embodiment of the present invention, in which Fig. 16A is a frontal view from side Y2 in Fig. 15, and Fig. 16B is a frontal view in which a frame 22C in Fig. 16A has been omitted from illustration. Figs. 17A and 17B are diagrams for describing the operating device 102 according to the second embodiment of the present invention, in which Fig. 17A is a side view from side X1 in Fig. 15, and Fig. 17B is a side view in which the frame 22C in Fig. 17A has been omitted from illustration. Note that Figs. 16A through 17B illustrate the operating member 21 at the second position P2. Fig. 18 is a top view from side Z1 in Fig. 15, for describing the operating device 102 according to the second embodiment of the present invention. Fig. 19 is a cross-sectional diagram taken along XIX-XIX in Fig. 18, for describing the operating device 102 according to the second embodiment of the present invention. Fig. 20 is a perspective view of movable-side magnetic members MM and opposing-side magnetic members TM. Fig. 21 is a perspective view of the frame 22C.

The operating device 102 according to the second embodiment of the present invention has an external appearance such as illustrated in Figs. 15, 16A, and 17A, and includes, as illustrated in Figs. 16A through 17B, the operating member 21 operable to be tilted under operations by the operator, a supporting member 22 which tiltably supports the operating member 21, multiple movable-side magnetic members MM exhibiting tilting action in the second direction D2 along with the operating member 21, multiple opposing-side magnetic members TM disposed facing the respective multiple movable-side magnetic members MM, and a stopper portion 26 (see Fig. 20) to stop tilting action of the opposing-side magnetic members TM. The operating device 102 also includes, as illustrated in Fig. 16B, multiple tilting-side magnetic members KM exhibiting tilting action in the first direction D1 (the X1 direction and X2 direction in Figs. 15 and 16B) along with the operating member 21. The operating device 102 is thus capable of operations in multiple directions, which are tilting actions in the first direction D1 where the operating member 21 moves between the first position P1 and second position P2, and the second direction D2 (the Y1 direction and Y2 direction in Figs. 15 and 17B) orthogonal to the first direction D1, upon tilting operations being performed by the operator.

The operating member 21 of the operating device 102 is fabricated by molding synthetic resin, and is configured including a cylindrical operating shaft 21j engaged to the supporting member 22 and extending in the perpendicular direction (the Z direction in Fig. 15), the operating portion 21t fastened to one end side of the operating shaft 21j by screws, and a plate-shaped base body 21d and plate-shaped base portion 21k which are provided to the other end side of the operating shaft 21j, extending along planes through which the axial center of the operating shaft 21j passes, as illustrated in Figs. 16B and 17B. The operating portion 21t of the operating member 21 is covered by the shift knob 60N of the vehicular shift device 600, as described earlier.

The base body 21d of the operating member 21 is formed of a soft magnetic substance and plate-shaped as illustrated in Figs. 16B and 17B, and is disposed between the operating shaft 21j and the base portion 21k. The base body 21d is configured to perform tilting actions in conjunction with tilting actions of the operating member 21 in the second direction D2 (Y direction in Fig. 17B). The base portion 21k is also configured to perform tilting actions in conjunction with tilting actions in the second direction D2.

The base portion 21k of the operating member 21 is plate-shaped, with the middle portion bent somewhat, such as illustrated in Fig. 16B. The base portion 21k is configured to perform tilting actions in conjunction with tilting actions of the operating member 21 in the first direction D1 (X direction in Fig. 16B).

The supporting member 22 of the operating device 102 is fabricated by molding synthetic resin, and is configured primarily including a first conjunction member 22A which turns according to tilting operations of the operating member 21, a second conjunction member 22B which turns according to tilting operations of the operating member 21, the axial line directions of the operating member 21 and the second conjunction member 22B being orthogonal, and a frame 22C which supports the second conjunction member 22B.

The first conjunction member 22A of the supporting member 22 is configured including an outer wall portion 22a formed having the shape of a square tube, and tilting shafts (first tilting shafts) 22e provided extending from each of a pair of opposing walls of the outer wall portion 22a, as illustrated in Figs. 15, 18, and 20. The tilting shafts 22e are inserted through holes 22Ch (see Fig. 21) provided to a pair of opposing side walls 22Cp of the frame 22C, when the operating device 102 is being assembled, so as to be turnably supported by the frame 22C. Accordingly, the first conjunction member 22A can turn on the tilting shafts 22e as the axial center, and the base body 21d of the operating member 21 can also turn.

Also, the second conjunction member 22B of the supporting member 22 is configured including a block-shaped base portion 22g, a linking portion (omitted from illustration) extending upwards from the base portion 22g, and second tilting shafts 22j provided passing through the base portion 22g. The second conjunction member 22B is inserted into a space defined by the side walls 22a of the first conjunction member 22A when assembling the operating device 102, with the second tilting shafts 22j inserted through holes 22d (see Fig. 20) formed in the pair of walls of the outer wall portion 22a, so as to turnably support the second conjunction member 22B by the first conjunction member 22A. The unshown linking portion is inserted to and engages the operating shaft 21j of the operating member 21. Accordingly, the supporting member 22 supports the operating member 21 so as to be capable of tilting actions, using the first conjunction member 22A, the second conjunction member 22B, and the frame 22C. Specifically, the operating member 21 can turn in the first direction D1 with the second tilting shafts 22j of the second conjunction member 22B as a turning axis, and the operating member 21 can turn in the second direction D2 with the tilting shafts (first tilting shafts) 22e of the first conjunction member 22A as a turning axis (axial center).

The tilting-side magnetic members KM of the operating device 102 are magnetic members made up of a permanent magnet EM4 and a yoke YM4 disposed so as to surround three faces of the permanent magnet EM4, as illustrated in Fig. 16B. The tilting-side magnetic members KM are configured as a combination of a first tilting magnet K14 which comes into contact or proximity with the base body 21d formed of a soft magnetic substance when the operating member 21 moves to the first position P1, and a second tilting magnet K24 which comes into contact or proximity with the base body 21d when the operating member 21 moves to the second position P2 (state in Fig. 16B). The first tilting magnet K14 and the second tilting magnet K24 of the tilting-side magnetic members KM are fixed to the base portion 21k of the operating member 21, so as to exhibit tilting action in conjunction with the tilting action of the operating member 21 in the first direction D1. The tilting-side magnetic members KM also are disposed having an orientation such that portions other than the faces of the permanent magnets EM4 which face the base body 21d are covered by the yokes YM4.

The movable-side magnetic members MM and opposing-side magnetic members TM disposed facing the opposing-side magnetic members TM of the operating device 102 are configured including a first magnetic member MT14 and second magnetic member MT24, and a third magnetic member MT34 and fourth magnetic member MT44, sandwiching the base body 21d as illustrated in Fig. 17B. The first magnetic member MT14 and second magnetic member MT24 are disposed on one side of the base body 21d (the Y1 side in Fig. 17B), and the third magnetic member MT34 and fourth magnetic member MT44 are disposed on the other side of the base body 21d (the Y2 side in Fig. 17B), across the tilting shafts (first tilting shafts) 22e. Note however, that in the second embodiment of the present invention, the movable-side magnetic members MM when the base body 21d is tilted to one side are used as opposing-side magnetic members TM when the base body 21d is tilted to the other side, and the opposing-side magnetic members TM when the base body 21d is tilted to one side are used as movable-side magnetic members MM when the base body 21d is tilted to the other side. Accordingly, the first magnetic member MT14, second magnetic member MT24, third magnetic member MT34, and fourth magnetic member MT44 become both movable-side magnetic members MM and opposing-side magnetic members TM, depending on the tilting operation of the operating member 21. This will be described again when describing the movement in the second direction D2.

Also, as illustrated in Fig. 17B, the movable-side magnetic members MM and opposing-side magnetic members TM are each magnetic members made up of a permanent magnet EM4 and a yoke YM4 disposed so as to surround three faces of the permanent magnet EM4 other than the portion where the movable-side magnetic members MM and opposing-side magnetic members TM face each other.

Also, the yokes TM4 of the movable-side magnetic members MM and the opposing-side magnetic members TM have protrusions formed extending in the longitudinal direction in Fig. 20 (the X direction in Fig. 20). These protrusions serve as abutting portions TTq abutting later-described stoppers 26 when the operating member 21 is tilted. That is to say, the first magnetic member MT14 is provided with an abutting portion TTq₁, the second magnetic member MT24 is provided with an abutting portion TTq₂, the third magnetic member MT34 is provided with an abutting portion TTq₃, and the fourth magnetic member MT44 is provided with an abutting portion TTq₄, on both sides.

Next, the stopper portion 26 of the operating device 102 is disposed as four portions (26a, 26b, 26c, and 26d) as to a pair of opposing side walls 22Cp of the frame 22C, as illustrated in Figs. 19 and 21. The stopper portions 26 are disposed across the tilting shafts (first tilting shafts) 22e, such that a stopper portion 26a and a stopper portion 26d are arrayed at the side where the operating member 21 exhibits tilting action in the Y1 direction (tilting direction), and such that a stopper portion 26b and a stopper portion 26c are arrayed at the side where the operating member 21 exhibits tilting action in the Y2 direction (tilting direction).

The stopper portion 26a and stopper portion 26c are provided at the same distance (same interval distance and height position) as to the holes 22Ch through which the tilting shafts (first tilting shafts) 22e are inserted, as illustrated in Fig. 21. In the same way, the stopper portion 26b and stopper portion 26d are provided at the same distance as to the holes 22Ch. When the operating member 21 is situated at the reference position (first position P1 or second position P2), the distance between the stopper portion 26a situated at the same height as the stopper portion 26c (see Fig. 21) and the abutting portion TTq (see Fig. 20 for TTq₁) is shorter than the distance between the stopper portion 26b and the abutting portion TTq (TTq₄), as illustrated in Fig. 19. In the same way, the distance between the stopper portion 26c and the abutting portion TTq (TTq₃) situated at the same height as the stopper portion 26b is shorter than the distance between the stopper portion 26d (see Fig. 21) and the abutting portion TTq (see Fig. 20 for TTq₂).

These stopper portions 26 are provided at each of multiple positions where the operating member 21 is positioned under tilting operations from the reference position by the operator, which will be described in detail in a later description of actions. That is to say, the stopper portion 26a corresponds to the forward position S11 and the position S21 which is one step forward in Fig. 5B, the stopper portion 26b corresponds to the position S22 which is two steps forward, the stopper portion 26c corresponds to the backward position S13 and the position S23 which is one step backward, and the stopper portion 26d corresponds to the position S24 which is two steps backward.

The position detecting means of the vehicular shift device 600 will now be described. A rotary potentiometer, configured including a board on which a resistor pattern is formed, and a wiper which slides over the resistor pattern, is used for the position detecting means. First position detecting means and second position detecting means are provided to the operating device 102. Specifically, the first position detecting means are engaged with the tilting shafts (first tilting shafts) 22e of the first conjunction member 22A, and the second position detecting means are engaged with the second tilting shafts 22j of the second conjunction member 22B, though not illustrated.

The first position detecting means are connected to a first signal processing unit 6S₁ (see Fig. 14) which processes signals from the first position detecting means, by a flexible printed board omitted from illustration. The first position detecting means detect the rotational angle of the tilting shafts (first tilting shafts) 22e, and the first signal processing unit 6S₁ mounted on the wiring board 29 detects movement of the operating member 21 from this rotational angle in the second direction D2. In the same way, the second position detecting means are also connected to a second signal processing unit 6S₂ (see Fig. 14) which processes signals from the second position detecting means, by a flexible printed board omitted from illustration. The second position detecting means detect the rotational angle of the second tilting shafts 22j, and the second signal processing unit 6S₂ mounted on the wiring board 29 detects movement of the operating member 21 from this rotational angle in the first direction D1.

The actions of the operating device 102 configured as described above will now be described. First, motion in the first direction D1, where the operating member 21 moves between the first position P1 and the second position P2, will be described with reference to Fig. 16B.

First, in a case where the operating member 21 is operated by being tilted by the operator in the X2 direction from the second position P2, which is a reference position illustrated in Fig. 16B, to the first position P1 which is a reference position, the soft-magnetic substance base body 21d and the tilting-side magnetic members KM are disposed facing each other, so the first tilting magnet K14 and the base body 21d attract each other. The operating member 21 remains at the first position P1 and the tilted state of the operating member 21 is maintained as it is. At the same time, the second tilting magnet K24 and the base body 21d which had been attracted at the second position P2 are separated, so the operator is provided with a sense of moderation due to the change from the strong attraction state to the weak attraction state.

Next, in a case where the operating member 21 is operated by being tilted by the operator in the X1 direction from the first position P1, which is a reference position, to the second position P2 which is a reference position (the state illustrated in Fig. 16B), the soft magnetic substance base body 21d and the tilting-side magnetic members KM are similarly disposed facing each other, so the second tilting magnet K24 and the base body 21d attract each other. The operating member 21 remains at the second position P2 and the tilted state of the operating member 21 is maintained as it is. At the same time, the first tilting magnet K14 and the base body 21d which had been attracted at the first position P1 are separated, so the operator is provided with a sense of moderation due to the change from the strong attraction state to the weak attraction state.

Thus, a strong attracting force can be generated by the permanent magnet EM4 and soft magnetic substance base body 21d, which are simple parts, and the operating member 21 can be easily fixed at the first position P1 and at the second position P2. Further, the permanent magnet EM4 is covered by the yoke YM4, so stronger attraction can be generated with a simple configuration.

Next, the movement in the second direction D2, which is different from the first direction D1, will be described with reference to Figs. 5 and 22A through 22E. Figs. 22A through 22E are schematic diagrams for describing operations of the operating device 102 according to the second embodiment of the present invention, in which Fig. 22A is a diagram illustrating a state at a reference position, Fig. 22B is a diagram illustrating a state tilted in the Y1 direction, Fig. 22C is a diagram illustrating a state tilted further in the Y1 direction, beyond the state illustrated in Fig. 22B, Fig. 22D is a diagram illustrating a state tilted in the Y2 direction, and Fig. 22E is a diagram illustrating a state tilted further in the Y2 direction, beyond the state illustrated in Fig. 22D.

Movement in the second direction D2 is performed tilting operation of the operating member 21 by the user, from the reference position at the first position P1 or second position P2 (see Fig. 5B). A case of moving with the second position P2 as the reference position will be described in detail here. Note that the movement in the second direction D2 with the first position P1 as the reference position is similar to the movement described below, and accordingly description thereof will be omitted.

First, in a case where the operating member 21 is at the reference position at the second position P2, the base body 21d of the operating member 21 is maintained parallel as to the Y direction, and parallel is also maintained for the multiple movable-side magnetic members MM and multiple opposing-side magnetic members TM attached to this base body 21d which is a soft magnetic substance, as illustrated in Fig. 22A.

Also, in a case where the operating member 21 is at the reference position (second position P2), an abutting portion TTq₁ of the first magnetic member MT14, an abutting portion TTq₂ of the second magnetic member MT24, an abutting portion TTq₃ of the third magnetic member MT34, and an abutting portion TTq₄ of the fourth magnetic member MT44, are separated from the four stopper portions 26 (26a, 26b, 26c, and 26d) provided to the frame 22C.

Next, upon the operator performing a tilting operation of the operating member 21 in the Y1 direction, the operating member 21 is turned on the tilting shafts (first tilting shafts) 22e, so as to be tilted from the reference position (second position P2) and be situated at the position S21 which is one step forward (see Fig. 5B). According to this turning, the base body 21d comes to exhibit tilting action in the Y1 direction, and is tilted to the position illustrated in Fig. 22B. At the time of the operating member 21 being situated at this position S21 which is one step forward, the abutting portion TTq₁ of the fixing plate TT4 of the first magnetic member MT14 comes into contact with the stopper portion 26a, so that the stopper portion 26a stops the tilting action of the first magnetic member MT14. On the other hand, the second magnetic member MT24 opposing the first magnetic member MT14 continues the tilting action, so the first magnetic member MT14 and second magnetic member MT24 which had been attracted at the second position P2 across the base body 21d are distanced by the first magnetic member MT14 being separated from the base body 21d. Accordingly, the user can feel a sense of moderation (a click) when moving from the second position P2 to the position S21 which is one step forward, due to the change from the strong attraction state to the weak attraction state.

Upon the operator continuing the tilting operation of the operating member 21 in the Y1 direction, the operating member 21 is further turned, so as to be tilted from the position S21 which is one step forward to the position S22 which is two steps forward (see Fig. 5B). According to this turning, the base body 21d further exhibits tilting action in the Y1 direction, and is tilted to the position illustrated in Fig. 22C. At the time of the operating member 21 being situated at this position S22 which is two steps forward, the abutting portion TTq₄ of the fourth magnetic member MT44 comes into contact with the stopper portion 26b, so that the stopper portion 26b stops the tilting action of the fourth magnetic member MT44. On the other hand, the third magnetic member MT34 opposing the fourth magnetic member MT44 continues the tilting action, so the fourth magnetic member MT44 and third magnetic member MT34 which had been attracted across the base body 21d at the first position P1 are distanced by the fourth magnetic member MT44 being separated from the base body 21d. Accordingly, the user can feel a sense of moderation (a click) when moving from the position S21 which is one step forward to the position S22 which is two steps forward, due to the change from the strong attraction state to the weak attraction state.

Here, in the tilting operation in the Y1 direction, the first magnetic member MT14 and fourth magnetic member MT44 are used as opposing-side magnetic members TM, and the second magnetic member MT24 and third magnetic member MT34 are used as movable-side magnetic members MM.

Thus, according to the second embodiment of the present invention, the stopper portion 26a and the stopper portion 26b are provided across the tilting shafts (first tilting shafts) 22e, so that the distance between the stopper portion 26a and the abutting portion TTq₁, and the distance between the stopper portion 26b and the abutting portion TTq₄, are different at the reference position illustrated in Fig. 22A. Accordingly, at the time of the operating member 21 being operated to tilt, the tilting action can be stopped of the opposing-side magnetic members TM (first magnetic member MT14 and fourth magnetic member MT44) disposed opposing the movable-side magnetic members MM (second magnetic member MT24 and third magnetic member MT34) can be stopped in order, according to the order of closer distance between the abutting portions TTq (TTq₁ and TTq₄) and stopper portions 26 (26a and 26b). Accordingly, the movable-side magnetic members MM and opposing-side magnetic members TM can be easily separated in accordance to each position (position S21 which is one step forward and a position S22 which is two steps forward).

Also, according to the second embodiment of the present invention, the opposing-side magnetic members TM and base body 21d are each disposed at positions where the attraction between the opposing-side magnetic members TM and the base body 21d is not lost at the time of the opposing-side magnetic members TM (first magnetic member MT14 and fourth magnetic member MT44) separating from the base body 21d, when tilting the operating member 21 in the Y1 direction as illustrated in Figs. 22B and 22C. Accordingly, the opposing-side magnetic members TM and base body 21d which had been separated at each position (position S21 which is one step forward and a position S22 which is two steps forward) acts to attract again when the tilting operation force of the operator is removed. Thus, the operating member 21 can be automatically returned to the reference position without using pressing members for automatic return.

Note that an arrangement may be made where the opposing-side magnetic members TM and base body 21d are disposed at positions where attraction acting between the opposing-side magnetic members TM and base body 21d is not eliminated in a case of the first magnetic member MT14 and base body 21d separating, or the fourth magnetic member MT44 and base body 21d separating. Thus, when the force of the user performing the tilting operation is removed, the fourth magnetic member MT44 and base body 21d are attached by attraction, and the first magnetic member MT14 and base body 21d are attached by attraction, in that order, so the operating member 21 can be automatically returned to the reference position without using pressing members for automatic return.

Also, according to the second embodiment of the present invention, the movable-side magnetic members MM and opposing-side magnetic members TM are permanent magnets EM4, and each permanent magnet EM4 is covered by a yoke YM4, so strong force for detaching or attracting between the movable-side magnetic members MM and opposing-side magnetic members TM can easily be generated. Accordingly, the operator can be provided with a strong sense of operation and sense of moderation.

Tilting operations in the Y2 direction by the operator are also performed similar to the above-described movement in the Y1 direction. That is to say, at the time of the operating member 21 being tilted from the reference position (second position P2) illustrated in Fig. 22A to be situated at the position S23 which is one step backward (see Fig. 5B), the abutting portion TTq₃ of the third magnetic member MT34 comes into contact with the stopper portion 26c, so that the stopper portion 26c stops the tilting action of the third magnetic member MT34. On the other hand, the tilting action of the fourth magnetic member MT44 continues (state illustrated in Fig. 22D). Accordingly, the third magnetic member MT34 and the fourth magnetic member MT44 which had been attracted to each other at the second position P2 across the base body 21d are distanced due to the third magnetic member MT34 being separated from the base body 21d, so the user can feel a sense of moderation (a click) when moving from the second position P2 to the position S23 which is one step backward, due to the change from the strong attraction state to the weak attraction state.

Upon the operator continuing the tilting operation of the operating member 21 in the Y2 direction, and the operating member 21 being tilted from the position S23 which is one step backward, so as to be situated at the position S24 which is two steps backward (see Fig. 5B), the abutting portion TTq₂ of the second magnetic member MT24 comes into contact with the stopper portion 26d, so that the stopper portion 26d stops the tilting action of the second magnetic member MT24. On the other hand, the tilting action of the first magnetic member MT14 continues (state illustrated in Fig. 22E). Accordingly, the second magnetic member MT24 and the first magnetic member MT14 which had been attracted to each other at the position S23 which is one step backward, across the base body 21d, are distanced due to the second magnetic member MT24 being separated from the base body 21d, so the user can similarly feel a sense of moderation (a click) also when moving from the position S23 which is one step backward to the position S24 which is two steps backward, due to the change from the strong attraction state to the weak attraction state.

Now, when performing a tilting operation in the Y2 direction, the first magnetic member MT14 and the fourth magnetic member MT44 are used as movable-side magnetic members MM, and the second magnetic member MT24 and third magnetic member MT34 are used as opposing-side magnetic members TM. Thus, according to the second embodiment of the present invention, the movable-side magnetic members MM and opposing-side magnetic members TM when the base body 21d of the operating member 21 is tilted in one direction (Y1 direction), switch roles to serve as opposing-side magnetic members TM and movable-side magnetic members MM when tilted in the other direction (Y2 direction). Thus, the number of movable-side magnetic members MM and opposing-side magnetic members TM can be halved. Accordingly, the operating device 102 imparting a sense of moderation can be fabricated not only easily but also inexpensively.

Also, the opposing-side magnetic members TM (second magnetic member MT24 and third magnetic member MT34) and base body 21d are also each disposed at positions where the attraction acting therebetween is not lost. Accordingly, the attraction between the opposing-side magnetic members TM and base body 21d at each position (position S23 which is one step backward and position S24 which is two steps backward) acts to attract again when the force of tilting operations by the user is removed. Thus, the operating member 21 can be automatically returned to the reference position without using pressing members for automatic return.

As described above, the operating device 102 according to the second embodiment of the present invention can perform tilting action in the second direction D2. There are provided stopper portions 26 (26a, 26b, 26c, 26d) corresponding to the multiple positions to which the operating member 21 is moved by being tilted from the reference position. Accordingly, at the time of switching from the reference position (second position P2), for example, to the next position (position S21 which is one step forward or position S23 which is one step backward), and from this next position (position S21 which is one step forward or position S23 which is one step backward) to a further next position (position S22 which is two steps forward or position S24 which is two steps backward), the tilting action of the opposing-side magnetic members TM (first magnetic member MT14 or third magnetic member MT34, fourth magnetic member MT44 or second magnetic member MT24) is stopped by the stopper portions 26 (26a or 26c, 26b or 26d) provided to each position. In a case of the operating member 21 being positioned at the first position P1 (reference position) and switching from the reference position (first position P1) to, for example, the next position (forward position S11 or backward position S13), the tilting action of the opposing-side magnetic members TM (first magnetic member MT14 or third magnetic member MT34) is stopped by the stopper portions 26 (26a or 26c) provided to each position.

Accordingly, the movable-side magnetic members MM or opposing-side magnetic members TM are separated from the base body 21d and distanced at each position (position S21 which is one step forward or forward position S11, position S22 which is two steps forward, position S23 which is one step backward or backward position S13, position S24 which is two steps backward), and the operator is provided with a sense of moderation due to the change from the strong attraction state to the weak attraction state thereby. Accordingly, the durability of the operating device 102 is better than the conventional example, since there is no sliding mechanism in the part generating the sense of moderation.

The operating device 102 according to the second embodiment of the present invention is suitably applied to the vehicular shift device 600 having the shift layout (shift pattern illustrated in Fig. 5A. Accordingly, the positions of the operating device 102 (position S21 which is one step forward or forward position S11, position S22 which is two steps forward, second position P2 or first position P1, position S23 which is one step backward or backward position S13, and position S24 which is two steps backward) can be suitably applied to the shift layout (shift pattern) of the vehicular shift device 600, enabling shifting operations with a sense of moderation. Further, a vehicular shift device 600 with excellent durability can be provided, since there is no sliding mechanism in the part generating the sense of moderation.

The advantages of the operating device 102 and vehicular shift device 600 according to the second embodiment of the present invention as described above can be summarized as follows. There are provided to the operating device 102 according to the present invention stopper portions 26 (26a, 26b, 26c, 26d) corresponding to the multiple positions to which the operating member 21 is moved by being tilted from the reference position. Accordingly, at the time of switching from the reference position (second position P2), for example, to the next position (position S21 which is one step forward or position S23 which is one step backward), and from this next position (position S21 which is one step forward or position S23 which is one step backward) to a further next position (position S22 which is two steps forward or position S24 which is two steps backward), the tilting action of the opposing-side magnetic members TM (first magnetic member MT14 or third magnetic member MT34, fourth magnetic member MT44 or second magnetic member MT24) is stopped by the stopper portions 26 (26a or 26c, 26b or 26d) provided to each position. Accordingly, the movable-side magnetic members MM or opposing-side magnetic members TM are separated and distanced at each position (position S21 which is one step forward, position S22 which is two steps forward, position S23 which is one step backward, and position S24 which is two steps backward), and the operator is provided with a sense of moderation due to the change from the strong attraction state to the weak attraction state thereby. Accordingly, the durability of the operating device 102 is better than the conventional example, since there is no sliding mechanism in the part generating the sense of moderation.

Also, the respective distances between the abutting portions TTq (TTq₁, TTq₂, TTq₃, TTq₄) provided across the tilting shafts (first tilting shafts) 22e and the multiple stopper portions 26 (26a, 26b, 26c, 26d) are not the same, so at the time of the operating member 21 being operated to tilt in the tilting direction, the tilting action of the multiple opposing-side magnetic members TM disposed facing the movable-side magnetic members MM can be stopped in the order of closer distance between the abutting portion TTq and stopper portion 26. Accordingly, the movable-side magnetic members MM and opposing-side magnetic members TM can be easily separated in accordance to each position (position S21 which is one step forward or forward position S11, position S22 which is two steps forward, position S23 which is one step backward or backward position S13, position S24 which is two steps backward), and the operating device 102 which imparts a sense of moderation can be easily manufactured.

The movable-side magnetic members MM and opposing-side magnetic members TM when the base body 21d of the operating member 21 is tilted in one direction (Y1 direction), switch roles to serve as opposing-side magnetic members TM and movable-side magnetic members MM when tilted in the other direction (Y2 direction). Thus, the number of movable-side magnetic members MM and opposing-side magnetic members TM can be halved. Accordingly, the operating device 102 imparting a sense of moderation can be fabricated not only easily but also inexpensively.

Also, the opposing-side magnetic members TM and base body 21d are each disposed at positions where the attraction acting therebetween is not lost when the opposing-side magnetic members TM and base body 21d are separated. Accordingly, the attraction between the opposing-side magnetic members TM and base body 21d acts to attract again when the force of tilting operations by the user is removed. Thus, the operating member 21 can be automatically returned to the reference position without using pressing members for automatic return.

Also, the movable-side magnetic members MM and opposing-side magnetic members TM are permanent magnets EM4, and each permanent magnet EM4 is covered by a yoke YM4, so strong force for detaching or attracting between the movable-side magnetic members MM and opposing-side magnetic members TM can easily be generated. Accordingly, the operator can be provided with a strong sense of operation and sense of moderation.

In the vehicular shift device 600 according to the second embodiment of the present invention, the positions of the operating device 102 (position S21 which is one step forward or forward position S11, position S22 which is two steps forward, second position P2 or first position P1, position S23 which is one step backward or backward position S13, and position S24 which is two steps backward) can be suitably applied to the shift layout (shift pattern) of the vehicular shift device 600. This enables shifting operations with a sense of moderation, and further a vehicular shift device 600 with excellent durability can be provided, since there is no sliding mechanism in the part generating the sense of moderation.

### Third Embodiment

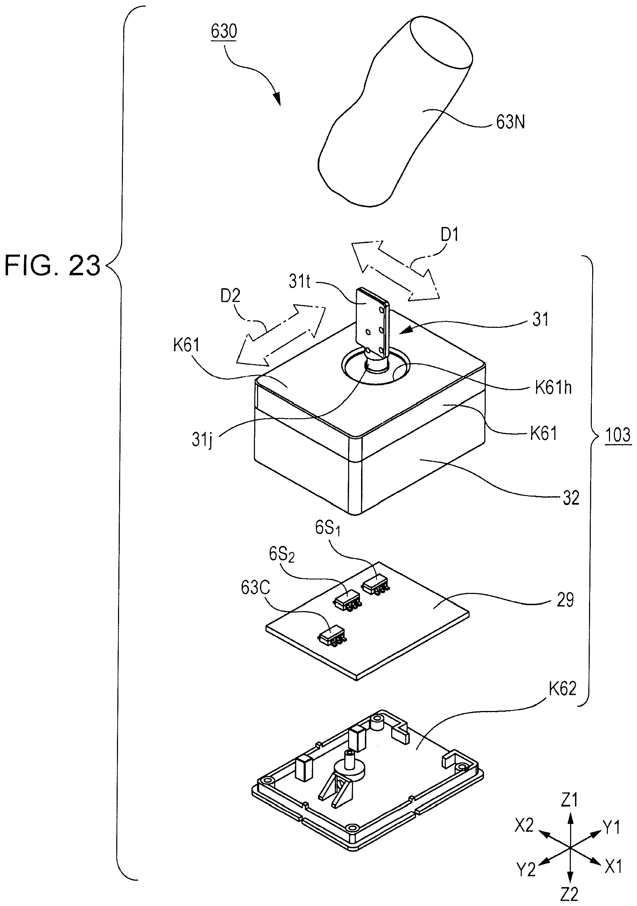

An operating device 103 and a vehicular shift device 630 using the operating device 103 will be described in a third embodiment of the present invention. First, the vehicular shift device 630 using the operating device 103 will be described. Fig. 23 is a disassembled perspective view for describing a vehicular shift device 630 using an operating device 103 according to a third embodiment of the present invention. Fig. 23 illustrates an operating member 31 and a supporting member 32 of the operating device 103. The external appearance of the vehicular shift device 630 according to the third embodiment differs from the vehicular shift devices (500 and 600) according to the first and second embodiments. Configurations which are the same as those in the first and second embodiments will be denoted with the same reference numerals, and detailed description will be omitted.

The vehicular shift device 630 using the operating device 103 according to the third embodiment of the present invention has an external appearance similar to the second embodiment, and as illustrated in Fig. 23, is configured including a shift knob 63N to be gripped by an operator, the operating device 103 which can be operated in multiple directions due to the shift knob 63N being tilted by the operator, a control unit 63C which receives signals from the operating device 103 and transmits signals to vehicle-side equipment, and position detecting means (omitted from illustration) that detect multiple positions at which an operating member 31 of the operating device 103 is situated. The vehicular shift device 630 also includes a box-shaped case K61 disposed so as to cover the upper face of the operating device 103, a cover K62 which covers the lower face of the operating device 103, and a wiring board 29 accommodated in the operating device 103, upon which the control unit 63C is mounted. The vehicular shift device 630 is used for shift operations for a vehicle, installed in the vehicle and being capable of being tilted by operation in a first direction D1 (X direction in Fig. 23) and a second direction D2 (Y direction in Fig. 23) which is orthogonal to the first direction D1.

The shift knob 63N of the vehicular shift device 630 is formed having a slender shape so as to be easily gripped by the operator, as illustrated in Fig. 23, and is engaged with an operating portion 31t of the operating member 31 of the operating device 103 so as to cover the operating portion 31t as illustrated in Fig. 23.

The control unit 63C of the vehicular shift device 630 is configured using an IC, and is mounted on the wiring board 29 accommodated in the operating device 103, as illustrated in Fig. 23. The control unit 63C is connected to vehicle-side equipment via an unshown connector, and upon a tilting operation being made of the shift knob 63N, receives position information signals corresponding to the operation and transmits these signals to the vehicle-side equipment. The vehicle side receives the position information signals and performs operations corresponding to the shift pattern, and also displays the position of the shift knob 63N in the shift pattern on a display unit provided to the instrument panel or the like.

The case K61 and cover K62 of the vehicular shift device 630 are of similar material and configuration as in the second embodiment, so detailed description thereof will be omitted. The wiring board 29 of the vehicular shift device 630 also is of similar material and configuration as in the second embodiment, so detailed description thereof will be omitted. Note that the position detecting means of the vehicular shift device 630 are mounted to the operating device 103, and accordingly will be described later along with description of the operating device 103.

The vehicular shift device 630 according to the third embodiment of the present invention, thus configured, is applied to a vehicle where control of the transmission is electronic, not a vehicle where the shift knob 63N is directly connected to the transmission and mechanical control is effected, which is the same as with the vehicular shift device 600 according to the second embodiment of the present invention. Accordingly, shifting of gears in this vehicle is performed just by information signals regarding shift positions transmitted from the operating device 103. The shift positions are displayed in the shift pattern displayed on the display unit provided to the aforementioned instrument panel or the like.

The vehicular shift device 630 also has the shift layout (shift pattern) illustrated in Fig. 5A, the same as with the vehicular shift device 500 according to the first embodiment, and shifting operations are performed in the same way as with the vehicular shift device 500 according to the first embodiment. Accordingly description of shifting operations of the vehicular shift device 630 will be omitted.

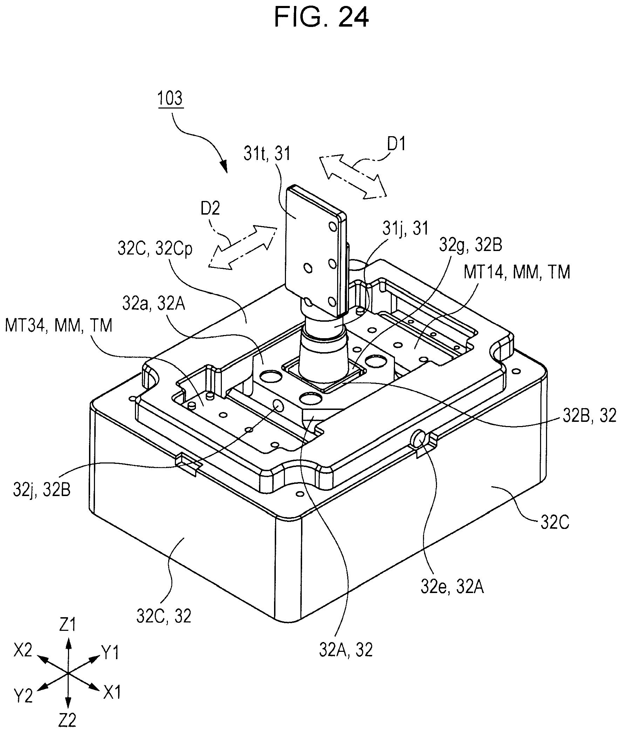

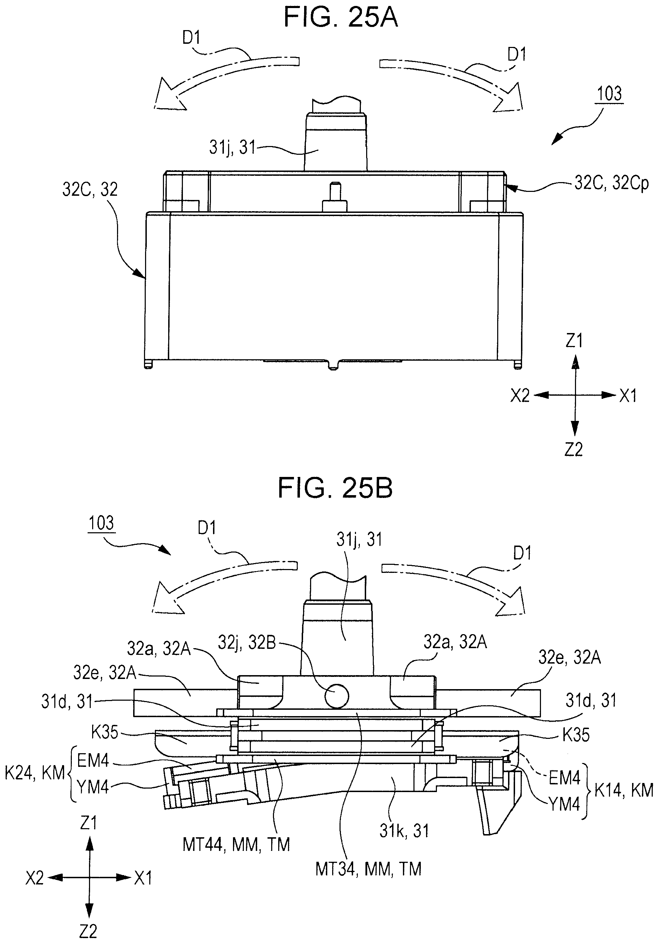

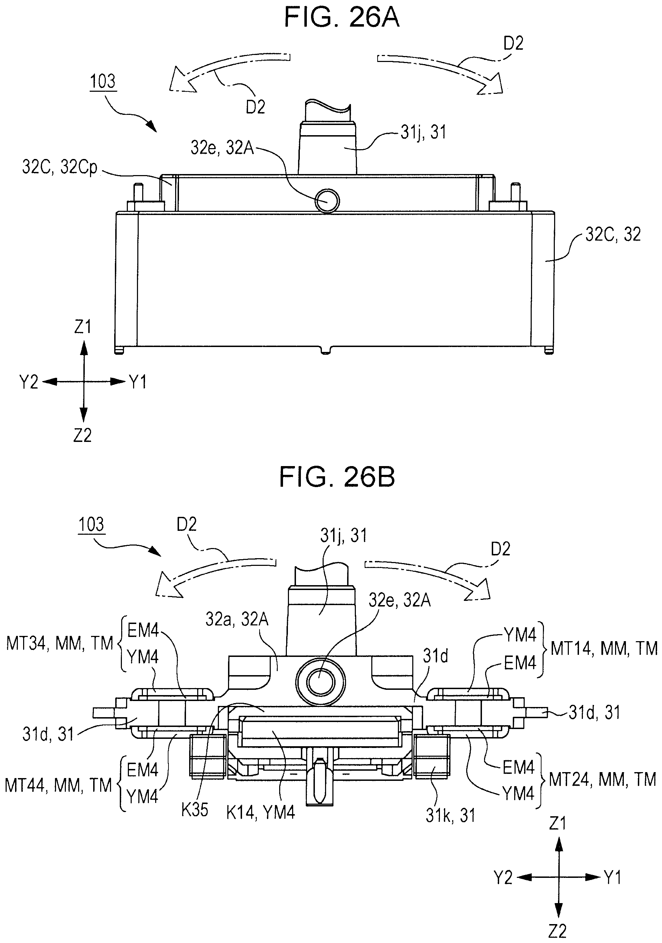

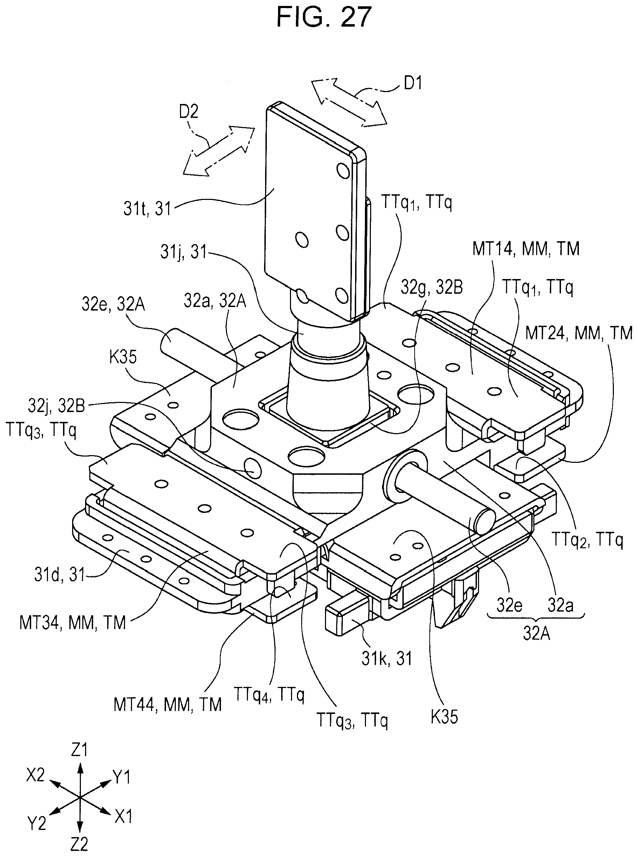

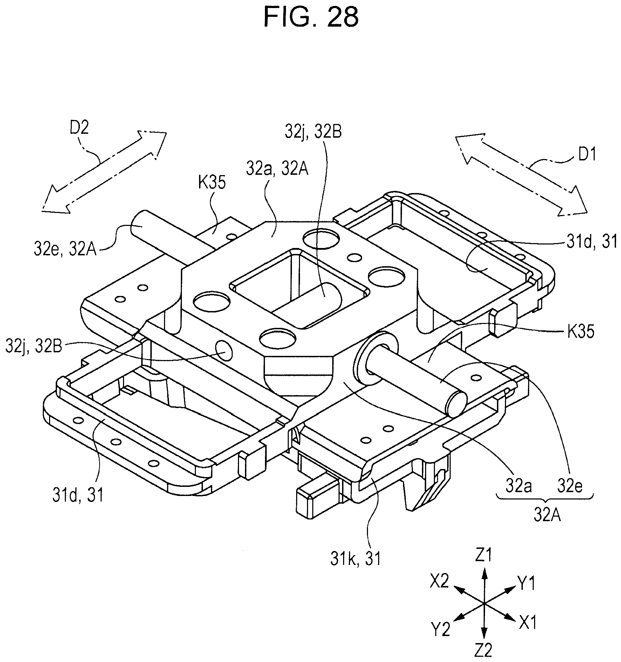

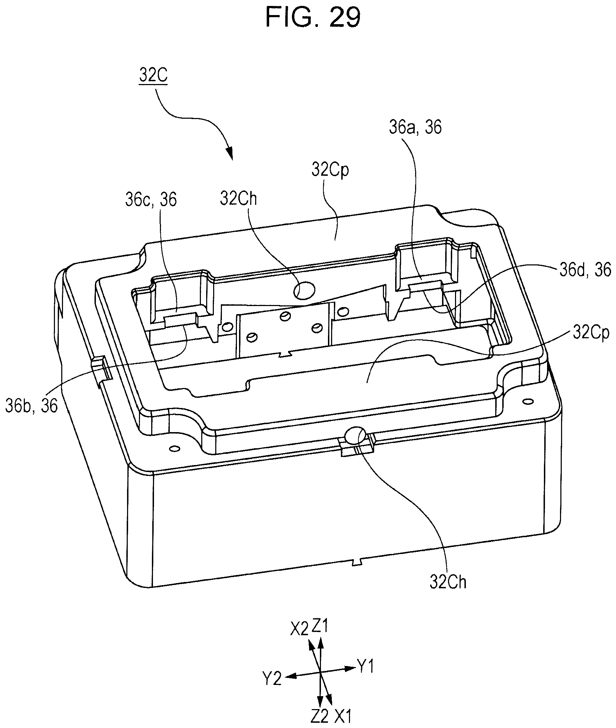

Next, the operating device 103 will be described. Fig. 24 is a perspective view for describing the operating device 103 according to the third embodiment of the present invention, from which illustration of position detecting means has been omitted to facilitate description. Figs. 25A and 25B are diagrams for describing the operating device 103 according to the third embodiment of the present invention, in which Fig. 25A is a frontal view from side Y2 in Fig. 24, and Fig. 25B is a frontal view in which the frame 32C in Fig. 25A has been omitted from illustration. Figs. 26A and 26B are diagrams for describing the operating device 103 according to the third embodiment of the present invention, in which Fig. 26A is a side view from side X1 in Fig. 23, and Fig. 26B is a side view in which the frame 32C in Fig. 26A has been omitted from illustration. Note that Figs. 25A through 26B illustrate the operating member 31 at the second position P2. Fig. 27 is a perspective view of movable-side magnetic members MM and opposing-side magnetic members TM. Fig. 28 is a perspective view omitting illustration of the movable-side magnetic members MM, opposing-side magnetic members TM, tilting-side magnetic members KM, second conjunction member 32B, operating member 31t, and operating shaft 31j in Fig. 27. Fig. 29 is a perspective view of the frame 32C.

In the same way as with the second embodiment, the operating device 103 according to the third embodiment of the present invention has an external appearance such as illustrated in Figs. 24, 25A, and 26A, and includes, as illustrated in Figs. 25A through 26B, the operating member 31 operable to be tilted under operations by the operator, a supporting member 32 which tiltably supports the operating member 31, multiple movable-side magnetic members MM exhibiting tilting action in the second direction D2 along with the operating member 31, multiple opposing-side magnetic members TM disposed facing the respective multiple movable-side magnetic members MM, and a stopper portion 36 (see Fig. 29) to stop tilting action of the opposing-side magnetic members TM. The operating device 103 also includes, as illustrated in Fig. 25B, multiple tilting-side magnetic members KM exhibiting tilting action in the first direction D1 (the X1 direction and X2 direction in Figs. 24 and 25B) along with the operating member 31, and a tilting-side base body K35 disposed facing the tilting-side magnetic members KM. The operating device 103 is thus capable of operations in multiple directions, which are tilting actions in the first direction D1 where the operating member 31 moves between the first position P1 and second position P2, and the second direction D2 (the Y1 direction and Y2 direction in Figs. 24 and 26B) orthogonal to the first direction D1, upon tilting operations being performed by the operator.

In the same way as with the second embodiment, the operating member 31 of the operating device 103 is fabricated by molding synthetic resin, and is configured including a cylindrical operating shaft 31j engaged to the supporting member 32 and extending in the perpendicular direction (the Z direction in Fig. 24), the operating portion 31t fastened to one end side of the operating shaft 31j by screws, and a plate-shaped base body 31d and plate-shaped base portion 31k which are provided to the other end side of the operating shaft 31j, extending along planes through which the axial center of the operating shaft 31j passes, as illustrated in Figs. 25B and 26B. The operating portion 31t of the operating member 31 is covered by the shift knob 63N of the vehicular shift device 630, as described earlier.

The base body 31d of the operating member 31 is formed of a non-magnetic substance, and as illustrated in Fig. 28 has a shape of two frames across the operating shaft 31j (see Fig. 27) in the left and right directions (Y1 direction and Y2 direction in Fig. 28), formed integrally with a later-described first conjunction member 32A. The base body 31d integrally formed with the first conjunction member 32A is configured to perform tilting actions in conjunction with tilting actions of the operating member 31 in the second direction D2 (Y direction in Fig. 28). The base portion 31k is also configured to perform tilting actions in conjunction with tilting actions in the second direction D2.

The base portion 31k of the operating member 31 is plate-shaped, with the middle portion bent somewhat, such as illustrated in Fig. 25B. The base portion 31k is configured to perform tilting actions in conjunction with tilting actions of the operating member 31 in the first direction D1 (X direction in Fig. 25B).

In the same way as with the second embodiment, supporting member 32 of the operating device 103 is fabricated by molding synthetic resin, and is configured primarily including the first conjunction member 32A which turns according to tilting operations of the operating member 31, the second conjunction member 32B which turns according to tilting operations of the operating member 31, the axial line directions of the operating member 31 and the second conjunction member 32B being orthogonal, and a frame 32C which supports the second conjunction member 32B, as illustrated in Fig. 24.

The first conjunction member 32A of the supporting member 32 is configured including an outer wall portion 32a formed having the shape of a square tube, and tilting shafts (first tilting shafts) 32e provided extending from each of a pair of opposing walls of the outer wall portion 32a, as illustrated in Figs. 24, 27, and 28. The tilting shafts 32e are inserted through holes 32Ch (see Fig. 29) provided to a pair of opposing side walls 32Cp of the frame 32C, when the operating device 103 is being assembled, so as to be turnably supported by the frame 32C. Accordingly, the first conjunction member 32A can turn on the tilting shafts 32e as the axial center, and the base body 31d integrally formed with the first conjunction member 32A can also turn on the tilting shafts 32e as the axial center.

Also, the second conjunction member 32B of the supporting member 32 is configured including a block-shaped base portion 32g, a linking portion (omitted from illustration) extending upwards from the base portion 32g, and second tilting shafts 32j provided passing through the base portion 32g, as illustrated in Fig. 24. The second conjunction member 32B is inserted into a space defined by the side walls 32a of the first conjunction member 32A when assembling the operating device 103, with the second tilting shafts 32j inserted through holes formed in the pair of walls of the outer wall portion 32a, so as to turnably support the second conjunction member 32B by the first conjunction member 32A. The unshown linking portion is inserted to and engages the operating shaft 31j of the operating member 31. Accordingly, the supporting member 32 supports the operating member 31 so as to be capable of tilting actions, using the first conjunction member 32A, the second conjunction member 32B, and the frame 32C. Specifically, the operating member 31 can turn in the first direction D1 with the second tilting shafts 32j of the second conjunction member 32B as a turning axis, and the operating member 31 can turn in the second direction D2 with the tilting shafts (first tilting shafts) 32e of the first conjunction member 32A as a turning axis (axial center).

The tilting-side magnetic members KM of the operating device 103 are magnetic members made up of a permanent magnet EM4 and a yoke YM4 disposed so as to surround three faces of the permanent magnet EM4, in the same way as with the second embodiment, as illustrated in Fig. 25B. The tilting-side magnetic members KM are configured as a combination of a first tilting magnet K14 which comes into contact or proximity with the tilting-side base body K35 when the operating member 31 moves to the first position P1 (state illustrated in Fig. 25B), and a second tilting magnet K24 which comes into contact or proximity with the tilting-side base body K35 when the operating member 31 moves to the second position P2. The first tilting magnet K14 and the second tilting magnet K24 of the tilting-side magnetic members KM are fixed to the base portion 31k of the operating member 31, so as to exhibit tilting action in conjunction with the tilting action of the operating member 31 in the first direction D1. The tilting-side magnetic members KM also are disposed having an orientation such that portions other than the faces of the permanent magnets EM4 which face the tilting-side base body K35 are covered by the yokes YM4.

The tilting-side base body K35 is formed of a soft magnetic substance such as iron or the like, and has a plate shape longitudinally extending in the first direction D1, as illustrated in Figs. 27 and 28. The ends in the lateral direction (the Y direction in Fig. 27) are bent downwards (Z2 direction in Fig. 27). The tilting-side magnetic members KM are disposed on both ends of the tilting-side base body K35 in the longitudinal direction thereof (X direction in Fig. 27). The tilting-side base body K35 is engaged with the base body 31d of the operating member 31, so as to be capable of turning in the second direction D2 with tilting shafts (first tilting shafts) 32e of the first conjunction member 32A as the turning axis (axial center).

The movable-side magnetic members MM and opposing-side magnetic members TM of the operating device 103 are configured including a first magnetic member MT14 and second magnetic member MT24, and a third magnetic member MT34 and fourth magnetic member MT44, sandwiching the base body 31d as illustrated in Fig. 26B. The first magnetic member MT14 and second magnetic member MT24 are disposed on one side of the base body 31d (the Y1 direction in Fig. 26B), and the third magnetic member MT34 and fourth magnetic member MT44 are disposed on the other side of the base body 31d (the Y2 direction in Fig. 26B), across the tilting shafts (first tilting shafts) 32e. Note however, that in the third embodiment of the present invention, the movable-side magnetic members MM when the base body 31d is tilted to one side are used as opposing-side magnetic members TM when the base body 31d is tilted to the other side, and the opposing-side magnetic members TM when the base body 31d is tilted to one side are used as movable-side magnetic members MM when the base body 31d is tilted to the other side. Accordingly, the first magnetic member MT14, second magnetic member MT24, third magnetic member MT34, and fourth magnetic member MT44 become both movable-side magnetic members MM and opposing-side magnetic members TM, depending on the tilting operation of the operating member 31.

According to the third embodiment of the present invention, the movable-side magnetic members MM and opposing-side magnetic members TM are each disposed at positions where the attraction between the movable-side magnetic members MM and the opposing-side magnetic members TM is not lost at the time of the movable-side magnetic members MM (second magnetic member MT24 and third magnetic member MT34) and the opposing-side magnetic members TM (first magnetic member MT14 and fourth magnetic member MT44) separating when tilting the operating member 31, in the same way as with the second embodiment. Accordingly, the movable-side magnetic members MM and opposing-side magnetic members TM at each position (position S21 which is one step forward and position S22 which is two steps forward) acts to attract again when the tilting operation force of the operator is removed. Thus, the operating member 31 can be automatically returned to the reference position without using pressing members for automatic return.

Also, as illustrated in Fig. 26B, the movable-side magnetic members MM and opposing-side magnetic members TM are each magnetic members made up of a permanent magnet EM4 and a yoke YM4 disposed so as to surround three faces of the permanent magnet EM4 other than the portion where the movable-side magnetic members MM and opposing-side magnetic members TM face each other.

However, unlike the second embodiment, in the third embodiment of the present invention the first magnetic member MT14 and second magnetic member MT24, and the third magnetic member MT34 and fourth magnetic member MT44, are partially accommodated within the frame shape of the base body 31d on one side or the other side, and are disposed facing each other so as to attract each other, with a small space therebetween. Accordingly, the attraction between the movable-side magnetic members MM which are permanent magnets EM4 and the opposing-side magnetic members TM which are permanent magnets EM4 can be increased, and powerful attraction can be generated using small permanent magnets. Accordingly, the size of the operating device 103 can be reduced, and an inexpensive operating device 103 can be provided.

Further, the combination of permanent magnets EM4 and permanent magnets EM4 has a gentler reduction in attraction when separating, as compared to a case of a permanent magnet and a soft magnetic substance. Accordingly, sudden clicking sensations can be avoided.

Also, the yokes TM4 of the movable-side magnetic members MM and the opposing-side magnetic members TM have protrusions formed extending in the longitudinal direction of the yoke YM4 in Fig. 27 (the X direction in Fig. 27). These protrusions serve as abutting portions TTq abutting later-described stopper portions 36 when the operating member 31 is tilted. That is to say, the first magnetic member MT14 is provided with an abutting portion TTq₁ the second magnetic member MT24 is provided with an abutting portion TTq₂, the third magnetic member MT34 is provided with an abutting portion TTq₃, and the fourth magnetic member MT44 is provided with an abutting portion TTq₄, on both sides.

Next, the stopper portion 36 of the operating device 103 is disposed as four stopper portions 36 (36a, 36b, 36c, and 36d) as to a pair of opposing side walls 32Cp of the frame 32C as illustrated in Fig. 29, in the same way as with the second embodiment. The stopper portions 36 are disposed across the tilting shafts (first tilting shafts) 32e, such that a stopper portion 36a and a stopper portion 36d are arrayed at the side where the operating member 31 exhibits tilting action in the Y1 direction (tilting direction), and such that a stopper portion 36b and a stopper portion 36c are arrayed at the side where the operating member 31 exhibits tilting action in the Y2 direction (tilting direction).

The stopper portion 36a and stopper portion 36c are provided at the same distance (same interval distance and height position) as to the holes 32Ch through which the tilting shafts (first tilting shafts) 32e are inserted, as illustrated in Fig. 29. In the same way, the stopper portion 36b and stopper portion 36d are provided at the same distance as to the holes 32Ch. When the operating member 31 is situated at the reference position (first position P1 or second position P2), the distance between the stopper portion 36a situated at the same height as the stopper portion 36c and the abutting portion TTq (abutting portion TTq₁) is shorter than the distance between the stopper portion 36b and the abutting portion TTq (TTq₄). In the same way, the distance between the stopper portion 36c and the abutting portion TTq (TTq₃) is shorter than the distance between the stopper portion 36d and the abutting portion TTq (abutting portion TTq₂).

These stopper portions 36 are provided at each of multiple positions where the operating member 31 is positioned under tilting operations from the reference position by the operator. That is to say, the stopper portion 36a corresponds to the forward position S11 and the position S21 which is one step forward, the stopper portion 36b corresponds to the position S22 which is two steps forward, the stopper portion 36c corresponds to the backward position S13 and the position S23 which is one step backward, and the stopper portion 36d corresponds to the position S24 which is two steps backward, illustrated in Fig. 5B.

The position detecting means of the vehicular shift device 630 employ a rotary potentiometer, the same as that in the second embodiment, and as the position of placement and functions thereof are also the same as with the second embodiment, detailed description will be omitted.

The actions of the operating device 103 configured as described above, which is the same the motion of the operating member 31 in the first direction D1 between the first position P1 and the second position P2, and motion in the second direction D2 which is different from the first direction D1, are the same as in the second embodiment, so detailed description if these will also be omitted. Note however, that in the third embodiment, the tilting-side base body K35 is used instead of the base body 21d for movement in the first direction D1, and a configuration where the movable-side magnetic members MM and opposing-side magnetic members TM are directly attached is used for movement in the second direction D2, rather than the configuration in the second embodiment where the movable-side magnetic members MM and opposing-side magnetic members TM are attached to the base body 21d.

As described above, the operating device 103 according to the third embodiment of the present invention can perform tilting action in the second direction D2. There are provided stopper portions 36 (36a, 36b, 36c, 36d) corresponding to the multiple positions to which the operating member 31 is moved by being tilted from the reference position. Accordingly, at the time of switching from the reference position (second position P2), for example, to the next position (position S21 which is one step forward or position S23 which is one step backward), and from this next position (position S21 which is one step forward or position S23 which is one step backward) to a further next position (position S22 which is two steps forward or position S24 which is two steps backward), the tilting action of the opposing-side magnetic members TM (first magnetic member MT14 or third magnetic member MT34, fourth magnetic member MT44 or second magnetic member MT24) is stopped by the stopper portions 36 (36a or 36c, 36b or 36d) provided to each position. In a case of switching from the reference position (first position P1), for example, to the next position (forward position S11 or backward position S13), the tilting action of the opposing-side magnetic members TM (first magnetic member MT14 or third magnetic member MT34) is stopped by the stopper portions 36 (36a or 36c) provided to each position.

Accordingly, the movable-side magnetic members MM and opposing-side magnetic members TM are separated and distanced from the base body 31d at each position (position S21 which is one step forward or forward position S11, position S22 which is two steps forward, position S23 which is one step backward or backward position S13, position S24 which is two steps backward), and the operator is provided with a sense of moderation due to the change from the strong attraction state to the weak attraction state thereby. Accordingly, the durability of the operating device 103 is better than the conventional example, since there is no sliding mechanism in the part generating the sense of moderation.

The operating device 103 according to the third embodiment of the present invention is suitably applied to the vehicular shift device 630 having the shift layout (shift pattern) illustrated in Fig. 5A. Accordingly, the positions of the operating device 103 (position S21 which is one step forward or forward position S11, position S22 which is two steps forward, second position P2 or first position P1, position S23 which is one step backward or backward position S13, and position S24 which is two steps backward) can be suitably applied to the shift layout (shift pattern) of the vehicular shift device 630, enabling shifting operations with a sense of moderation. Further, a vehicular shift device 630 with excellent durability can be provided, since there is no sliding mechanism in the part generating the sense of moderation.

The advantages of the operating device 103 and vehicular shift device 630 according to the third embodiment of the present invention as described above can be summarized as follows. There are provided stopper portions 36 (36a, 36b, 36c, 36d) corresponding to the multiple positions to which the operating member 31 is moved by being tilted from the reference position. Accordingly, at the time of switching from the reference position (second position P2), for example, to the next position (position S21 which is one step forward or position S23 which is one step backward), and from this next position (position S21 which is one step forward or position S23 which is one step backward) to a further next position (position S22 which is two steps forward or position S24 which is two steps backward), the tilting action of the opposing-side magnetic members TM (first magnetic member MT14 or third magnetic member MT34, fourth magnetic member MT44 or second magnetic member MT24) is stopped by the stopper portions 36 (36a or 36c, 36b or 36d) provided to each position. Accordingly, the movable-side magnetic members MM or opposing-side magnetic members TM are separated and distanced at each position (position S21 which is one step forward, position S22 which is two steps forward, position S23 which is one step backward, and position S24 which is two steps backward), and the operator is provided with a sense of moderation due to the change from the strong attraction state to the weak attraction state thereby. Accordingly, the durability of the operating device 103 is better than the conventional example, since there is no sliding mechanism in the part generating the sense of moderation.

Also, the respective distances between the abutting portions TTq (TTq₁, TTq₂, TTq₃, TTq₄) provided across the tilting shafts (first tilting shafts) 32e and the multiple stopper portions 36 (36a, 36b, 36c, 36d) are not the same, so at the time of the operating member 31 being operated to tilt in the tilting direction, the tilting action of the multiple opposing-side magnetic members TM disposed facing the movable-side magnetic members MM can be stopped in the order of closer distance between the abutting portion TTq and stopper portion 36. Accordingly, the movable-side magnetic members MM and opposing-side magnetic members TM can be easily separated in accordance to each position (position S21 which is one step forward or forward position S11, position S22 which is two steps forward, position S23 which is one step backward or backward position S13, position S24 which is two steps backward), and the operating device 103 which imparts a sense of moderation can be easily manufactured.

The movable-side magnetic members MM and opposing-side magnetic members TM when the base body 31d of the operating member 31 is tilted in one direction (Y1 direction), switch roles to serve as opposing-side magnetic members TM and movable-side magnetic members MM when tilted in the other direction (Y2 direction). Thus, the number of movable-side magnetic members MM and opposing-side magnetic members TM can be halved. Accordingly, the operating device 103 imparting a sense of moderation can be fabricated not only easily but also inexpensively.

Further, the combination of permanent magnets EM4 and permanent magnets EM4 has a gentler reduction in attraction when separating, as compared to a case of a permanent magnet and a soft magnetic substance. Accordingly, sudden clicking sensations can be avoided.

Also, the movable-side magnetic members MM and opposing-side magnetic members TM are each disposed at positions where the attraction acting therebetween is not lost when the movable-side magnetic members MM and the opposing-side magnetic members TM are separated. Accordingly, the attraction between the movable-side magnetic members MM and the opposing-side magnetic members TM acts to attract again when the force of tilting operations by the user is removed. Thus, the operating member 31 can be automatically returned to the reference position without using pressing members for automatic return.

Also, the movable-side magnetic members MM and opposing-side magnetic members TM are permanent magnets EM4, and each permanent magnet EM4 is covered by a yoke YM4, so strong force for detaching or attracting between the movable-side magnetic members MM and opposing-side magnetic members TM can easily be generated. Accordingly, the operator can be provided with a strong sense of operation and sense of moderation.

In the vehicular shift device 630 according to the third embodiment of the present invention, the positions of the operating device 103 (position S21 which is one step forward or forward position S11, position S22 which is two steps forward, second position P2 or first position P1, position S23 which is one step backward or backward position S13, and position S24 which is two steps backward) can be suitably applied to the shift layout (shift pattern) of the vehicular shift device 630. This enables shifting operations with a sense of moderation, and further a vehicular shift device 630 with excellent durability can be provided, since there is no sliding mechanism in the part generating the sense of moderation.

### Fourth Embodiment

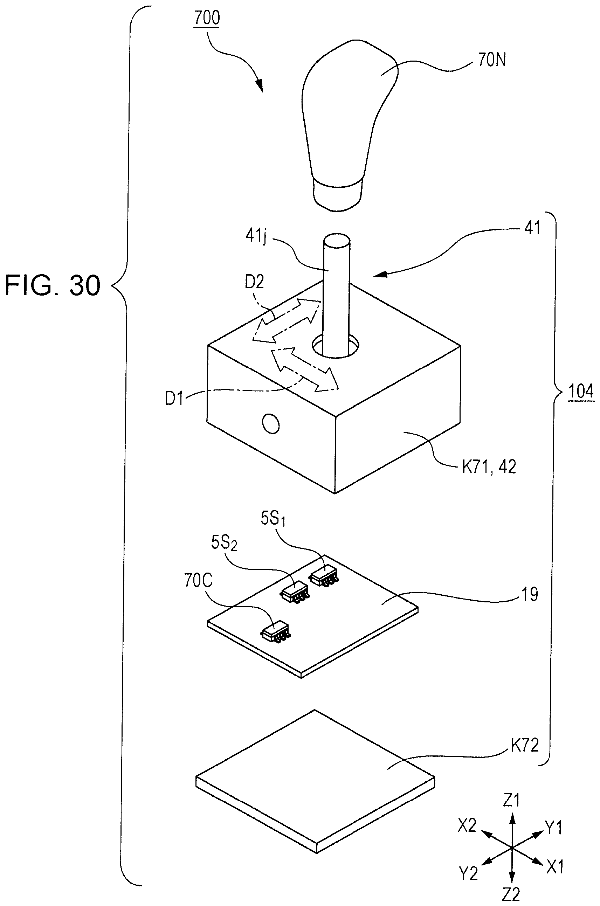

An operating device 104 and a vehicular shift device 700 using the operating device 104 will be described in a fourth embodiment of the present invention. First, the vehicular shift device 700 using the operating device 104 will be described. Fig. 30 is a disassembled perspective view for describing a vehicular shift device 700 using an operating device 104 according to the fourth embodiment of the present invention. Fig. 30 partially illustrates an operating member 41 and supporting member 42 (which is also a case K71) of the operating device 104. The external appearance of the vehicular shift device 700 according to the fourth embodiment differs from the vehicular shift devices (500, 600, 630) according to the first through third embodiments. Configurations which are the same as those in the first through third embodiments will be denoted with the same reference numerals, and detailed description will be omitted.

The vehicular shift device 700 using the operating device 104 according to the fourth embodiment of the present invention has an external appearance similar to that of the first embodiment, and is configured including a shift knob 70N to be gripped by an operator, the operating device 104 which can be operated in multiple directions due to the shift knob 70N being tilted by the operator, a control unit 70C which receives signals from the operating device 104 and transmits signals to vehicle-side equipment, and position detecting means (omitted from illustration) that detect multiple positions at which the operating member 41 of the operating device 104 is situated. The vehicular shift device 700 also includes a box-shaped case K71 (which is also part of the supporting member 42) disposed so as to cover the upper face of the operating device 104, a cover K72 which covers the lower face of the operating device 104, and a wiring board 19 accommodated in the operating device 104, upon which the control unit 70C is mounted. The vehicular shift device 700 is used for shift operations for a vehicle, installed in the vehicle and being capable of being tilted by operation in a first direction D1 (X direction in Fig. 30) and a second direction D2 (Y direction in Fig. 30) which is orthogonal to the first direction D1.

The shift knob 70N of the vehicular shift device 700 is formed having a slender shape so as to be easily gripped by the operator, as illustrated in Fig. 30, and is engaged with an operating shaft 41j of the operating member 41 of the operating device 104 so as to cover the operating shaft 41j as illustrated in Fig. 30.

The control unit 70C of the vehicular shift device 700 is configured using an IC, and is mounted on the wiring board 19 accommodated in the operating device 104 illustrated in Fig. 30. The control unit 70C is connected to vehicle-side equipment via an unshown connector, and upon a tilting operation being made of the shift knob 70N, receives position information signals corresponding to the operation and transmits these signals to the vehicle-side equipment. The vehicle side receives the position information signals and performs operations corresponding to the shift pattern, and also displays the position of the shift knob 70N in the shift pattern on a display unit provided to the instrument panel or the like.

The case K71 and cover K72 of the vehicular shift device 700 are of similar material and configuration as in the first embodiment, so detailed description thereof will be omitted. The wiring board 19 of the vehicular shift device 700 also is of similar material and configuration as in the first embodiment, so detailed description thereof will be omitted. Note that the position detecting means of the vehicular shift device 700 are mounted to the operating device 104, and accordingly will be described later along with description of the operating device 104.

The vehicular shift device 700 according to the fourth embodiment of the present invention, thus configured, is applied to a vehicle where control of the transmission is electronic, not a vehicle where the shift knob 70N is directly connected to the transmission and mechanical control is effected, which is the same as with the vehicular shift device 500 according to the first embodiment of the present invention. Accordingly, shifting of gears in this vehicle is performed just by information signals regarding shift positions transmitted from the operating device 104. The shift positions are displayed in the shift pattern displayed on the display unit provided to the aforementioned instrument panel or the like.

The vehicular shift device 700 also has the shift layout (shift pattern) illustrated in Fig. 5A, the same as with the vehicular shift device 500 according to the first embodiment, and shifting operations are performed in the same way as with the vehicular shift device 500 according to the first embodiment. Accordingly description of shifting operations of the vehicular shift device 700 will be omitted.

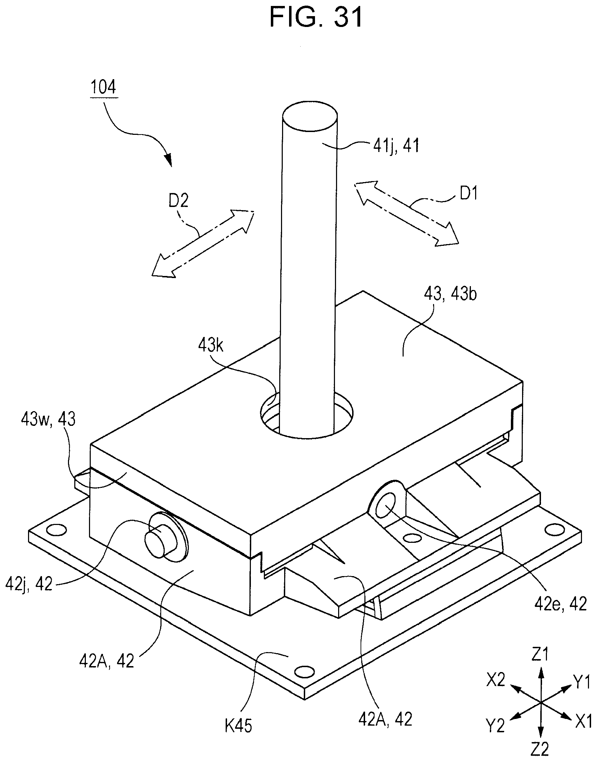

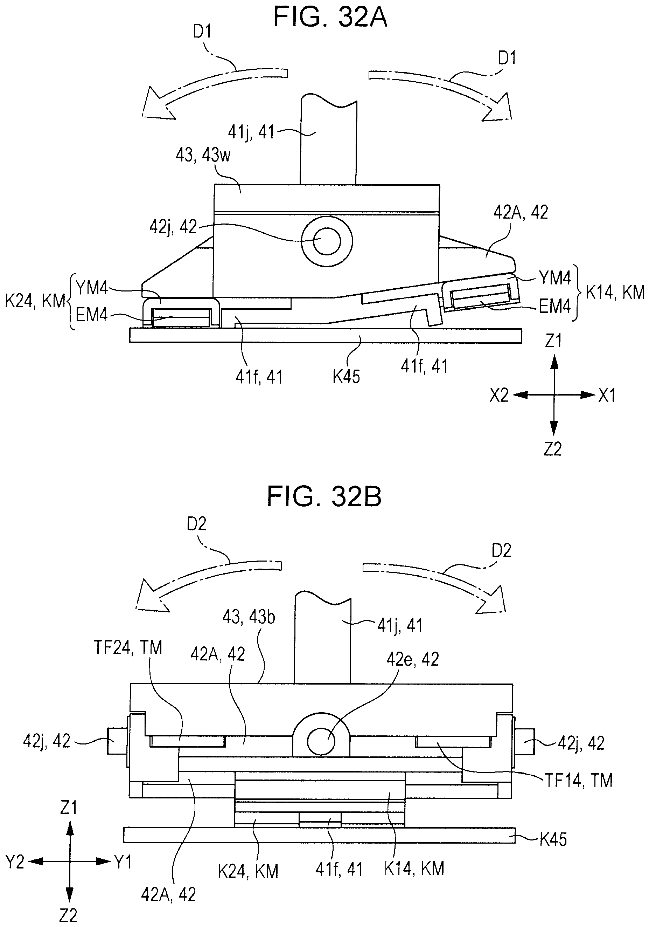

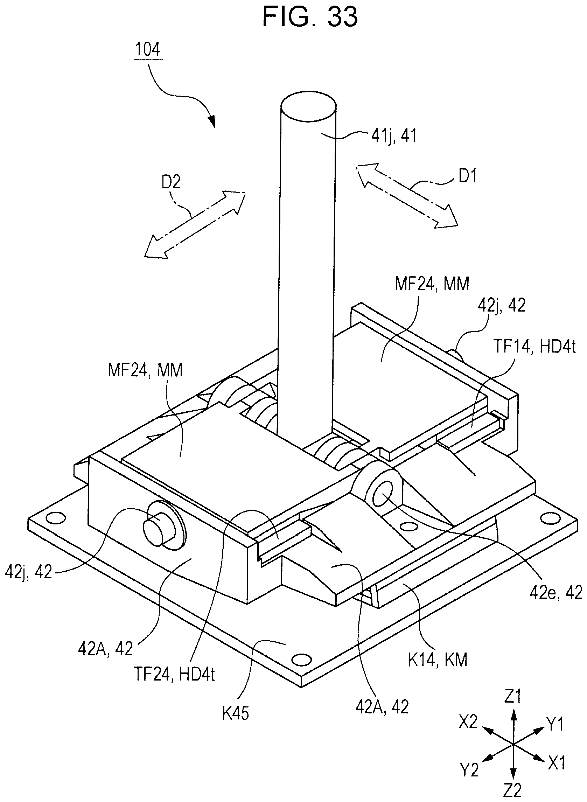

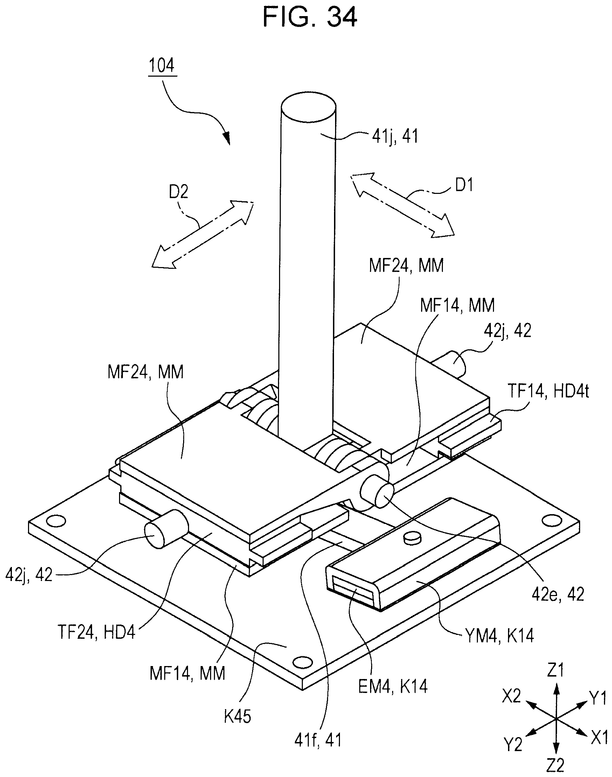

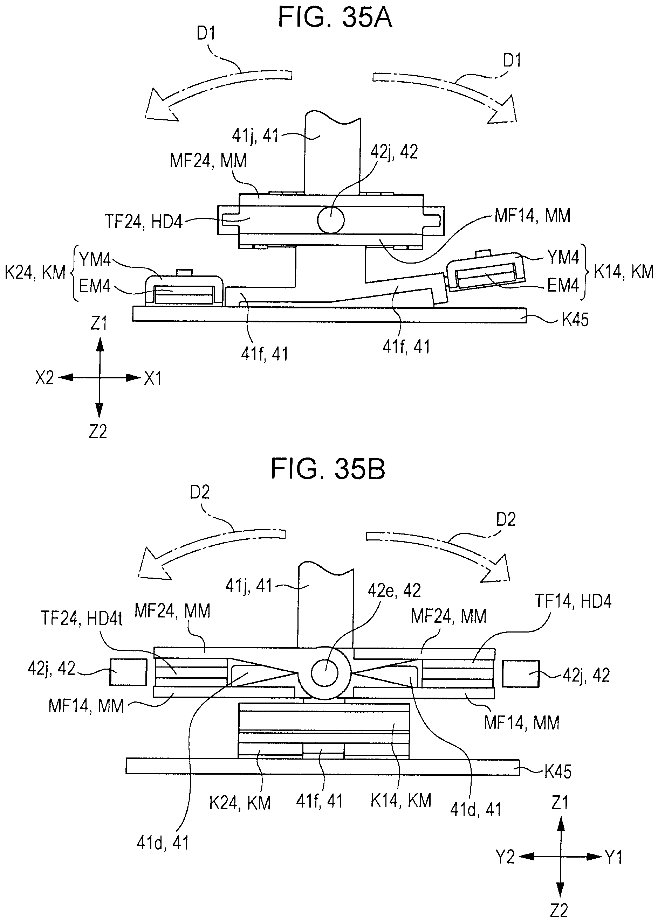

Next, the operating device 104 will be described. Fig. 31 is a perspective view for describing the operating device 104 according to the fourth embodiment of the present invention. Position detecting means have been omitted from illustration in Fig. 31 to facilitate description. Figs. 32A and 32B are diagrams for describing the operating device 104 according to the fourth embodiment of the present invention, in which Fig. 32A is a frontal view from side Y2 in Fig. 31, and Fig. 32B is a side view from side X1 in Fig. 31. Note that Figs. 31 through 32B illustrate the operating member 41 in the first position P1. Fig. 33 is a perspective view omitting illustration of a fixing member 43 illustrated in Fig. 31. Fig. 34 is a perspective view omitting illustration of a tilting member 42A of the support member 43 illustrated in Fig. 33. Fig. 35A is a frontal view from side Y2 in Fig. 34, and Fig. 35B is a side view from side X1 in Fig. 34.

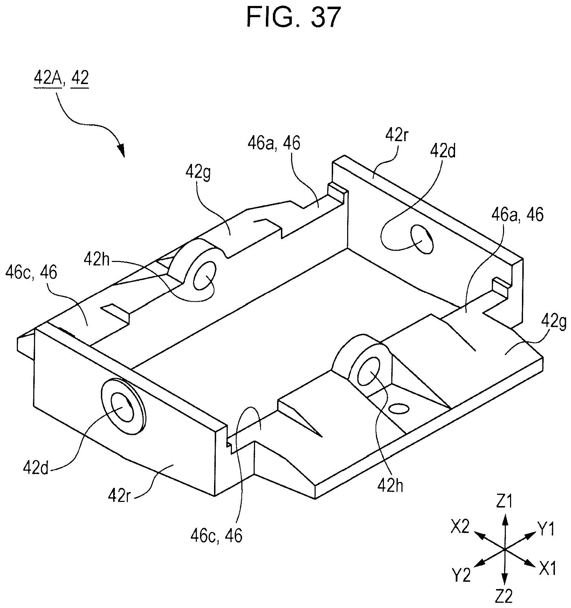

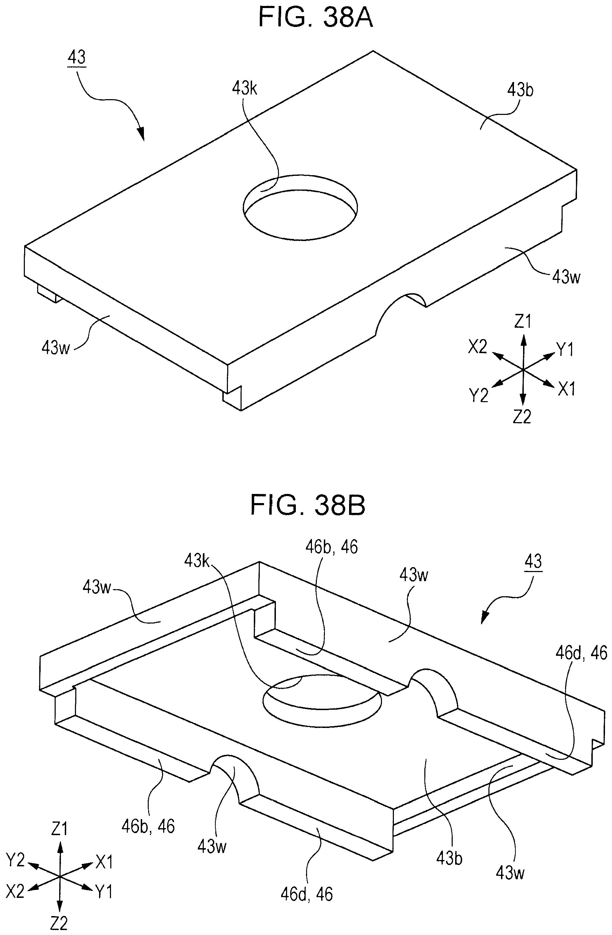

The operating device 104 according to the fourth embodiment of the present invention has an external appearance such as illustrated in Figs. 31 through 32B, and includes, as illustrated in Figs. 33 through 35B, the operating member 41 operable to be tilted under operations by the operator, the supporting member 42 which tiltably supports the operating member 41, multiple movable-side magnetic members MM exhibiting tilting action in the second direction D2 along with the operating member 41, multiple opposing-side magnetic members TM disposed facing the respective multiple movable-side magnetic members MM, and a stopper portion 46 (see Figs. 37 and 38B) to stop tilting action of the opposing-side magnetic members TM. The operating device 104 also includes a fixing member 43 disposed so as to cover above the opposing-side magnetic members TM as illustrated in Fig. 32B, multiple tilting-side magnetic members KM exhibiting tilting action in the first direction D1 (the X1 direction and X2 direction in Fig. 31) along with the operating member 41 as illustrated in Fig. 32A, and a tilting-side base body K45 disposed facing the tilting-side magnetic members KM. The operating device 104 is thus capable of operations in multiple directions, which are tilting actions in the first direction D1 where the operating member 41 moves between the first position P1 and second position P2, and the second direction D2 (the Y1 direction and Y2 direction in Fig. 31) orthogonal to the first direction D1, upon tilting operations being performed by the operator.

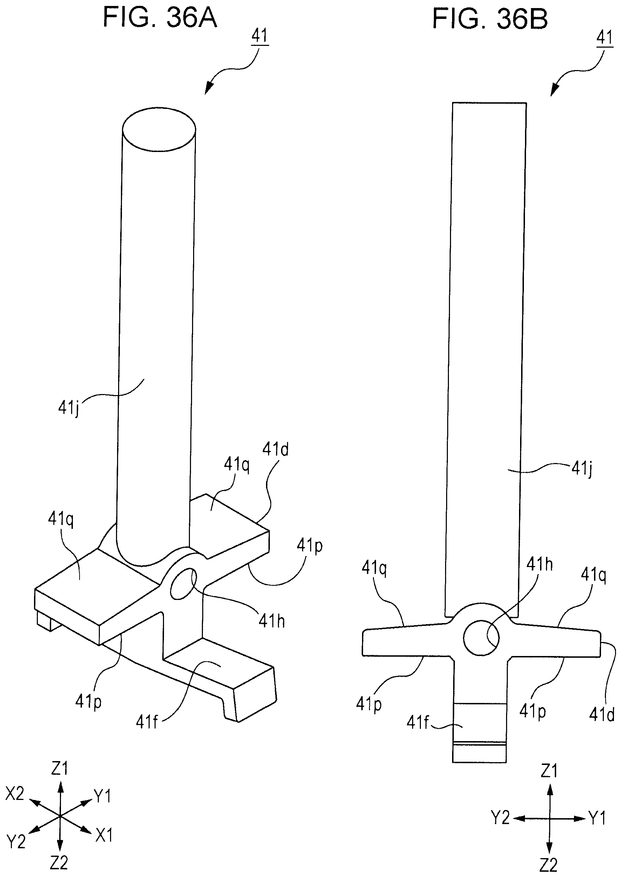

The operating member 41 of the operating device 104 will be described. Figs. 36A and 36B are diagrams for describing the operating member 41, in which Fig. 36A is a perspective view of the operating member 41, and Fig. 36B is a side view of the operating member 41 from side X1 in Fig. 36A. The operating member 41 is fabricated by molding synthetic resin in the same way as with the first embodiment, and is configured including a cylindrical operating shaft 41j engaged to the supporting member 42 and extending in the perpendicular direction (the Z direction in Fig. 31) as illustrated in Figs. 33 and 34, a base body 41d provided to the other end side of the operating shaft 41j, extending along a plane through which the axial center of the operating shaft 41j passes, as illustrated in Fig. 36, and legs 41f provided below (the Z2 direction in Fig. 36) the base body 41d. The operating shaft 41j of the operating member 41 is covered by the shift knob 70N of the vehicular shift device 700, as described earlier.

The base body 41d of the operating member 41 is formed extending in the left and right directions (Y1 and Y2 directions in Fig. 33) as illustrated in Figs. 36A and 36B, across the operating shaft 41j, with a through hole 41h provided at the middle portion thereof. A tilting shaft (first tilting shaft) 42e which enables tilting action of the operating member 41 is inserted into and fit to this through hole 41h. The base body 41d is configured to tilt in conjunction with tilting actions of the operating member 41 in the second direction D2 (Y direction in Fig. 31). The legs 41f also are configured to tilt in conjunction with tilting actions in the second direction D2.

The base body 41d is, as illustrated in Figs. 34 through 35B, disposed between multiple later-described movable-side magnetic members MM when the operating device 104 is assembled, and is configured so as to come into contact with the movable-side magnetic members MM when the base body 41d turns on the tilting shaft 42e as the axial center. In the fourth embodiment of the present invention, a face side (Z2 side in Fig. 35B) of the base body 41d parallel to a movable-side magnetic member MM (a later-described first movable-side magnetic member MF14) forms a first pressing portion 41p, and a face side (Z1 side in Fig. 35B) of the base body 41d inclined as to a movable-side magnetic member MM (a later-described second movable-side magnetic member MF24) forms a second pressing portion 41q.

The legs 41f of the operating member 41 have rectangular shapes extending in the first direction D1 (X direction in Fig. 36A), as illustrated in Fig. 36A, with both ends bent downwards as illustrated in Figs. 32A and 35A. The legs 41f also are configured to tilt in conjunction with tilting actions of the operating member 41 in the first direction D1 and the second direction D2 (see Figs. 32A and 32B).

Next, the supporting member 42 of the operating device 104 will be described. Fig. 37 is a diagram for describing the supporting member 42, and is a perspective view of a tilting member 42A. The supporting member 42 is fabricated by molding synthetic resin, and is configured including a tilting shaft (first tilting shaft) 42e which enables tilting action of the operating member 41 (tilting action in the second direction D2), a second tilting shaft 42j orthogonal in axial line direction to the tilting shaft 42e, a tilting member 42A which turns on the second tilting shaft 42j as the center or turning in accordance with tilting actions of the operating member 41 (tilting actions in the first direction D1), and a frame (omitted from illustration) through which the second tilting shaft 42j is inserted so as to enable turning of the tilting member 42A, as illustrated in Fig. 33. The case K71 is used as a frame in the fourth embodiment of the present invention.

The tilting member 42A of the supporting member 42 is formed as a frame, of two opposing block-shaped base bodies 42g and two linking walls 42r disposed facing each other and linking the base bodies 42g, as illustrated in Fig. 37. when the operating device 104 is assembled, the base body 41d of the operating member 41, and multiple movable-side magnetic members MM and multiple opposing-side magnetic members TM are accommodated within the frame of the tilting member 42A.

Holes 42h are formed in each of the base bodies 42g of the tilting member 42A, with the tilting shaft 42e being inserted through the holes 42h (see Fig. 33), so that the tilting shaft 42e is turnably supported by the tilting member 42A. Accordingly, the operating member 41 can be turned in the second direction D2 with the tilting shaft 42e as the axial center (axis of turning), and the base body 41d also turns with the tilting shaft 42e as the axial center. Later-described stopper portions 46 are provided on the upper face side of the base bodies 42g.

Holes 42d are formed in each of the linking walls 42r of the tilting member 42A, with the second tilting shaft 42j inserted through these holes 42d so as to be fit to the linking walls 42r (see Fig. 33). Although not illustrated, the second tilting shaft 42j is turnably supported by the frame (case K71). Accordingly, the tilting member 42A is capable of turning in the first direction D1 with this second tilting shaft 42j as its turning shaft (axial center), and accordingly the operating member 41 engaged to the tilting member 42A also turns with the second tilting shaft 42j as the axial center. Thus, the supporting member 42 tiltably supports the operating member 41 using the tilting shaft (first tilting shaft) 42e, the second tilting shaft 42j, the tilting member 42A, and the frame.

Next, the fixing member 43 of the operating device 104 will be described. Figs. 38A and 38B are diagrams for describing the fixing member 43, in which Fig. 38A is an upper perspective view of the fixing member 43, and Fig. 38B is a lower perspective view of the fixing member 43. The fixing member 43 is fabricated by molding synthetic resin, and is configured including a rectangular plate-shaped base board 43b, and side walls 43w extending downwards from the four edges of the base board 43b, so as to form a box shape with the lower side opened, as illustrated in Fig. 38. When the operating device 104 is assembled, the fixing member 43 is placed upon the tilting member 42A of the supporting member 42, and is disposed so as to cover above the movable-side magnetic members MM and opposing-side magnetic members TM, as illustrated in Figs. 31 through 32B. At this time, the fixing member 43 and tilting member 42A grasp part of the opposing-side magnetic members TM, as illustrated in Fig. 32B.

A circular through hole 43k is formed at the middle portion of the base board 43b as illustrated in Figs. 38A and 38B, through which the operating shaft 41j of the operating member 41 is passed. This through hole 43k is formed large enough for the operating member 41 to move therein. A latter-described stopper portion 46 is provided on the lower edges of the side walls 43w.

Next, the tilting-side magnetic members KM and tilting-side base body K45 of the operating device 104 will be described. In the same way as in the second embodiment, the tilting-side magnetic members KM of the operating device 104 are magnetic members made up of a permanent magnet EM4 and a yoke YM4 disposed so as to surround three faces of the permanent magnet EM4, as illustrated in Figs. 32A and 35A. The tilting-side magnetic members KM are configured as a combination of the first tilting magnet K14 which comes into contact or proximity with the tilting-side base body K45 when the operating member 41 moves to the first position P1 (state illustrated in Fig. 32A), and the second tilting magnet K24 which comes into contact or proximity with the tilting-side base body K45 when the operating member 41 moves to the second position P2. The first tilting magnet K14 and the second tilting magnet K24 of the tilting-side magnetic members KM are fixed to the tilting member 42A of the supporting member 42, so as to exhibit tilting action in conjunction with the tilting action of the operating member 41 in the first direction D1. The tilting-side magnetic members KM also are disposed having an orientation such that portions other than the faces of the permanent magnets EM4 which face the tilting-side base body K45 are covered by the yokes YM4.

The tilting-side base body K45 of the operating device 104 is formed of a soft magnetic substance such as iron or the like, and has a square plate shape, as illustrated in Figs. 31 through 32B. The tilting-side base body K45 is fixed to the case K71, although this is omitted from illustration. The tilting-side magnetic members KM are disposed on both ends of the tilting-side base body K45 in the first direction D1 (X direction in Fig. 31). Movement of the operating device 104 in the first direction D1 between the first position P1 and the second position P2 is the same as in the second embodiment, so detailed description will be omitted. Note that the fourth embodiment employs a configuration where the base body 21d in the second embodiment has been replaced with the tilting-side base body K45.

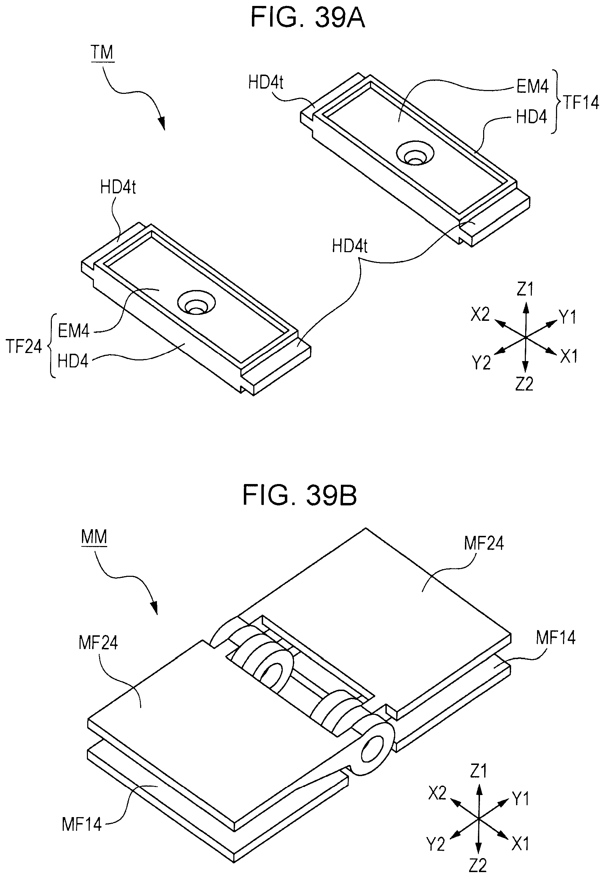

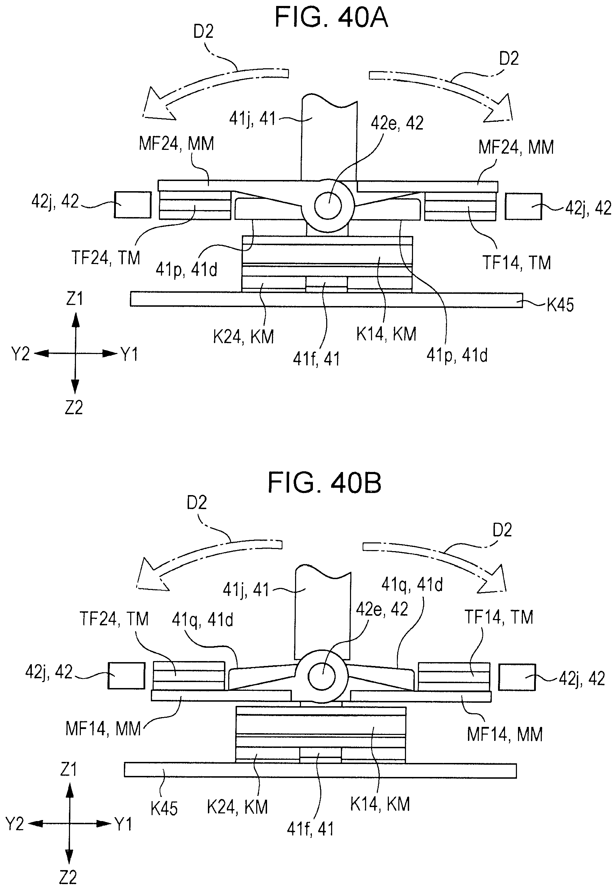

Next, the movable-side magnetic members MM and opposing-side magnetic members TM of the operating device 104 will be described. Figs. 39A and 39B are diagrams for describing the movable-side magnetic members MM and opposing-side magnetic members TM according to the present invention, in which Fig. 39A is a perspective view of the opposing-side magnetic members TM, and Fig. 39B is a perspective view of the movable-side magnetic members MM. Figs. 40A and 40B are diagrams for describing the movable-side magnetic members MM and opposing-side magnetic members TM according to the fourth embodiment of the present invention, in which Fig. 40A is a side view from which the first movable-side magnetic member MF14 illustrated in Fig. 35B has been omitted, and Fig. 40B is a side view from which the second movable-side magnetic member MF24 illustrated in Fig. 35B has been omitted.

The opposing-side magnetic members TM of the operating device 104 are configured including a permanent magnet EM4 and a holder HD4 surrounding the four sides of the permanent magnet EM4, as illustrated in Fig. 39A. The opposing-side magnetic members TM include a first opposing-side magnetic member TF14 and a second opposing-side magnetic member TF24 disposed across the tilting shaft 42e, as illustrated in Fig. 39A. Note that in the fourth embodiment of the present invention, the opposing-side magnetic member TM disposed at one side (the Y1 direction side illustrated in Fig. 32B) in which the operating member 41 is operated by tilting is the first opposing-side magnetic member TF14, and the opposing-side magnetic member TM disposed at the other side (the Y2 direction side illustrated in Fig. 32B) is the second opposing-side magnetic member TF24.

The holders HD4 of the opposing-side magnetic members TM are each formed as a frame capable of accommodating a permanent magnet EM4 as illustrated in Fig. 39A, having a protrusion HD4t formed extending at each end in the longitudinal direction (X direction in Fig. 39A). The protrusions HD4t are pinched between the fixing member 43 and the tilting member 42A, thus fixing the opposing-side magnetic members TM as illustrated Fig. 32B. While description has been made regarding an arrangement where a non-magnetic material such as synthetic resin or the like is used to form the holders HD4, a soft magnetic substance such as iron or the like may be used, so as to impart the holders HD4 with the functions of a yoke of the permanent magnet EM4.

The movable-side magnetic members MM of the operating device 104 are formed of soft magnetic substance such as iron or the like, disposed so that the plate-shaped portions thereof are disposed facing the opposing-side magnetic members TM, as illustrated in Figs. 34 through 35B. According to the fourth embodiment of the present invention, the movable-side magnetic members MM include a first movable-side magnetic member MF14 disposed facing the lower face of the first opposing-side magnetic member TF14 illustrated in Fig. 40B, and a second movable-side magnetic member MF24 disposed facing the upper face of the second opposing-side magnetic member TF24 illustrated in Fig. 40A.

The first movable-side magnetic member MF14 and second movable-side magnetic member MF24 are disposed across the tilting shaft 42e of the supporting member 42, with one end side of the first movable-side magnetic member MF14 and second movable-side magnetic member MF24 loosely fit thereto so as to be capable of turning on the tilting shaft 42e. When the operating member 41 is operated so as to tilt in one direction (the Y1 direction in Figs. 40A and 40B), the first movable-side magnetic member MF14 disposed at the one direction side is pressed by the first pressing portion 41p of the base body 41d at the tilting operation side, and when the tilting operation is further continued in the same direction, the second movable-side magnetic member MF24 on the opposite side is pressed by the second pressing portion 41q of the base body 41d at the opposite side from the tilting operation side (Y2 direction side illustrated in Figs. 40A and 40B).

Further, the fourth embodiment of the present invention includes a first movable-side magnetic member MF14 disposed facing the lower face of the second opposing-side magnetic member TF24 illustrated in Fig. 40B, and a second movable-side magnetic member MF24 disposed facing the upper face of the first opposing-side magnetic member TF14 illustrated in Fig. 40A. That is to say, two sets of the combination of first movable-side magnetic member MF14 and second movable-side magnetic member MF24 are included. The first movable-side magnetic member MF14 and second movable-side magnetic member MF24 are also disposed across the tilting shaft 42e of the supporting member 42. When the operating member 41 is operated so as to tilt in the other direction (the Y2 direction in Figs. 40A and 40B), the first movable-side magnetic member MF14 disposed at the other direction side is pressed by the first pressing portion 41p of the base body 41d at the tilting operation side, which is the other direction side, and when the tilting operation is further continued in the same direction, the second movable-side magnetic member MF24 on the opposite side from the tilting operations side, which is the one side (the Y1 direction side in Figs. 40A and 40B), is pressed by the second pressing portion 41q of the base body 41d.

The stopper portion 46 of the operating device 104 will be described next. Figs. 41A through 41E are schematic diagram for describing operations of the operating device 104 according to the fourth embodiment of the present invention, in which Fig. 41A is a diagram illustrating a state at a reference position, Fig. 41B is a diagram illustrating a state tilted in the Y1 direction, Fig. 41C is a diagram illustrating a state tilted further in the Y1 direction, beyond the state illustrated in Fig. 41B, Fig. 41D is a diagram illustrating a state tilted in the Y2 direction, and Fig. 41E is a diagram illustrating a state tilted further in the Y2 direction, beyond the state illustrated in Fig. 41D.

The stopper portion 46 of the operating device 104 functions to stop tilting actions of the opposing-side magnetic members TM when the operating member 41 is tilted from a reference position (first position P1 or second position P2) so as to be situated at the following multiple positions, and so according to the fourth embodiment of the present invention, the stopper portion 46 is provided to the fixing member 43 and tilting member 42A grasping part of the opposing-side magnetic members TM. Movement in the second direction D2 and the stopper portion 46 will be described with reference to schematic diagrams of the action of the operating device 104 in Figs. 41A through 41E. Motion of the operating member 41 in the second direction D2 is performed by the operator performing a tilting operation with either the first position P1 or the second position P2 as the reference position (see Fig. 5B); here, description will be made in detail with reference to motion where the second position P2 is the reference position.

First, upon the operator performing a tilting operation of the operating member 41 in one direction (the Y1 direction in Figs. 40A and 40B) from the reference position (second position P2) illustrated in Fig. 41A, the operating member 41 is turned on the tilting shaft (first tilting shaft) 42e as the turning axis, whereby the first pressing portion 41p of the base body 41d at the tilting operation side presses the first movable-side magnetic member MF14 and the first movable-side magnetic member MF14 descends. On the other hand, the stopper portion 46 (46a illustrated in Fig. 37) provided to the tilting member 42A grasping the protrusion HD4t of the first opposing-side magnetic member TF14 at the tilting operation side stops the tilting action of the first opposing-side magnetic member TF14, so attachment between the first movable-side magnetic member MF14 and the first opposing-side magnetic member TF14 is released, as illustrated in Fig. 41B. The operating member 41 thus is moved from the reference position (second position P2) so as to be situated at the position S21 which is one step forward (see Fig. 5B). Accordingly, the user can feel a sense of moderation (a click) when moving from the second position P2 to the position S21 which is one step forward, due to the change from the strong attraction state to the weak attraction state.

Upon the operator continuing the tilting operation of the operating member 41 in the one direction (Y1 direction), the operating member 41 is further turned, whereby the second pressing portion 41q of the base body 41d at the opposite side to the tilting operation side (Y2 direction in Figs. 40A and 40B) presses the second movable-side magnetic member MF24 on the other side, and the second movable-side magnetic member MF24 ascends. On the other hand, the stopper portion 46 (46b illustrated in Fig. 38B) provided to the fixing member 43 grasping the protrusion HD4t of the second opposing-side magnetic member TF24 at the opposite side stops the tilting action of the second opposing-side magnetic member TF24, so attachment between the second movable-side magnetic members MF24 and the second opposing-side magnetic member TF24 is released, as illustrated in Fig. 41C. The operating member 41 thus is moved from the position S21 which is one step forward so as to be situated at the position S22 which is two steps forward (see Fig. 5B). Accordingly, the user can feel a sense of moderation (a click) when moving from the position S21 which is one step forward so as to be situated at the position S22 which is two steps forward, due to the change from the strong attraction state to the weak attraction state.

Thus, the operating device 104 according to the fourth embodiment of the present invention configured as described above is arranged such that the attachment between the first opposing-side magnetic member TF14 and first movable-side magnetic member MF14 stopped by the stopper portion 46a is separated, and then next, the attachment between the second opposing-side magnetic member TF24 and second movable-side magnetic member MF24 stopped by the stopper portion 46b is separated. Accordingly, the movable-side magnetic members MM and opposing-side magnetic members TM can be easily separated in accordance to each position (position S21 which is one step forward, position S22 which is two steps forward), and the operating device 104 which imparts a sense of moderation can be easily manufactured.

Also, according to the fourth embodiment of the present invention, the movable-side magnetic members MM and the opposing-side magnetic members TM are disposed at positions such that, when the operating member 41 is tilted in the Y1 direction such that the movable-side magnetic members MM (first movable-side magnetic member MF14 and second movable-side magnetic member MF24) and opposing-side magnetic members TM (first opposing-side magnetic member TF14 and second opposing-side magnetic member TF24) are separated as illustrated in Figs. 41B and 41C, the attraction between the movable-side magnetic members MM and the opposing-side magnetic members TM is not lost. Accordingly, the attraction between the movable-side magnetic members MM and opposing-side magnetic members TM which had been separated by operator operations at each position (position S21 which is one step forward and a position S22 which is two steps forward) acts to attract again. Thus, the operating member 41 can be automatically returned to the reference position without using pressing members for automatic return.

Note that an arrangement may be made where the movable-side magnetic members MM and opposing-side magnetic members TM are disposed at positions where attraction acting between the movable-side magnetic members MM and opposing-side magnetic members TM is not eliminated in a case of the first movable-side magnetic member MF14 and first opposing-side magnetic member TF14 separating, or the second movable-side magnetic member MF24 and second opposing-side magnetic member TF24 separating. Thus, when the force of the user performing the tilting operation is removed, the second movable-side magnetic member MF24 and second opposing-side magnetic member TF24 are attached by attraction, and the first movable-side magnetic member MF14 and first opposing-side magnetic member TF14 are attached by attraction, in that order, so the operating member 41 can be automatically returned to the reference position without using pressing members for automatic return.

The fourth embodiment of the present invention has another set of the first movable-side magnetic member MF14 and second movable-side magnetic member MF24, so tilting operations by the operator in the Y2 direction are performed in the same way as the motion in the Y1 direction described above, as follows.

First, upon the operator performing a tilting operation of the operating member 41 in the other direction (the Y2 direction in Figs. 40A and 40B) from the reference position (second position P2) illustrated in Fig. 41A, the operating member 41 is turned on the tilting shaft (first tilting shaft) 42e as the turning axis, whereby the first pressing portion 41p of the base body 41d at the tilting operation side presses the first movable-side magnetic member MF14 at the other side and the first movable-side magnetic member MF14 descends. On the other hand, the stopper portion 46 (46c illustrated in Fig. 37) provided to the tilting member 42A grasping the protrusion HD4t of the second opposing magnet T24 at the tilting operation side stops the tilting action of the second opposing magnet T24, so attachment between the first movable-side magnetic member MF14 and the second opposing magnet T24 is released, as illustrated in Fig. 41D. The operating member 41 thus is moved from the reference position (second position P2) so as to be situated at the position S23 which is one step backward (see Fig. 5B). Accordingly, the user can feel a sense of moderation (a click) when moving from the second position P2 to the position S23 which is one step backward, due to the change from the strong attraction state to the weak attraction state.

Upon the operator continuing the tilting operation of the operating member 41 in the other direction (Y2 direction), the operating member 41 is further turned, whereby the second pressing portion 41q of the base body 41d at the opposite side to the tilting operation side (Y1 direction in Figs. 40A and 40B) presses the second movable-side magnetic member MF24 on the opposite side, and the second movable-side magnetic member MF24 ascends. On the other hand, the stopper portion 46 (46d illustrated in Fig. 38B) provided to the fixing member 43 grasping the protrusion HD4t of the first opposing-side magnetic member TF14 at the opposite side stops the tilting action of the first opposing-side magnetic member TF14, so attachment between the second movable-side magnetic members MF24 and the first opposing-side magnetic member TF14 is released, as illustrated in Fig. 41E. The operating member 41 thus is moved from the position S23 which is one step backward so as to be situated at the position S24 which is two steps backward (see Fig. 5B). Accordingly, the user can feel a sense of moderation (a click) when moving from the position S23 which is one step backward so as to be situated at the position S24 which is two steps backward, due to the change from the strong attraction state to the weak attraction state.

Thus, the operating device 104 according to the fourth embodiment of the present invention configured as described above is arranged such that the attachment between the second opposing-side magnetic member TF24 and first movable-side magnetic member MF14 stopped by the stopper portion 46c is separated, and then next, the attachment between the first opposing-side magnetic member TF14 and second movable-side magnetic member MF24 stopped by the stopper portion 46d is separated. Accordingly, the movable-side magnetic members MM and opposing-side magnetic members TM can be easily separated in accordance to each position (position S23 which is one step backward, position S24 which is two steps backward), and the operating device 104 according to the fourth embodiment of the present invention which can handle tilting operation in the other direction as well, and imparts a sense of moderation, can be easily manufactured without increasing the number of opposing-side magnetic members TM.

In the same way, according to the fourth embodiment of the present invention, the movable-side magnetic members MM and the opposing-side magnetic members TM are disposed at positions such that, when the operating member 41 is tilted in the Y2 direction such that the movable-side magnetic members MM (first movable-side magnetic member MF14 and second movable-side magnetic member MF24) and opposing-side magnetic members TM (first opposing-side magnetic member TF14 and second opposing-side magnetic member TF24) are separated as illustrated in Figs. 41D and 41E, the attraction between the movable-side magnetic members MM and the opposing-side magnetic members TM is not lost. Accordingly, the attraction between the movable-side magnetic members MM and opposing-side magnetic members TM which had been separated by operator operations at each position (position S23 which is one step backward and position S24 which is two steps backward) acts to attract again. Thus, the operating member 41 can be automatically returned to the reference position without using pressing members for automatic return.

As described above, the stopper portion 46 of the operating device 104 is provided at each of multiple positions where the operating member 41 is situated due to tilting operations from the reference positions by the user. That is to say, the stopper portion 46a corresponds to the forward position S11 and the position S21 which is one step forward, the stopper portion 46b corresponds to the position S22 which is two steps forward, the stopper portion 46c corresponds to the backward position S13 and the position S23 which is one step backward, and the stopper portion 46d corresponds to the position S24 which is two steps backward.

The position detecting means of the vehicular shift device 700 employ a rotary potentiometer, the same as that in the first embodiment, and as the position of placement and functions thereof are also the same as with the first embodiment, detailed description will be omitted.

As described above, the operating device 104 according to the fourth embodiment of the present invention can perform tilting action in the second direction D2. There are provided stopper portions 46 (46a, 46b, 46c, 46d) corresponding to the multiple positions to which the operating member 41 is moved by being tilted from the reference position. Accordingly, at the time of switching from the reference position (second position P2), for example, to the next position (position S21 which is one step forward or position S23 which is one step backward), and from this next position (position S21 which is one step forward or position S23 which is one step backward) to a further next position (position S22 which is two steps forward or position S24 which is two steps backward), the tilting action of the opposing-side magnetic members TM (first opposing-side magnetic member TF14, second opposing-side magnetic member TF24) is stopped by the stopper portions 46 (46a or 46c, 46b or 46d) provided to each position. In a case of switching from the reference position (first position P1), for example, to the next position (forward position S11 or backward position S13), the tilting action of the opposing-side magnetic members TM (first opposing-side magnetic member TF14, second opposing-side magnetic member TF24) is stopped by the stopper portions 46 (46a or 46c) provided to each position.

Accordingly, the movable-side magnetic members MM and opposing-side magnetic members TM are separated and distanced at each position (position S21 which is one step forward or forward position S11, position S22 which is two steps forward, position S23 which is one step backward or backward position S13, position S24 which is two steps backward), and the operator is provided with a sense of moderation due to the change from the strong attraction state to the weak attraction state thereby. Accordingly, the durability of the operating device 104 is better than the conventional example, since there is no sliding mechanism in the part generating the sense of moderation.

The operating device 104 according to the fourth embodiment of the present invention is suitably applied to the vehicular shift device 700 having the shift layout (shift pattern) illustrated in Fig. 5A. Accordingly, the positions of the operating device 104 (position S21 which is one step forward or forward position S11, position S22 which is two steps forward, second position P2 or first position P1, position S23 which is one step backward or backward position S13, and position S24 which is two steps backward) can be suitably applied to the shift layout (shift pattern) of the vehicular shift device 700, enabling shifting operations with a sense of moderation. Further, a vehicular shift device 700 with excellent durability as compared to the conventional example can be provided, since there is no sliding mechanism in the part generating the sense of moderation.

The advantages of the operating device 104 and vehicular shift device 700 according to the fourth embodiment of the present invention as described above can be summarized as follows. There are provided to the operating device 104 according to the fourth embodiment of the present invention stopper portions 46 (46a, 46b, 46c, 46d) corresponding to the multiple positions to which the operating member 41 is moved by being tilted from the reference position. Accordingly, at the time of switching from the reference position (second position P2), for example, to the next position (position S21 which is one step forward or position S23 which is one step backward), and from this next position (position S21 which is one step forward or position S23 which is one step backward) to a further next position (position S22 which is two steps forward or position S24 which is two steps backward), the tilting action of the opposing-side magnetic members TM (first opposing-side magnetic member TF14, second opposing-side magnetic member TF24) is stopped by the stopper portions 46 (46a or 46c, 46b or 46d) provided to each position. Accordingly, the movable-side magnetic members MM and opposing-side magnetic members TM are separated and distanced at each position (position S21 which is one step forward, position S22 which is two steps forward, position S23 which is one step backward, and position S24 which is two steps backward), and the operator is provided with a sense of moderation due to the change from the strong attraction state to the weak attraction state thereby. Accordingly, the durability of the operating device 104 is better than the conventional example, since there is no sliding mechanism in the part generating the sense of moderation.

A configuration has been made where, at the time of the operating member 41 being operated by tilting in one direction, the first pressing portion 41p of the base body 41d presses the first movable-side magnetic member MF14 and the stopper portion 46a (46) stops the tilting action of the first opposing-side magnetic member TF14, and further, when the tilting operation is continued in the same direction, the second pressing portion 41q presses the second movable-side magnetic member MF24 and the stopper portion 46b (46) stops the tilting action of the second opposing-side magnetic member TF24. Accordingly, the attraction between the first opposing-side magnetic member TF14 and the first movable-side magnetic member MF14, which had been stopped by the stopper portion 46a, is released, following which the attraction between the second opposing-side magnetic member TF24 and the second movable-side magnetic member MF24, which had been stopped by the stopper portion 46b, is released. Thus, the movable-side magnetic members MM and opposing-side magnetic members TM can be easily separated in accordance to each position (forward position S11 or position S21 which is one step forward, position S22 which is two steps forward). Accordingly, the operating device 104 which imparts a sense of moderation can be easily manufactured.

Also, at the time of the operating member 41 being operated by tilting in the other direction, the first pressing portion 41p of the base body 41d presses the first movable-side magnetic member MF14 and the stopper portion 46c (46) stops the tilting action of the second opposing-side magnetic member TF24, and further, when the tilting operation is continued in the same direction, the second pressing portion 41q presses the second movable-side magnetic member MF24 and the stopper portion 46d (46) stops the tilting action of the first opposing-side magnetic member TF14. Accordingly, the attraction between the second opposing-side magnetic member TF24 and the first movable-side magnetic member MF14 which had been stopped by the stopper portion 46c is released, following which the attraction between the first opposing-side magnetic member TF14 and the second movable-side magnetic member MF24, which had been stopped by the stopper portion 46d, is released. Thus, the movable-side magnetic members MM and opposing-side magnetic members TM can be easily separated in accordance to each position (backward position S13 or position S23 which is one step backward, position S24 which is two steps backward). In this way, the operating device 104 according to the fourth embodiment of the present invention which can also handle tilting operations in the other direction, and which imparts a sense of moderation can be easily manufactured without increasing the number of opposing-side magnetic members TM.

Also, the movable-side magnetic members MM and opposing-side magnetic members TM are each disposed at positions where the attraction acting therebetween is not lost when the movable-side magnetic members MM and opposing-side magnetic members TM are separated. Accordingly, the attraction between the movable-side magnetic members MM and opposing-side magnetic members TM acts to attract again when the force of tilting operations by the user is removed. Thus, the operating member 41 can be automatically returned to the reference position without using pressing members for automatic return.

In the vehicular shift device 700 according to the fourth embodiment of the present invention, the positions of the operating device 104 (position S21 which is one step forward or forward position S11, position S22 which is two steps forward, second position P2 or first position P1, position S23 which is one step backward or backward position S13, and position S24 which is two steps backward) can be suitably applied to the shift layout (shift pattern) of the vehicular shift device 700. This enables shifting operations with a sense of moderation, and further a vehicular shift device 700 with excellent durability as compared to the conventional example can be provided, since there is no sliding mechanism in the part generating the sense of moderation.

The present invention is not restricted to the above-described embodiments. For example, modifications may be made such as described next, and such embodiments are also encompassed in the technical scope of the present invention.

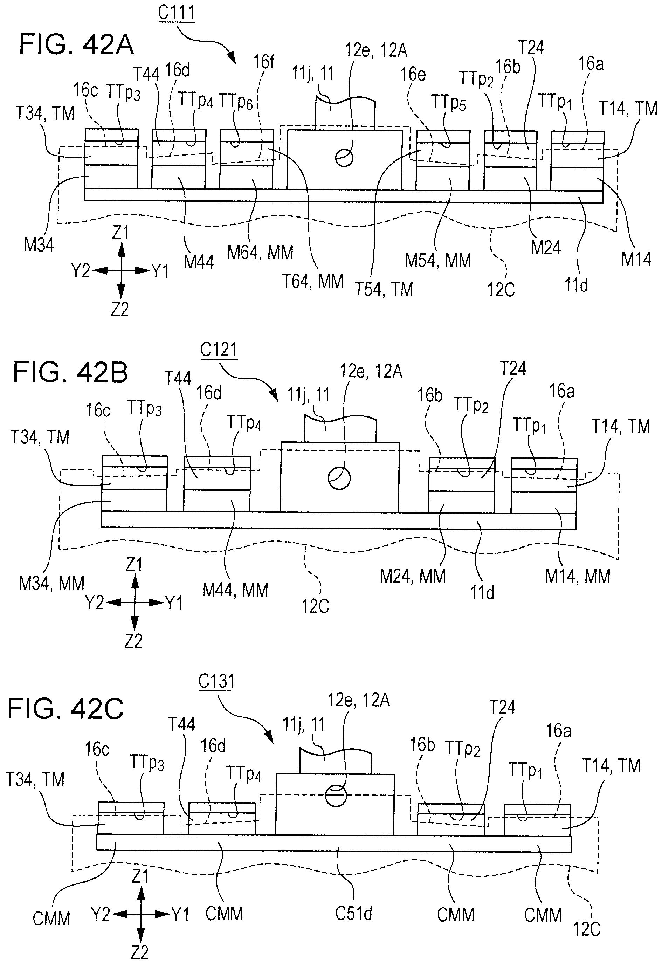

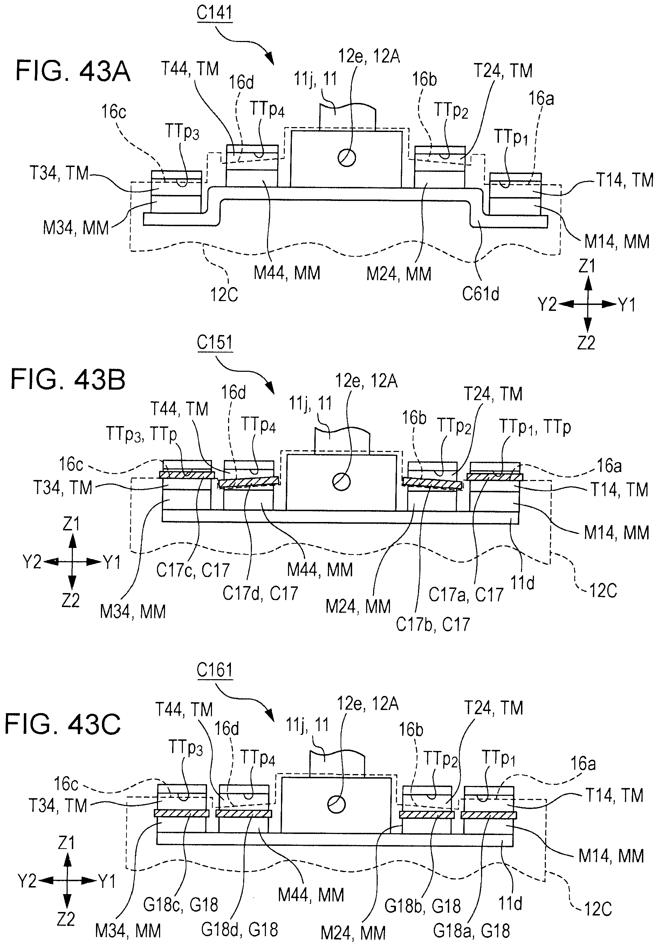

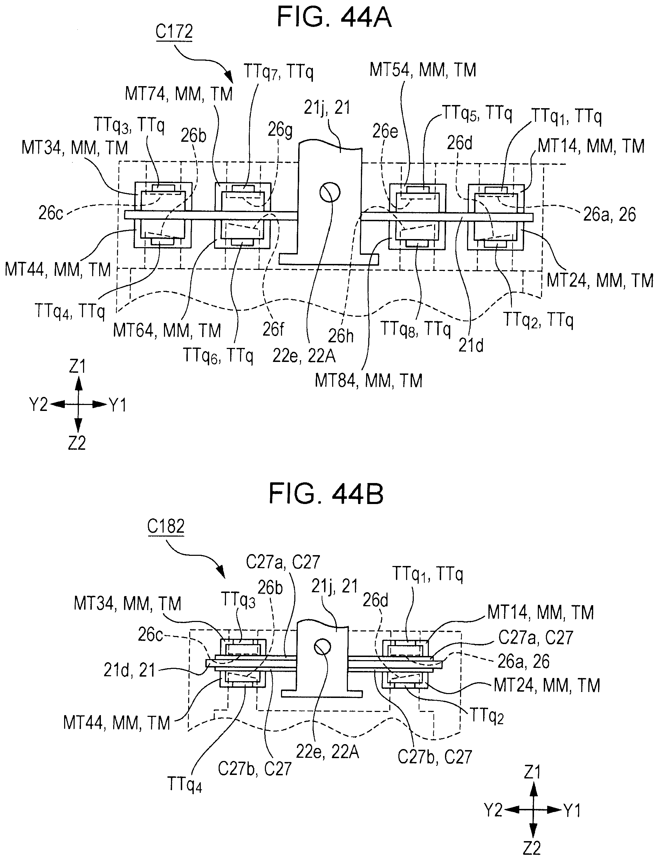

Figs. 42A through 42C are diagrams for describing modifications of the operating device 101 according to the first embodiment of the present invention, in which Fig. 42A is a side schematic diagram illustrating an operating device C111 according to a first modification, Fig. 42B is a side schematic diagram illustrating an operating device C121 according to a second modification, and Fig. 42C is a side schematic diagram illustrating an operating device C131 according to a third modification. Figs. 43A through 43C are diagrams for describing modifications of the operating device 101 according to the first embodiment of the present invention, in which Fig. 43A is a side schematic diagram illustrating an operating device C141 according to a fourth modification, Fig. 43B is a side schematic diagram illustrating an operating device C151 according to a fifth modification, and Fig. 43C is a side schematic diagram illustrating an operating device C161 according to a sixth modification. Figs. 44A and 44B are diagrams for describing modifications of the operating device 102 according to the second embodiment of the present invention, in which Fig. 44A is a side schematic diagram illustrating an operating device C172 according to a seventh modification, and Fig. 44B is a side schematic diagram illustrating an operating device C182 according to an eighth modification.

### First Modification

While description has been made of the first embodiment regarding a configuration using four movable-side magnetic members MM and opposing-side magnetic members TM, a configuration may be made such as illustrated in Fig. 42A for example, further including a fifth movable magnet M54 (MM) and fifth opposing magnet T54 (TM), and a sixth movable magnet M64 (MM) and sixth opposing magnet T64 (TM), so as to have six sets of movable-side magnetic members MM and opposing-side magnetic members TM. In doing so, a stopper portion 16e is provided as to an abutting portion TTp₅ of the fifth opposing magnet T54 (TM), and a stopper portion 16f is provided as to an abutting portion TTp₆ of the sixth opposing magnet T64 (TM), so that the distance between the stopper portion 16e and abutting portion TTp₅ is a longer distance as to the stopper portion 16b, and the distance between the stopper portion 16f and abutting portion TTp₆ is a longer distance as to the stopper portion 16d. Note that the configuration is not restricted to using four sets or six sets of movable-side magnetic members MM and opposing-side magnetic members TM; the number may be, for example, two sets, three sets, five sets, or more than six sets.

### Second Modification

While description has been made of the first embodiment regarding a configuration where the distance between abutting portions TTp (TTp₁, TTp₃) and stopper units (16a, 16c) is shorter than the distance between abutting portions TTp (TTp₂, TTp₄) and stopper units (16b, 16d), a configuration may be made such as illustrated in Fig. 42B for example, where the distance between abutting portions TTp (TTp₂, TTp₄) and stopper units (16b, 16d) is shorter than the distance between abutting portions TTp (TTp₁, TTp₃) and stopper units (16a, 16c).

### Third Modification

While description has been made of the first embodiment regarding a configuration where four combinations of permanent magnet EM4 and yoke TM4 (first movable magnet M14, second movable magnet M24, third movable magnet M34, and fourth movable magnet M44) are used as the movable-side magnetic members MM, a configuration may be made where a soft magnetic substance such as an iron plate or the like is used as a base body C51d, and this base body C51d may be used as an integrally-formed movable-side magnetic member CMM. This eliminates the need to prepare multiple movable-side magnetic members CMM, and the need to position each on the base body C51d. Accordingly, an operating device 102 imparting a sense of moderation can be fabricated even more easily.

### Fourth Modification

While description has been made of the first embodiment regarding a configuration where the base body 11d has a flat form, a configuration may be made using a plate-shaped base body C61d partly bend and having a stepped portion, as illustrated in Fig. 43A.

### Fifth Modification

A configuration may be made such as illustrated in Fig. 43B, where shock absorbing members C17 (C17a, C17b, C17c, C17d) fabricated of synthetic resin are provided between the abutting portions TTp (TTp₁, TTp₂, TTp₃, TTp₄) and the stopper portions 16 (16a, 16b, 16c, 16d) of the first embodiment. Thus, the impact of the abutting portions TTp coming into contact with the stopper portions 16 can be reduced, and sound generated by this contact can be lessened.

### Sixth Modification

A configuration may be made such as illustrated in Fig. 43C, where gap members G18 (G18a, G18b, G18c, G18d) fabricated of synthetic resin are provided between the movable-side magnetic members MM (first movable magnet M14, second movable magnet M24, third movable magnet M34, fourth movable magnet M44) and the opposing-side magnetic members TM (first opposing magnet T14, second opposing magnet T24, third opposing magnet T34, fourth opposing magnet T44) according to the first embodiment described above. Accordingly, the impact of the abutting portions TTp and stopper portions 16 coming into contact can be reduced, and sound generated by this contact and damage to the movable-side magnetic members MM and opposing-side magnetic members TM can be lessened.

### Seventh Modification

While description has been made of the second embodiment regarding a configuration using four sets of the movable-side magnetic members MM and opposing-side magnetic members TM using the first magnetic member MT14, second magnetic member MT24, third magnetic member MT34, and fourth magnetic member MT44, a configuration may be made such as illustrated in Fig. 44A for example, further including a fifth magnetic member MT54 and sixth magnetic member MT64, and a seventh magnetic member MT74 and eighth magnetic member MT84, so as to have eight sets of movable-side magnetic members MM and opposing-side magnetic members TM. In doing so, a stopper portion 26e is provided as to an abutting portion TTq₅ of the fifth magnetic member MT54, and a stopper portion 26f is provided as to an abutting portion TTq₆ of the sixth magnetic member MT64, so that the distance between abutting portion TTq and stopper portion 26 is longer in the order of stopper portion 26a, stopper portion 26b, stopper portion 26e, and stopper portion 26f. In the same way, a stopper portion 26g is provided as to an abutting portion TTq₇ of the seventh magnetic member MT74, and a stopper portion 26h is provided as to an abutting portion TTq₈ of the eighth magnetic member MT84, so that the distance between abutting portion TTq and stopper portion 26 is longer in the order of stopper portion 26c, stopper portion 26d, stopper portion 26g, and stopper portion 26h. Thus, four positions can be provided in the Y1 direction (one direction), and sense of moderation (clicking sensation) can be obtained for the four positions. In the same way, four positions can be provided in the Y2 direction (other direction), and sense of moderation (clicking sensation) can be obtained for the four positions. The configuration is not restricted to four sets or eight sets of movable-side magnetic members MM and opposing-side magnetic members TM however, and the number may be six sets, or more than eight sets.

### Eighth Modification

A configuration may be made such as illustrated in Fig. 44B, where shock absorbing members C27 (C27a, C27b) fabricated of synthetic resin are provided between the base body 21d according to the second embodiment described above and the movable-side magnetic members MM and opposing-side magnetic members TM. Accordingly, the impact of the opposing-side magnetic members TM and the base body 21d coming into contact by attraction can be reduced, and sound generated by this contact and damage to the opposing-side magnetic members TM can be lessened.

### Ninth Modification

A configuration may be made regarding the second embodiment where shock absorbing members fabricated of synthetic resin are provided between the abutting portions TTq and the stopper portions 26 in the same way as with the fifth modification, although omitted from illustration. Thus, the impact of the abutting portions TTq coming into contact with the stopper portions 16 can be reduced, and sound generated by this contact can be lessened.

### Tenth Modification

While description has been made of the second embodiment regarding a configuration where a combination of permanent magnet EM4 and yoke YM4 is used for both of the pairs of movable-side magnetic members MM and opposing-side magnetic members TM, it is sufficient for at least one of the pairs of movable-side magnetic members MM and opposing-side magnetic members TM to be a permanent magnet EM4, so an arrangement may be made where one is an electromagnet. Alternatively, only permanent magnets EM4 may be used. Note however, in this case, a material for the providing the abutting portion TTq instead of the yoke YM4 is necessary.

### Eleventh Modification

While description has been made of the third embodiment regarding a configuration where the positions at which the movable-side magnetic members MM and opposing-side magnetic members TM are attracted to each other, i.e., the positions of contact, are slightly away from each other and facing each other, a configuration may be made where shock absorbing members fabricated of synthetic resin are provided between the movable-side magnetic members MM and opposing-side magnetic members TM. Thus, the impact of the movable-side magnetic members MM and opposing-side magnetic members TM coming into contact by attraction can be reduced, and sound generated by this contact and damage to the opposing-side magnetic members TM can be lessened.

### Twelfth Modification

A configuration may be made regarding the third embodiment where shock absorbing members fabricated of synthetic resin are provided between the abutting portions TTq and the stopper portions 36, in the same way as with the fifth modification, although omitted from illustration. Thus, the impact of the abutting portions TTq coming into contact with the stopper portions 36 can be reduced, and sound generated by this contact can be lessened.

### Thirteenth Modification

While description has been made of the fourth embodiment regarding a configuration where the opposing-side magnetic members TM are partially grasped between the fixing member 43 and tilting member 42A, a configuration may be made where the opposing-side magnetic members TM are fixed to one or the other of the fixing member 43 and tilting member 42A by adhesive agent or screwing or the like. In this case, in an arrangement where the opposing-side magnetic members TM are fixed to the fixing member 43 side, the stopper portions 46 are provided only to the fixing member 43 side, and in an arrangement where the opposing-side magnetic members TM are fixed to the tilting member 42A side, the stopper portions 46 are provided only to the tilting member 42A side.

### Fourteenth Modification

While description has been made in the above embodiments where the operating device 101 through operating device 104 are applied to an electronically-controlled vehicular shift device 500, vehicular shift device 600, vehicular shift device 630, and vehicular shift device 700, the present invention is not restricted thusly, and may be applied to mechanically-controlled vehicular shift devices as well. Application is not restricted to vehicular shift devices, and may be applied to other input devices as well, such as for gaming devices and so forth.

### Fifteenth Modification

While description has been made in the above embodiments where the position detecting means 5S (first position detecting means 51S and second position detecting means 52S) use a rotary potentiometer, the present invention is not restricted thusly. For example, a magnetic sensor may be used to detect the movement of the movable-side magnetic members MM or opposing-side magnetic members TM.

The present invention is not restricted to the above-described embodiments, and various modifications may be made without departing from the scope of the appended claims.

## Claims

1. An operating device (101, 102, 103, 104, C111, C121, C131, C141, C151, C161, C172, C182) in which an operating member (11, 21, 31, 41) assumes a plurality of positions by tilting operations from a reference position by an operator, the operating device (101, 102, 103, 104, C111, C121, C131, C141, C151, C161, C172, C182) comprising:
the operating member (11, 21, 31, 41) capable of tilting action by operations performed by the operator;
a supporting member (11d, 21d, 31d, 41d, C51d, C61d) that tiltably supports the operating member (11, 21, 31, 41);
a plurality of stopper portions (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) corresponding to the plurality of positions;
a plurality of movable-side magnetic members (MM, CMM) that perform the tilting action along with the operating member (11, 21, 31, 41); and
a plurality of opposing-side magnetic members (TM) which are disposed facing each of the plurality of movable-side magnetic members (MM, CMM);
wherein, in a case where the operating member (11, 21, 31, 41) is at the reference position, the movable-side magnetic members (MM, CMM) and the facing opposing-side magnetic members (TM) are all attracted;
and wherein, in a case where the operating member (11, 21, 31, 41) has been tilted from the reference position and is at any one of the plurality of positions, the plurality of movable-side magnetic members (MM, CMM) are subjected to the tilting action, and **characterised in that**:
each of the stopper portions (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) stop the tilting action of the respective opposing-side magnetic members (TM).

2. The operating device (101, 102, 103, 104, C111, C121, C131, C141, C151, C161, C172, C182) according to Claim 1,
wherein the supporting member (11d, 21d, 31d, 41d, C51d, C61d) includes a tilting shaft (12e, 22e, 32e, 42e) enabling the tilting action of the operating member (11, 21, 31, 41),
wherein the operating member (11, 21, 31, 41) includes
a cylindrical operating shaft (12j, 22j, 32j, 42j), and
a plate-shaped base body (12d, 22d, 32d, 42d, C51d, C61d) which extends along a plane through which the axial center of the operating shaft (12j, 22j, 32j, 42j) passes,
wherein the base body (12d, 22d, 32d, 42d, C51d, C61d) turns on the tilting shaft (12e, 22e, 32e, 42e) as the axial center,
wherein the plurality of movable-side magnetic members (MM, CMM) are disposed on the base body (12d, 22d, 32d, 42d, C51d, C61d) in order in a tilting direction,
wherein the plurality of stopper portions (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) are disposed in order in the tilting direction,
wherein each of the opposing-side magnetic members (TM) includes an abutting portion (TTp, TTp₁, TTp₂, TTp₃, TTp₄, TTp₅, TTp₆) that comes into contact with the stopper portions (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) when the operating member (11, 21, 31, 41) is tilted,
and wherein the distances between the stopper portions (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) and the abutting portions (TTp, TTp₁, TTp₂, TTp₃, TTp₁, TTp₅, TTp₆) gradually change at the reference position.

3. The operating device (101, 102, 103, 104, C111, C121, C131, C141, C151, C161, C172, C182) according to Claim 2,
wherein the supporting member (11d, 21d, 31d, 41d, C51d, C61d) includes a pair of supporting plates (12C₃, 12C₄) which support both ends of the tilting shaft (12e, 22e, 32e, 42e),
and wherein the plurality of stopper portions (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) are provided on an end of the supporting plates (12C₃, 12C₄) at one side.

4. The operating device (101, 102, 103, 104, C111, C121, C131, C141, C151, C161, C172, C182) according to either of Claims 2 and 3,
wherein the plurality of movable-side magnetic members (MM, CMM) are formed integrally,
wherein the base body (12d, 22d, 32d, 42d, C51d, C61d) is formed of a soft magnetic substance,
and wherein the base body (12d, 22d, 32d, 42d, C51d, C61d) serves as the movable-side magnetic members (MM, CMM).

5. The operating device (101, 102, 103, 104, C111, C121, C131, C141, C151, C161, C172, C182) according to any one of Claims 1 through 4,
wherein the movable-side magnetic members (MM, CMM) and opposing-side magnetic members (TM) are disposed at positions where attraction acting therebetween is not lost when the operating member (11, 21, 31, 41) is tilted and the movable-side magnetic members (MM, CMM) and opposing-side magnetic members (TM) are separated.

6. The operating device (101, 102, 103, 104, C111, C121, C131, C141, C151, C161, C172, C182) according to Claim 1,
wherein the supporting member (11d, 21d, 31d, 41d, C51d, C61d) includes a tilting shaft (12e, 22e, 32e, 42e) enabling the tilting action of the operating member (11, 21, 31, 41),
wherein the operating member (11, 21, 31, 41) includes
a cylindrical operating shaft (12j, 22j, 32j, 42j), and
a base body (12d, 22d, 32d, 42d, C51d, C61d) which extends along a plane through which the axial center of the operating shaft (12j, 22j, 32j, 42j) passes,
wherein the base body (12d, 22d, 32d, 42d, C51d, C61d) turns on the tilting shaft (12e, 22e, 32e, 42e) as the axial center,
wherein the plurality of movable-side magnetic members (MM, CMM) are disposed on the base body (12d, 22d, 32d, 42d, C51d, C61d) across the tilting shaft (12e, 22e, 32e, 42e),
wherein the plurality of stopper portions (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) are disposed across the tilting shaft (12e, 22e, 32e, 42e),
wherein each of the opposing-side magnetic members (TM) includes an abutting portion (TTp, TTp₁, TTp₂, TTp₃, TTp₄, TTp₅, TTp₆) that comes into contact with the stopper portions (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) when the operating member (11, 21, 31, 41) is tilted,
and wherein the distances between the plurality of stopper portions (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) and the abutting portions (TTp, TTp₁, TTp₂, TTp₃, TTp₄, TTp₅, TTp₆) are not the same at the reference position.

7. The operating device (101, 102, 103, 104, C111, C121, C131, C141, C151, C161, C172, C182) according to Claim 6,
wherein the base body (12d, 22d, 32d, 42d, C51d, C61d) is formed of a soft magnetic substance,
wherein the movable-side magnetic members (MM, CMM) and the opposing-side magnetic members (TM) are disposed grasping the base body (12d, 22d, 32d, 42d, C51d, C61d),
and wherein the movable-side magnetic members (MM, CMM) when the base body (12d, 22d, 32d, 42d, C51d, C61d) is tilted in one direction are used as the opposing-side magnetic members (TM) when the base body (12d, 22d, 32d, 42d, C51d, C61d) is tilted in the other direction, and the opposing-side magnetic members (TM) when the base body (12d, 22d, 32d, 42d, C51d, C61d) is tilted in one direction are used as the movable-side magnetic members (MM, CMM) when the base body (12d, 22d, 32d, 42d, C51d, C61d) is tilted in the other direction.

8. The operating device (101, 102, 103, 104, C111, C121, C131, C141, C151, C161, C172, C182) according to Claim 7,
wherein the opposing-side magnetic members (TM) and base body (12d, 22d, 32d, 42d, C51d, C61d) are disposed at positions where attraction acting therebetween is not lost when the operating member (11, 21, 31, 41) is tilted and the opposing-side magnetic members (TM) and base body (12d, 22d, 32d, 42d, C51d, C61d) are separated.

9. The operating device (101, 102, 103, 104, C111, C121, C131, C141, C151, C161, C172, C182) according to any one of Claims 1 through 8,
wherein at least one of the movable-side magnetic members (MM, CMM) and opposing-side magnetic members (TM) are permanent magnets (EM4),
and wherein the permanent magnets (EM4) each have a yoke (YM4) covering portions thereof other than an opposing face.

10. The operating device (101, 102, 103, 104, C111, C121, C131, C141, C151, C161, C172, C182) according to Claim 6,
wherein the base body (12d, 22d, 32d, 42d, C51d, C61d) is formed of a non-magnetic substance,
wherein both of the movable-side magnetic members (MM, CMM) and opposing-side magnetic members (TM) are permanent magnets (EM4),
wherein the movable-side magnetic members (MM, CMM) and opposing-side magnetic members (TM) are disposed at position attracting each other in a non-operated state and grasping the base body (12d, 22d, 32d, 42d, C51d, C61d) therebetween,
and wherein the movable-side magnetic members (MM, CMM) when the base body (12d, 22d, 32d, 42d, C51d, C61d) is tilted in one direction are used as the opposing-side magnetic members (TM) when the base body (12d, 22d, 32d, 42d, C51d, C61d) is tilted in the other direction, and the opposing-side magnetic members (TM) when the base body (12d, 22d, 32d, 42d, C51d, C61d) is tilted in one direction are used as the movable-side magnetic members (MM, CMM) when the base body (12d, 22d, 32d, 42d, C51d, C61d) is tilted in the other direction.

11. The operating device (101, 102, 103, 104, C111, C121, C131, C141, C151, C161, C172, C182) according to Claim 10,
wherein the movable-side magnetic members (MM, CMM) and opposing-side magnetic members (TM) are disposed at positions where attraction acting therebetween is not lost when the operating member (11, 21, 31, 41) is tilted and the movable-side magnetic members (MM, CMM) and opposing-side magnetic members (TM) are separated.

12. The operating device (101, 102, 103, 104, C111, C121, C131, C141, C151, C161, C172, C182) according to either of Claims 10 and 11,
wherein the permanent magnets (EM4) each have a yoke (YM4) covering portions thereof other than an opposing face.

13. The operating device (101, 102, 103, 104, C111, C121, C131, C141, C151, C161, C172, C182) according to Claim 1,
wherein the supporting member (11d, 21d, 31d, 41d, C51d, C61d) includes a tilting shaft (12e, 22e, 32e, 42e) enabling the tilting action of the operating member (11, 21, 31, 41),
wherein the operating member (11, 21, 31, 41) includes
a cylindrical operating shaft (12j, 22j, 32j, 42j), and
a base body (12d, 22d, 32d, 42d, C51d, C61d) which extends along a plane through which the axial center of the operating shaft (12j, 22j, 32j, 42j) passes,
wherein the base body (12d, 22d, 32d, 42d, C51d, C61d) turns on the tilting shaft (12e, 22e, 32e, 42e) as the axial center,
wherein the base body (12d, 22d, 32d, 42d, C51d, C61d) includes a first pressing portion (41p) and a second pressing portion (41q) which abut the movable-side magnetic members (MM, CMM),
wherein the movable-side magnetic members (MM, CMM) include a first movable-side magnetic member (MF14) pressed by the first pressing portion (41p) and a second movable-side magnetic member (MF24) pressed by the second pressing portion (41q),
wherein the first movable-side magnetic member (MF14) and the second movable-side magnetic member (MF24) are disposed across the tilting shaft (12e, 22e, 32e, 42e),
wherein the opposing-side magnetic members (TM) include a first opposing-side magnetic member (TF14) opposing the first movable-side magnetic member (MF14) and a second opposing-side magnetic member (TF24) opposing the second movable-side magnetic member (MF24),
wherein the first movable-side magnetic member (MF14) and the second movable-side magnetic member (MF24) are soft magnetic substances,
wherein the first opposing-side magnetic member (TF14) and second opposing-side magnetic member (TF24) are permanent magnets (EM4),
wherein, when the operating member (11, 21, 31, 41) is operated by tilting in one direction, the first pressing portion (41p) at the tilting operation side of the base body (12d, 22d, 32d, 42d, C51d, C61d) presses the first movable-side magnetic member (MF14), the stopper portion (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) stops the tilting action of the first opposing-side magnetic member (TF14), and attraction between the first movable-side magnetic member (MF14) and the first opposing-side magnetic member (TF14) is released,
and wherein, when the tilting operation is continued in the same direction, the second pressing portion (41q) at the opposite side from the tilting operation side presses the second movable-side magnetic member (MF24), the stopper portion (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) stops the tilting action of the second opposing-side magnetic member (TF24), and attraction between the second movable-side magnetic member (MF24) and the second opposing-side magnetic member (TF24) is released.

14. The operating device (101, 102, 103, 104, C111, C121, C131, C141, C151, C161, C172, C182) according to Claim 13,
wherein the movable-side magnetic members (MM, CMM) further include a second movable-side magnetic member (MF24) facing the first movable-side magnetic member (MF14) across the first opposing-side magnetic member (TF14), and a first movable-side magnetic member (MF14) facing the second movable-side magnetic member (MF24) across the second opposing-side magnetic member (TF24),
wherein, when the operating member (11, 21, 31, 41) is operated by tilting in the other direction, the first pressing portion (41p) at the tilting operation side of the base body (12d, 22d, 32d, 42d, C51d, C61d) presses the first movable-side magnetic member (MF14), the stopper portion (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) stops the tilting action of the second opposing-side magnetic member (TF24), and attraction between the first movable-side magnetic member (MF14) and the second opposing-side magnetic member (TF24) is released,
and wherein, when the tilting operation is continued in the same direction, the second pressing portion (41q) at the opposite side from the tilting operation side presses the second movable-side magnetic member (MF24), the stopper portion (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) stops the tilting action of the first opposing-side magnetic member (TF14), and attraction between the second movable-side magnetic member (MF24) and the first opposing-side magnetic member (TF14) is released.

15. The operating device (101, 102, 103, 104, C111, C121, C131, C141, C151, C161, C172, C182) according to either of Claims 13 and 14,
wherein the movable-side magnetic members (MM, CMM) and opposing-side magnetic members (TM) are disposed at positions where attraction acting therebetween is not lost when the operating member (11, 21, 31, 41) is tilted and the movable-side magnetic members (MM, CMM) and opposing-side magnetic members (TM) are separated.

16. A vehicular shift device (500, 600, 630, 700) comprising:
the operating device (101, 102, 103, 104, C111, C121, C131, C141, C151, C161, C172, C182) according to any one of Claims 1 through 15;
a control unit (50c, 60C, 63C, 70C) configured to receive signals from the operating device (101, 102, 103, 104, C111, C121, C131, C141, C151, C161, C172, C182) and transmit the signals to vehicle-side equipment;
a shift knob (50N, 60N, 63N, 70N) engaged with the operating member (11, 21, 31, 41) of the operating device (101, 102, 103, 104, C111, C121, C131, C141, C151, C161, C172, C182), to be gripped by the operator; and
position detecting means (5S, 51S, 52S) that detect the plurality of positions where the operating member (11, 21, 31, 41) is situated.

## Patentansprüche

1. Betätigungsvorrichtung (101, 102, 103, 104, C111, C121, C131, C141, C151, C161, C172, C182), bei der ein Betätigungselement (11, 21, 31, 41) eine Mehrzahl von Positionen durch Kippbewegungsvorgänge von einer Referenzposition durch eine Bedienungsperson einnimmt, wobei die Betätigungsvorrichtung (101, 102, 103, 104, C111, C121, C131, C141, C151, C161, C172, C182) Folgendes aufweist:
das Betätigungselement (11, 21, 31, 41), das sich durch von der Bedienungsperson ausgeführte Betätigungen kippen lässt;
ein Abstützelement (11 d, 21 d, 31 d, 41 d, C51d, C61d), das das Betätigungselement (11, 21, 31, 41) kippbeweglich abstützt;
eine Mehrzahl von Anschlagbereichen (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) entsprechend der Mehrzahl von Positionen;
eine Mehrzahl von Magnetelementen (MM, CMM) auf der beweglichen Seite, die die Kippbewegung zusammen mit dem Betätigungselement (11, 21, 31, 41) ausführen; und
eine Mehrzahl von Magnetelementen (TM) auf der gegenüberliegenden Seite, die jeweils der Mehrzahl von Magnetelementen (MM, CMM) auf der beweglichen Seite zugewandt gegenüberliegend angeordnet sind;
wobei in einem Fall, in dem sich das Betätigungselement (11, 21, 31, 41) in der Referenzposition befindet, die Magnetelemente (MM, CMM) auf der beweglichen Seite und die zugewandten Magnetelemente (TM) auf der gegenüberliegenden Seite alle angezogen sind;
und wobei in einem Fall, in dem das Betätigungselement (11, 21, 31, 41) von der Referenzposition gekippt worden ist und sich in einer beliebigen der Mehrzahl von Positionen befindet, die Mehrzahl von Magnetelementen (MM, CMM) auf der beweglichen Seite der Kippbewegung unterzogen werden, und
**dadurch gekennzeichnet, dass** die jeweiligen Anschlagbereiche (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) die Kippbewegung der jeweiligen Magnetelemente (TM) auf der gegenüberliegenden Seite stoppen.

2. Betätigungsvorrichtung (101, 102, 103, 104, C111, C121, C131, C141, C151, C161, C172, C182) nach Anspruch 1,
wobei das Abstützelement (11 d, 21 d, 31 d, 41 d, C51d, C61d) eine Kippwelle (12e, 22e, 32e, 42e) aufweist, die die Kippbewegung des Betätigungselements (11, 21, 31, 41) ermöglicht,
wobei das Betätigungselement (11, 21, 31, 41) einen zylindrischen Betätigungsschaft (12j, 22j, 32j, 42j) und einen plattenförmigen Grundkörper (12d, 22d, 32d, 42d, C51d, C61d) aufweist, der sich entlang einer Ebene erstreckt, durch die die axiale Mitte des Betätigungsschafts (12j, 22j, 32j, 42j) hindurchgeht,
wobei sich der Grundkörper (12d, 22d, 32d, 42d, C51d, C61d) auf der Kippwelle (12e, 22e, 32e, 42e) als der axialen Mitte dreht,
wobei die Mehrzahl der Magnetelemente (MM, CMM) auf der beweglichen Seite an dem Grundkörper (12d, 22d, 32d, 42d, C51d, C61d) nacheinander in einer Kipprichtung angeordnet sind,
wobei die Mehrzahl von Anschlagbereichen (16, 16a, 16b, 16c, 16d, 16e, 16f, 26, 26a, 26b, 26c, 26d, 26e, 26f, 26g, 26h, 36, 36a, 36b, 36c, 36d, 46 , 46a, 46b, 46c, 46d) nacheinander in der Kipprichtung angeordnet sind, wobei jedes der Magnetelemente (TM) auf der gegenüberliegenden Seite einen Anlagebereich (TTp, TTp₁, TTp₂, TTp₃, TTp₄, TTp₅, TTp₆) aufweist, der mit den Anschlagbereichen (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) in Kontakt kommt, wenn das Betätigungselement (11, 21, 31, 41) gekippt wird,
und wobei sich die Abstände zwischen den Anschlagbereichen (16, 16a, 16b, 16c, 16d, 16e, 16f, 26, 26a, 26b, 26c, 26d, 26e, 26f, 26g, 26h, 36, 36a, 36b, 36c, 36d , 46, 46a, 46b, 46c, 46d) und den Anlagebereichen (TTp, TTp₁, TTp₂, TTp₃, TTp₄, TTp₅, TTp₆) an der Referenzposition allmählich ändern.

3. Betätigungsvorrichtung (101, 102, 103, 104, C111, C121, C131, C141, C151, C161, C172, C182) nach Anspruch 2,
wobei das Abstützelement (11 d, 21 d, 31 d, 41d, C51d, C61d) ein Paar von Abstützplatten (12C₃, 12C₄) aufweist, die beide Enden der Kippwelle (12e, 22e, 32e, 42e) abstützen,
und wobei die Mehrzahl von Anschlagbereichen (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) an einem auf der einen Seite befindlichen Ende der Abstützplatten (12C₃, 12C₄) vorgesehen ist.

4. Betätigungsvorrichtung (101, 102, 103, 104, C111, C121, C131, C141, C151, C161, C172, C182) nach einem der Ansprüche 2 und 3,
wobei die Mehrzahl der Magnetelemente (MM, CMM) auf der beweglichen Seite einstückig ausgebildet ist,
wobei der Grundkörper (12d, 22d, 32d, 42d, C51d, C61d) aus einer weichmagnetischen Substanz gebildet ist,
und wobei der Grundkörper (12d, 22d, 32d, 42d, C51d, C61d) als die auf der beweglichen Seite befindlichen Magnetelemente (MM, CMM) dient.

5. Betätigungsvorrichtung (101, 102, 103, 104, C111, C121, C131, C141, C151, C161, C172, C182) nach einem der Ansprüche 1 bis 4,
wobei die Magnetelemente (MM, CMM) auf der beweglichen Seite und die Magnetelemente (TM) auf der gegenüberliegende Seite in Positionen angeordnet sind, an denen eine dazwischen wirkende Anziehungskraft nicht verloren geht, wenn das Betätigungselement (11, 21, 31, 41) gekippt wird und die Magnetelemente (MM, CMM) auf der beweglichen Seite und die Magnetelemente (TM) auf der gegenüberliegen Seite getrennt werden.

6. Betätigungsvorrichtung (101, 102, 103, 104, C111, C121, C131, C141, C151, C161, C172, C182) nach Anspruch 1,
wobei das Abstützelement (11 d, 21 d, 31 d, 41 d, C51 d, C61 d) eine Kippwelle (12e, 22e, 32e, 42e) aufweist, die die Kippbewegung des Betätigungselements (11, 21, 31, 41) ermöglicht,
wobei das Betätigungselement (11, 21, 31, 41) einen zylindrischen Betätigungsschaft (12j, 22j, 32j, 42j) und einen Grundkörper (12d, 22d, 32d, 42d, C51d, C61d) aufweist, der sich entlang einer Ebene erstreckt, die durch die axiale Mitte des Betätigungsschafts (12j, 22j, 32j, 42j) hindurchgeht,
wobei sich der Grundkörper (12d, 22d, 32d, 42d, C51d, C61d) auf der Kippwelle (12e, 22e, 32e, 42e) als der axialen Mitte dreht,
wobei die Mehrzahl der Magnetelemente (MM, CMM) auf der beweglichen Seite an dem Grundkörper (12d, 22d, 32d, 42d, C51 d, C61 d) über die Kippwelle (12e, 22e, 32e, 42e) hinweg angeordnet ist,
wobei die Mehrzahl von Anschlagbereichen (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) über die Kippwelle (12e, 22e, 32e, 42e) hinweg angeordnet ist,
wobei jedes der Magnetelemente (TM) auf der gegenüberliegenden Seite einen Anlagebereich (TTp, TTp₁, TTp₂, TTp₃, TTp₄, TTp₅, TTp₆) aufweist, der mit den Anschlagbereichen (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) in Kontakt kommt, wenn das Betätigungselement (11, 21 , 31, 41) gekippt wird,
und wobei die Abstände zwischen der Mehrzahl von Anschlagbereichen (16, 16a, 16b, 16c, 16d, 16e, 16f, 26, 26a, 26b, 26c, 26d, 26e, 26f, 26g, 26h, 36, 36a, 36b, 36c , 36d, 46, 46a, 46b, 46c, 46d) und den Anlagebereichen (TTp, TTp₁, TTp₂, TTp₃, TTp₄, TTp₅, TTp₆) in der Referenzposition nicht gleich sind.

7. Betätigungsvorrichtung (101, 102, 103, 104, C111, C121, C131, C141, C151, C161, C172, C182) nach Anspruch 6,
wobei der Grundkörper (12d, 22d, 32d, 42d, C51 d, C61 d) aus einer weichmagnetischen Substanz gebildet ist,
wobei die Magnetelemente (MM, CMM) auf der beweglichen Seite und die Magnetelemente (TM) auf der gegenüberliegenden Seite den Grundkörper (12d, 22d, 32d, 42d, C51d, C61 d) greifend angeordnet sind,
und wobei die Magnetelemente (MM, CMM) auf der beweglichen Seite, wenn der Grundkörper (12d, 22d, 32d, 42d, C51d, C61d) in die eine Richtung gekippt wird, als die Magnetelemente (TM) auf der gegenüberliegenden Seite verwendet werden, wenn der Grundkörper (12d, 22d, 32d, 42d, C51d, C61d) in die andere Richtung gekippt wird, und die Magnetelemente (TM) auf der gegenüberliegenden Seite, wenn der Grundkörper (12d, 22d, 32d, 42d, C51 d, C61 d) in die eine Richtung gekippt wird, als die Magnetelemente (MM, CMM) auf der beweglichen Seite verwendet werden, wenn der Grundkörper (12d, 22d, 32d, 42d, C51d, C61d) in die andere Richtung gekippt wird.

8. Betätigungsvorrichtung (101, 102, 103, 104, C111, C121, C131, C141, C151, C161, C172, C182) nach Anspruch 7,
wobei die Magnetelemente (TM) auf der gegenüberliegenden Seite und der Grundkörper (12d, 22d, 32d, 42d, C51d, C61d) in Positionen angeordnet sind, in denen eine dazwischen wirkende Anziehungskraft nicht verloren geht, wenn das Betätigungselement (11, 21, 31, 41) gekippt wird und die Magnetelemente (TM) auf der gegenüberliegenden Seite und der Grundkörper (12d, 22d, 32d, 42d, C51 d, C61 d) getrennt werden.

9. Betätigungsvorrichtung (101, 102, 103, 104, C111, C121, C131, C141, C151, C161, C172, C182) nach einem der Ansprüche 1 bis 8,
wobei mindestens eines der Magnetelemente (MM, CMM) auf der beweglichen Seite und eines der Magnetelemente (TM) auf der gegenüberliegenden Seite Permanentmagnete (EM4) sind,
und wobei die Permanentmagnete (EM4) jeweils ein Joch (YM4) aufweisen, das Bereiche desselben mit Ausnahme einer gegenüberliegenden Fläche bedeckt.

10. Betätigungsvorrichtung (101, 102, 103, 104, C111, C121, C131, C141, C151, C161, C172, C182) nach Anspruch 6,
wobei der Grundkörper (12d, 22d, 32d, 42d, C51d, C61d) aus einer nichtmagnetischen Substanz gebildet ist,
wobei sowohl die Magnetelemente (MM, CMM) auf der beweglichen Seite als auch die Magnetelemente (TM) auf der gegenüberliegenden Seite Permanentmagnete (EM4) sind,
wobei die Magnetelemente (MM, CMM) auf der beweglichen Seite und die Magnetelemente (TM) auf der gegenüberliegenden Seite in einer Position angeordnet sind, in der sie sich in einem unbetätigten Zustand gegenseitig anziehen und den Grundkörper (12d, 22d, 32d, 42d, C51d, C61d) dazwischen greifen,
und wobei die Magnetelemente (MM, CMM) auf der beweglichen Seite, wenn der Grundkörper (12d, 22d, 32d, 42d, C51d, C61d) in die eine Richtung gekippt wird, als die Magnetelemente (TM) auf der gegenüberliegenden Seite verwendet werden, wenn der Basiskörper (12d, 22d, 32d, 42d, C51d, C61d) in die andere Richtung gekippt wird, und die Magnetelemente (TM) auf der gegenüberliegenden Seite, wenn der Grundkörper (12d, 22d, 32d, 42d, C51d, C61d) in die eine Richtung gekippt wird, als die Magnetelemente (MM, CMM) auf der beweglichen Seite verwendet werden, wenn der Grundkörper (12d, 22d, 32d, 42d, C51d, C61d) in die andere Richtung gekippt wird.

11. Betätigungsvorrichtung (101, 102, 103, 104, C111, C121, C131, C141, C151, C161, C172, C182) nach Anspruch 10,
wobei die Magnetelemente (MM, CMM) auf der beweglichen Seite und die Magnetelemente (TM) auf der gegenüberliegenden Seite in Positionen angeordnet sind, in denen eine dazwischen wirkende Anziehungskraft nicht verloren geht, wenn das Betätigungselement (11, 21, 31, 41) gekippt wird und die Magnetelemente (MM, CMM) auf der beweglichen Seite und die Magnetelemente (TM) auf der gegenüberliegende Seite getrennt werden.

12. Betätigungsvorrichtung (101, 102, 103, 104, C111, C121, C131, C141, C151, C161, C172, C182) nach einem der Ansprüche 10 und 11,
wobei die Permanentmagnete (EM4) jeweils ein Joch (YM4) aufweisen, das Bereiche desselben mit Ausnahme einer gegenüberliegende Seite bedeckt.

13. Betätigungsvorrichtung (101, 102, 103, 104, C111, C121, C131, C141, C151, C161, C172, C182) nach Anspruch 1,
wobei das Abstützelement (11 d, 21 d, 31 d, 41 d, C51 d, C61 d) eine Kippwelle (12e, 22e, 32e, 42e) aufweist, die die Kippbewegung des Betätigungselements (11, 21, 31, 41) ermöglicht,
wobei das Betätigungselement (11, 21, 31, 41) einen zylindrischen Betätigungsschaft (12j, 22j, 32j, 42j) und einen Grundkörper (12d, 22d, 32d, 42d, C51d, C61d) aufweist, der sich entlang einer Ebene erstreckt, durch die die axiale Mitte des Betätigungsschafts (12j, 22j, 32j, 42j) hindurchgeht,
wobei sich der Grundkörper (12d, 22d, 32d, 42d, C51d, C61d) auf der Kippwelle (12e, 22e, 32e, 42e) als der axialen Mitte dreht,
wobei der Grundkörper (12d, 22d, 32d, 42d, C51d, C61d) einen ersten Druckbeaufschlagungsbereich (41p) und einen zweiten Druckbeaufschlagungsbereich (41 q) aufweist, die an den Magnetelementen (MM, CMM) auf der beweglichen Seite anliegen,
wobei die Magnetelemente (MM, CMM) auf der beweglichen Seite ein erstes Magnetelement (MF14) auf der beweglichen Seite, das durch den ersten Druckbeaufschlagungsbereich (41p) mit Druck beaufschlagt wird, und ein zweites Magnetelement (MF24) auf der beweglichen Seite aufweisen, das von dem zweiten Druckbeaufschlagungsbereich (41 q) mit Druck beaufschlagt wird,
wobei das erste Magnetelement (MF14) auf der beweglichen Seite und das zweite Magnetelement (MF24) auf der beweglichen Seite über die Kippwelle (12e, 22e, 32e, 42e) hinweg angeordnet sind,
wobei die Magnetelemente (TM) auf der gegenüberliegenden Seite ein erstes Magnetelement (TF14) auf der gegenüberliegenden Seite, das dem ersten Magnetelement (MF14) auf der beweglichen Seite gegenüberliegt, und ein zweites Magnetelement (TF24) auf der gegenüberliegenden Seite aufweisen, das dem zweiten Magnetelement (MF24) auf der beweglichen Seite gegenüberliegt,
wobei das erste Magnetelement (MF14) auf der beweglichen Seite und das zweite Magnetelement (MF24) auf der beweglichen Seite weichmagnetische Substanzen sind,
wobei das erste Magnetelement (TF14) auf der gegenüberliegenden Seite und das zweite Magnetelement (TF24) auf der gegenüberliegenden Seite Permanentmagnete (EM4) sind,
wobei dann, wenn das Betätigungselement (11, 21, 31, 41) durch Kippen in der einen Richtung betätigt wird, der erste Druckbeaufschlagungsbereich (41p) auf der Kippbetätigungsseite des Grundkörpers (12d, 22d, 32d, 42d, C51d, C61d) das erste Magnetelement (MF14) auf der beweglichen Seite mit Druck beaufschlagt, der Anschlagbereich (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) die Kippbewegung des ersten Magnetelements (TF14) auf der gegenüberliegenden Seite stoppt und die Anziehungskraft zwischen dem ersten Magnetelement (MF14) auf der beweglichen Seite und dem ersten Magnetelement (TF14) auf der gegenüberliegenden Seite aufgehoben wird,
und wobei dann, wenn der Kippvorgang in der gleichen Richtung fortgesetzt wird, der zweite Druckbeaufschlagungsbereich (41 q) auf der gegenüberliegenden Seite von der Kippbetätigungsseite das zweite Magnetelement (MF24) auf der beweglichen Seite mit Druck beaufschlagt, der Anschlagbereich (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) die Kippbewegung des zweiten Magnetelements (TF24) auf der gegenüberliegenden Seite stoppt und die Anziehungskraft zwischen dem zweiten Magnetelement (MF24) auf der beweglichen Seite und dem zweiten Magnetelement (TF24) auf der gegenüberliegenden Seite aufgehoben wird.

14. Betätigungsvorrichtung (101, 102, 103, 104, C111, C121, C131, C141, C151, C161, C172, C182) nach Anspruch 13,
wobei die Magnetelemente (MM, CMM) auf der beweglichen Seite ferner ein zweites Magnetelement (MF24) auf der beweglichen Seite aufweisen, das dem ersten Magnetelement (MF14) auf der beweglichen Seite über das erste Magnetelement (TF14) auf der gegenüberliegenden Seite hinweg zugewandt gegenüberliegt, sowie ein erstes Magnetelement (MF14) auf der gegenüberliegenden Seite aufweisen, das dem zweiten Magnetelement (MF24) auf der beweglichen Seite über das zweite Magnetelement (TF24) auf der beweglichen Seite hinweg zugewandt gegenüberliegt,
wobei dann, wenn das Betätigungselement (11, 21, 31, 41) durch Kippen in der anderen Richtung betätigt wird, der erste Druckbeaufschlagungsbereich (41p) auf der Kippbetätigungsseite des Grundkörpers (12d, 22d, 32d, 42d, C51d, C61d) das erste Magnetelement (MF14) auf der beweglichen Seite mit Druck beaufschlagt, der Anschlagbereich (16, 16a, 16b, 16c, 16d, 16e, 16f, 26, 26a, 26b, 26c, 26d, 26e, 26f, 26g, 26h , 36, 36a, 36b, 36c, 36d, 46, 46a, 46b, 46c, 46d) die Kippbewegung des zweiten Magnetelements (TF24) auf der gegenüberliegenden Seite stoppt und die Anziehungskraft zwischen dem ersten Magnetelement (MF14) auf der beweglichen Seite und dem zweiten Magnetelement (TF24) auf der gegenüberliegenden Seite aufgehoben wird,
und wobei dann, wenn der Kippvorgang in der gleichen Richtung fortgesetzt wird, der zweite Druckbeaufschlagungsbereich (41q) auf der gegenüberliegenden Seite von der Kippbetätigungsseite das zweite Magnetelement (MF24) auf der beweglichen Seite mit Druck beaufschlagt, der Anschlagbereich (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) die Kippbewegung des ersten Magnetelements (TF14) auf der gegenüberliegenden Seite stoppt und die Anziehungskraft zwischen dem zweiten Magnetelement (MF24) auf der beweglichen Seite und dem ersten Magnetelement (TF14) auf der gegenüberliegenden Seite aufgehoben wird.

15. Betätigungsvorrichtung (101, 102, 103, 104, C111, C121, C131, C141, C151, C161, C172, C182) nach einem der Ansprüche 13 und 14,
wobei die Magnetelemente (MM, CMM) auf der beweglichen Seite und die Magnetelemente (TM) auf der gegenüberliegenden Seite in Positionen angeordnet sind, in denen eine dazwischen wirkende Anziehungskraft nicht verloren geht, wenn das Betätigungselement (11, 21, 31, 41) gekippt wird und die Magnetelemente (MM, CMM) auf der beweglichen Seite und die Magnetelemente (TM) auf der gegenüberliegenden Seite getrennt werden.

16. Fahrzeug-Schaltvorrichtung (500, 600, 630, 700), aufweisend:
die Betätigungsvorrichtung (101, 102, 103, 104, C111, C121, C131, C141, C151, C161, C172, C182) nach einem der Ansprüche 1 bis 15;
eine Steuereinheit (50c, 60C, 63C, 70C), die dazu ausgebildet ist, Signale von der Betätigungsvorrichtung (101, 102, 103, 104, C111, C121, C131, C141, C151, C161, C172, C182) zu empfangen und die Signale zu fahrzeugseitigen Einrichtungen zu übertragen:
einen Schaltknopf (50N, 60N, 63N, 70N), der mit dem Betätigungselement (11, 21, 31, 41) der Betätigungsvorrichtung (101, 102, 103, 104, C111, C121, C131, C141, C151, C161, C172, C182) in Eingriff steht und von der Bedienungsperson gegriffen werden kann; und
Positionserfassungseinrichtungen (5S, 51S, 52S), die die Mehrzahl von Positionen erfassen, in denen sich das Betätigungselement (11, 21, 31, 41) befindet.

## Revendications

1. Dispositif d'actionnement (101, 102, 103, 104, C111, C121, C131, C141, C151, C161, C172, C182) dans lequel un élément d'actionnement (11, 21, 31, 41) prend une pluralité de positions par des opérations de basculement à partir d'une position de référence réalisées par un opérateur, le dispositif d'actionnement (101, 102, 103, 104, C111, C121, C131, C141, C151, C161, C172, C182) comprenant :
l'élément d'actionnement (11, 21, 31, 41) capable d'une action de basculement par les opérations réalisées par l'opérateur ;
un élément de support (11d, 21d, 31d, 41d, C51d, C61d) qui supporte de façon basculante l'élément d'actionnement (11, 21, 31, 41) ;
une pluralité de parties d'arrêt (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) correspondant à la pluralité de positions ;
une pluralité d'éléments magnétiques côté mobile (MM, CMM) qui réalisent l'action de basculement avec l'élément d'actionnement (11, 21, 31, 41) ; et
une pluralité d'éléments magnétiques côté opposé (TM) qui sont placés en face de chacun des éléments magnétiques côté mobile (MM, CMM) ;
dans lequel, dans le cas où l'élément d'actionnement (11, 21, 31, 41) est dans la position de référence, les éléments magnétiques côté mobile (MM, CMM) et les éléments magnétiques côté opposé (TM) situés en face sont tous attirés ;
et dans lequel, dans le cas où l'élément d'actionnement (11, 21, 31, 41) a été basculé depuis la position de référence et se trouve dans une position quelconque de la pluralité de positions, les éléments magnétiques côté mobile (MM, CMM) sont soumis à l'action de basculement, et **caractérisé en ce que** :
chacune des parties d'arrêt (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) arrête l'action de basculement des éléments magnétiques côté opposé (TM) respectifs.

2. Dispositif d'actionnement (101, 102, 103, 104, C111, C121, C131, C141, C151, C161, C172, C182) selon la revendication 1,
dans lequel l'élément de support (11d, 21d, 31d, 41d, C51d, C61d) comprend un axe basculant (12e, 22e, 32e, 42e) qui permet l'action de basculement de l'élément d'actionnement (11, 21, 31, 41),
dans lequel l'élément d'actionnement (11, 21, 31, 41) comprend :
un axe d'actionnement cylindrique (12j, 22j, 32j, 42j), et
un corps de base en forme de plaque (12d, 22d, 32d, 42d, C51d, C61d), qui s'étend le long d'un plan par lequel passe le centre axial de l'axe d'actionnement (12j, 22j, 32j, 42j),
dans lequel le corps de base (12d, 22d, 32d, 42d, C51d, C61d) tourne sur l'axe basculant (12e, 22e, 32e, 42e) en tant que centre axial,
dans lequel les éléments magnétiques côté mobile (MM, CMM) sont disposés sur le corps de base (12d, 22d, 32d, 42d, C51d, C61d) en ordre dans une direction de basculement,
dans lequel les parties d'arrêt (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) sont disposées en ordre dans la direction de basculement,
dans lequel chacun des éléments magnétiques côté opposé (TM) comprend une partie d'appui (TTp, TTp₁, TTp₂, TTp₃, TTp₄, TTp₅, TTp₆) qui entre en contact avec les parties d'arrêt (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) quand l'élément d'actionnement (11, 21, 31, 41) est incliné,
et dans lequel les distances entre les parties d'arrêt (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) et les parties d'appui (TTp, TTp₁, TTp₂, TTp₃, TTp₄, TTp₅, TTp₆) changent progressivement au niveau de la position de référence.

3. Dispositif d'actionnement (101, 102, 103, 104, C111, C121, C131, C141, C151, C161, C172, C182) selon la revendication 2,
dans lequel l'élément de support (11d, 21d, 31d, 41d, C51d, C61d) comprend une paire de plaques de support (12C₃, 12C₄) qui supportent les deux extrémités de l'axe basculant (12e, 22e, 32e, 42e),
et dans lequel les parties d'arrêt (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) sont placées sur une extrémité des plaques de support (12C₃, 12C₄) d'un côté.

4. Dispositif d'actionnement (101, 102, 103, 104, C111, C121, C131, C141, C151, C161, C172, C182) selon l'une quelconque des revendications 2 et 3,
dans lequel les éléments magnétiques côté mobile (MM, CMM) sont formés d'un seul tenant,
dans lequel le corps de base (12d, 22d, 32d, 42d, C51d, C61d) est fait d'une substance magnétique molle,
et dans lequel le corps de base (12d, 22d, 32d, 42d, C51d, C61d) sert d'éléments magnétiques côté mobile (MM, CMM).

5. Dispositif d'actionnement (101, 102, 103, 104, C111, C121, C131, C141, C151, C161, C172, C182) selon l'une quelconque des revendications 1 à 4,
dans lequel les éléments magnétiques côté mobile (MM, CMM) et les éléments magnétiques côté opposé (TM) sont placés en des positions où l'attraction agissant entre eux n'est pas perdue quand on incline l'élément d'actionnement (11, 21, 31, 41) et que les éléments magnétiques côté mobile (MM, CMM) et les éléments magnétiques côté opposé (TM) sont séparés.

6. Dispositif d'actionnement (101, 102, 103, 104, C111, C121, C131, C141, C151, C161, C172, C182) selon la revendication 1,
dans lequel l'élément de support (11d, 21d, 31d, 41d, C51d, C61d) comprend un axe basculant (12e, 22e, 32e, 42e) qui permet l'action de basculement de l'élément d'actionnement (11, 21, 31, 41),
dans lequel l'élément d'actionnement (11, 21, 31, 41) comprend :
un axe d'actionnement cylindrique (12j, 22j, 32j, 42j), et
un corps de base (12d, 22d, 32d, 42d, C51d, C61d), qui s'étend le long d'un plan par lequel passe le centre axial de l'axe d'actionnement (12j, 22j, 32j, 42j),
dans lequel le corps de base (12d, 22d, 32d, 42d, C51d, C61d) tourne sur l'axe basculant (12e, 22e, 32e, 42e) en tant que centre axial,
dans lequel les éléments magnétiques côté mobile (MM, CMM) sont disposés sur le corps de base (12d, 22d, 32d, 42d, C51d, C61d) en travers de l'axe basculant (12e, 22e, 32e, 42e),
dans lequel les parties d'arrêt (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) sont disposées en travers de l'axe basculant (12e, 22e, 32e, 42e),
dans lequel chacun des éléments magnétiques côté opposé (TM) comprend une partie d'appui (TTp, TTp₁, TTp₂, TTp₃, TTp₄, TTp₅, TTp₆) qui entre en contact avec les parties d'arrêt (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) quand l'élément d'actionnement (11, 21, 31, 41) est incliné,
et dans lequel les distances entre les parties d'arrêt (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) et les parties d'appui (TTp, TTp₁, TTp₂, TTp₃, TTp₄, TTp₅, TTp₆) ne sont pas les mêmes au niveau de la position de référence.

7. Dispositif d'actionnement (101, 102, 103, 104, C111, C121, C131, C141, C151, C161, C172, C182) selon la revendication 6,
dans lequel le corps de base (12d, 22d, 32d, 42d, C51d, C61d) est fait d'une substance magnétique molle,
dans lequel les éléments magnétiques côté mobile (MM, CMM) et les éléments magnétiques côté opposé (TM) sont placés de manière à serrer le corps de base (12d, 22d, 32d, 42d, C51d, C61d),
et dans lequel les éléments magnétiques côté mobile (MM, CMM), quand le corps de base (12d, 22d, 32d, 42d, C51d, C61d) est incliné dans une direction, sont utilisés comme éléments magnétiques côté opposé (TM) quand le corps de base (12d, 22d, 32d, 42d, C51d, C61d) est incliné dans l'autre direction, et les éléments magnétiques côté opposé (TM), quand le corps de base (12d, 22d, 32d, 42d, C51d, C61d) est incliné dans une direction, sont utilisés comme éléments magnétiques côté mobile (MM, CMM) quand le corps de base (12d, 22d, 32d, 42d, C51d, C61d) est incliné dans l'autre direction.

8. Dispositif d'actionnement (101, 102, 103, 104, C111, C121, C131, C141, C151, C161, C172, C182) selon la revendication 7,
dans lequel les éléments magnétiques côté opposé (TM) et le corps de base (12d, 22d, 32d, 42d, C51d, C61d) sont placés en des positions où l'attraction agissant entre eux n'est pas perdue quand l'élément d'actionnement (11, 21, 31, 41) est incliné et que les éléments magnétiques côté opposé (TM) et le corps de base (12d, 22d, 32d, 42d, C51d, C61d) sont séparés.

9. Dispositif d'actionnement (101, 102, 103, 104, C111, C121, C131, C141, C151, C161, C172, C182) selon l'une quelconque des revendications 1 à 8,
dans lequel au moins l'un des éléments magnétiques côté mobile (MM, CMM) et éléments magnétiques côté opposé (TM) sont des aimants permanents (EM4),
et dans lequel les aimants permanents (EM4) ont chacun une culasse (YM4) qui couvre des parties de ceux-ci autres qu'une face opposée.

10. Dispositif d'actionnement (101, 102, 103, 104, C111, C121, C131, C141, C151, C161, C172, C182) selon la revendication 6,
dans lequel le corps de base (12d, 22d, 32d, 42d, C51d, C61d) est fait d'une substance non magnétique,
dans lequel les éléments magnétiques côté mobile (MM, CMM) et les éléments magnétiques côté opposé (TM) sont des aimants permanents (EM4),
dans lequel les éléments magnétiques côté mobile (MM, CMM) et les éléments magnétiques côté opposé (TM) sont placés en une position où ils s'attirent entre eux dans un état non actionné et où ils serrent le corps de base (12d, 22d, 32d, 42d, C51d, C61d) entre eux,
et dans lequel les éléments magnétiques côté mobile (MM, CMM), quand le corps de base (12d, 22d, 32d, 42d, C51d, C61d) est incliné dans une direction, sont utilisés comme éléments magnétiques côté opposé (TM) quand le corps de base (12d, 22d, 32d, 42d, C51d, C61d) est incliné dans l'autre direction, et les éléments magnétiques côté opposé (TM), quand le corps de base (12d, 22d, 32d, 42d, C51d, C61d) est incliné dans une direction, sont utilisés comme éléments magnétiques côté mobile (MM, CMM) quand le corps de base (12d, 22d, 32d, 42d, C51d, C61d) est incliné dans l'autre direction.

11. Dispositif d'actionnement (101, 102, 103, 104, C111, C121, C131, C141, C151, C161, C172, C182) selon la revendication 10,
dans lequel les éléments magnétiques côté mobile (MM, CMM) et les éléments magnétiques côté opposé (TM) sont placés en des positions où l'attraction agissant entre eux n'est pas perdue quand on incline l'élément d'actionnement (11, 21, 31, 41) et que les éléments magnétiques côté mobile (MM, CMM) et les éléments magnétiques côté opposé (TM) sont séparés.

12. Dispositif d'actionnement (101, 102, 103, 104, C111, C121, C131, C141, C151, C161, C172, C182) selon l'une quelconque des revendications 10 et 11,
dans lequel les aimants permanents (EM4) ont chacun une culasse (YM4) qui couvre des parties de ceux-ci autres qu'une face opposée.

13. Dispositif d'actionnement (101, 102, 103, 104, C111, C121, C131, C141, C151, C161, C172, C182) selon la revendication 1,
dans lequel l'élément de support (11d, 21d, 31d, 41d, C51d, C61d) comprend un axe basculant (12e, 22e, 32e, 42e) qui permet l'action de basculement de l'élément d'actionnement (11, 21, 31, 41),
dans lequel l'élément d'actionnement (11, 21, 31, 41) comprend :
un axe d'actionnement cylindrique (12j, 22j, 32j, 42j), et
un corps de base (12d, 22d, 32d, 42d, C51d, C61 d), qui s'étend le long d'un plan par lequel passe le centre axial de l'axe d'actionnement (12j, 22j, 32j, 42j),
dans lequel le corps de base (12d, 22d, 32d, 42d, C51d, C61d) tourne sur l'axe basculant (12e, 22e, 32e, 42e) en tant que centre axial,
dans lequel le corps de base (12d, 22d, 32d, 42d, C51d, C61d) comprend une première partie de pression (41p) et une deuxième partie de pression (41q) qui prennent appui sur les éléments magnétiques côté mobile (MM, CMM),
dans lequel les éléments magnétiques côté mobile (MM, CMM) comprennent un premier élément magnétique côté mobile (MF14) sur lequel la première partie de pression (41p) exerce une pression et un deuxième élément magnétique côté mobile (MF24) sur lequel la deuxième partie de pression (41q) exerce une pression,
dans lequel le premier élément magnétique côté mobile (MF14) et le deuxième élément magnétique côté mobile (MF24) sont disposés en travers de l'axe basculant (12e, 22e, 32e, 42e),
dans lequel les éléments magnétiques côté opposé (TM) comprennent un premier élément magnétique côté opposé (TF14) en face du premier élément magnétique côté mobile (MF14) et un deuxième élément magnétique côté opposé (TF24) en face du deuxième élément magnétique côté mobile (MF24),
dans lequel le premier élément magnétique côté mobile (MF14) et le deuxième élément magnétique côté mobile (MF24) sont des substances magnétiques molles,
dans lequel le premier élément magnétique côté opposé (TF14) et le deuxième élément magnétique côté opposé (TF24) sont des aimants permanents (EM4),
dans lequel, quand l'élément d'actionnement (11, 21, 31, 41) est actionné en l'inclinant dans une direction, la première partie de pression (41p) du côté opération de basculement du corps de base (12d, 22d, 32d, 42d, C51d, C61d) exerce une pression sur le premier élément magnétique côté mobile (MF14), la partie d'arrêt (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) arrête l'action de basculement du premier élément magnétique côté opposé (TF14), et l'attraction entre le premier élément magnétique côté mobile (MF14) et le premier élément magnétique côté opposé (TF14) est relâchée,
et dans lequel, quand on prolonge l'opération de basculement dans la même direction, la deuxième partie de pression (41q) du côté opposé à l'opération de basculement exerce une pression sur le deuxième élément magnétique côté mobile (MF24), la partie d'arrêt (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) arrête l'action de basculement du deuxième élément magnétique côté opposé (TF24), et l'attraction entre le deuxième élément magnétique côté mobile (MF24) et le deuxième élément magnétique côté opposé (TF24) est relâchée.

14. Dispositif d'actionnement (101, 102, 103, 104, C111, C121, C131, C141, C151, C161, C172, C182) selon la revendication 13,
dans lequel les éléments magnétiques côté mobile (MM, CMM) comprennent en outre un deuxième élément magnétique côté mobile (MF24) en face du premier élément magnétique côté mobile (MF14) en travers du premier élément magnétique côté opposé (TF14), et un premier élément magnétique côté mobile (MF14) en face du deuxième élément magnétique côté mobile (MF24) en travers du deuxième élément magnétique côté opposé (TF24),
dans lequel, quand l'élément d'actionnement (11, 21, 31, 41) est actionné en l'inclinant dans l'autre direction, la première partie de pression (41p) du côté opération de basculement du corps de base (12d, 22d, 32d, 42d, C51d, C61d) exerce une pression sur le premier élément magnétique côté mobile (MF14), la partie d'arrêt (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) arrête l'action de basculement du deuxième élément magnétique côté opposé (TF24), et l'attraction entre le premier élément magnétique côté mobile (MF14) et le deuxième élément magnétique côté opposé (TF24) est relâchée,
et dans lequel, quand on prolonge l'opération de basculement dans la même direction, la deuxième partie de pression (41q) du côté opposé à l'opération de basculement exerce une pression sur le deuxième élément magnétique côté mobile (MF24), la partie d'arrêt (16, 16a, 16b, 16c, 16d, 16e, 16f, 26, 26a, 26b, 26c, 26d, 26e, 26f, 26g, 26h, 36, 36a, 36b, 36c, 36d, 46, 46a, 46b, 46c, 46d) arrête l'action de basculement du premier élément magnétique côté opposé (TF14), et l'attraction entre le deuxième élément magnétique côté mobile (MF24) et le premier élément magnétique côté opposé (TF14) est relâchée.

15. Dispositif d'actionnement (101, 102, 103, 104, C111, C121, C131, C141, C151, C161, C172, C182) selon l'une quelconque des revendications 13 et 14,
dans lequel les éléments magnétiques côté mobile (MM, CMM) et les éléments magnétiques côté opposé (TM) sont placés en des positions où l'attraction agissant entre eux n'est pas perdue quand on incline l'élément d'actionnement (11, 21, 31, 41) et que les éléments magnétiques côté mobile (MM, CMM) et les éléments magnétiques côté opposé (TM) sont séparés.

16. Dispositif de commutation pour véhicule (500, 600, 630, 700) comprenant :
le dispositif d'actionnement (101, 102, 103, 104, C111, C121, C131, C141, C151, C161, C172, C182) selon l'une quelconque des revendications 1 à 15 ;
une unité de commande (50c, 60C, 63C, 70C) configurée pour recevoir des signaux du dispositif d'actionnement (101, 102, 103, 104, C111, C121, C131, C141, C151, C161, C172, C182) et pour transmettre ces signaux à un équipement côté véhicule ;
un bouton de commutation (50N, 60N, 63N, 70N) en prise avec l'élément d'actionnement (11, 21, 31, 41) du dispositif d'actionnement (101, 102, 103, 104, C111, C121, C131, C141, C151, C161, C172, C182), devant être saisi par l'opérateur ; et
des moyens de détection de position (5S, 51 S, 52S) qui détectent la pluralité de positions dans lesquelles se situe l'élément d'actionnement (11, 21, 31, 41).
